# EUROPÄISCHE PATENTSCHRIFT

(11) **EP 3 684 649 B1**
(45) Veröffentlichungstag und Bekanntmachung des Hinweises auf die Patenterteilung: **18.05.2022**
(21) Anmeldenummer: 18780033.9
(22) Anmeldetag: 18.09.2018
(51) Int. Cl.: B60R 9/04

(54) **DACHHALTERUNG FÜR EIN AUTOMOBIL**
ROOF SUPPORT FOR A MOTOR VEHICLE
SUPPORT DE TOIT POUR AUTOMOBILE

(30) Priorität: 18.09.2017 DE 102017216472; 16.11.2017 DE 102017220498; 30.01.2018 DE 102018201346; 23.03.2018 DE 102018204527
(43) Veröffentlichungstag der Anmeldung: 29.07.2020
(73) Patentinhaber: SEs Solutions GmbH, 01705 Freital (DE)
(72) Erfinder: ESPIG, Serle Johann, 01187 Dresden (DE)
(74) Vertreter: Rau, Schneck & Hübner Patentanwälte Rechtsanwälte PartGmbB
(86) Internationale Anmeldenummer: PCT/EP2018/075150
(87) Internationale Veröffentlichungsnummer: WO 2019/053280

(56) Entgegenhaltungen:
- EP-A1- 1 535 779
- WO-A1-2017/134047
- DE-A1- 3 429 880
- DE-A1- 19 626 973
- DE-A1-102011 051 891
- FR-A1- 2 669 589

## Beschreibung

Die Erfindung betrifft eine, insbesondere multifunktionale, Dachhalterung für ein Automobil. Dachhalterungen für Kraftfahrzeuge dienen zur Befestigung von Gegenständen.

Der Erfindung liegt die Aufgabe zugrunde, eine Dachhalterung für ein Automobil zu verbessern, insbesondere die Funktionalität einer Dachhalterung zu erhöhen.

Die Aufgabe wird durch die Merkmale des Anspruchs 1 gelöst. Der Kern der Erfindung besteht darin, dass eine Dachhalterung eine Bodenwand aufweist, die multifunktional einsetzbar ist. Die Bodenwand kann mittels einer integrierten Befestigungseinheit unmittelbar lösbar am Automobil befestigt werden. Die Bodenwand ist platzsparend und ästhetisch ansprechend am Automobil, insbesondere am Automobildach integriert angeordnet. Zusätzliche Trägerelemente wie bei einem Dachgepäckträger sind entbehrlich. Es ist denkbar, dass ein Trägerelement in die Bodenwand integriert ist. Eine derartige Bodenwand stellt beispielsweise eine Grundträgerplatte dar, die vorteilhaft am Automobil lösbar befestigbar ist. Die Bodenwand kann Teil einer Bodenwanne sein, die insbesondere angeformte Seitenwände aufweist. Die Dachhalterung ist flexibel einsetzbar. Die Dachhalterung kann jederzeit und unkompliziert wieder abgenommen werden. Die Befestigungseinheit gewährleistet eine zuverlässige Befestigung der Dachhalterung am Automobil. Die Befestigungseinheit ist insbesondere in der Bodenwanne integriert ausgeführt. Es wurden weitere Möglichkeiten erkannt, wie am Automobil ohnehin vorhandene Komponenten wie das Automobildach und/oder am Automobildach angeordnete Formelemente wie eine Dachreling oder ein Antennenformkörper zur unmittelbaren Befestigung der Dachhalterung genutzt werden können. Ein konstruktiver Eingriff am Automobil, insbesondere die Karosserie des Automobils, um beispielsweise die Dachhalterung selbst oder einen dafür erforderlichen Dachgepäckträger zu integrieren, ist entbehrlich. Die erfindungsgemäße Dachhalterung ist mit bestehenden Automobilen kombinierbar. Die erfindungsgemäße Dachhalterung kann unproblematisch an einem bereits existierenden Automobil nachgerüstet werden. Die abnehmbare Dachhalterung kann als Zubehör für ein Automobil angeboten werden. Die Dachhalterung besteht insbesondere aus einem Dachelement, das insbesondere die Bodenwand mit der integrierten Befestigungseinheit aufweist.

Überraschend wurde gefunden, dass die Dachhalterung besonders vorteilhaft an der ohnehin vorhandenen Struktur des Automobils befestigt werden kann. Dazu kann die Dachhalterung im Wesentlichen flächig mit seiner Unterseite auf das Automobildach aufgesetzt werden. Eine Befestigung der Dachhalterung am Automobildach erfolgt insbesondere mittels mehrerer linien- oder streifenförmiger Befestigungselemente wie beispielweise Magnetstreifen. Die Magnetstreifen sind insbesondere an der Unterseite der Dachhalterung so angeordnet, dass sie jeweils mit den Quersäulen des Rahmens des Automobils, insbesondere der A-Säule, der B-Säule und/oder der C-Säule zusammenwirken. Im Bereich der Längsholme des Automobilrahmens können längs, also in Fahrtrichtung, orientierte Befestigungselemente, insbesondere Magnetstreifen, vorgesehen sein. Zusätzlich oder alternativ können in Hohlräumen von Befestigungssicken die Befestigungselemente angeordnet sein. Durch die linienartige Anordnung der Befestigungselemente wird eine rahmenförmige Befestigungsstruktur geschaffen, die eine zuverlässige und insbesondere an der Kontur der Unterseite der Dachhalterung ganz oder teilweise umlaufende Dichtungs- und Befestigungslinie ermöglicht. Es ist auch möglich, die Bodenplatte derart auszuführen, dass sie zumindest bereichsweise beabstandet vom Kraftfahrzeugdach, insbesondere angehoben, angeordnet ist, insbesondere in einem hinteren Bereich des Kraftfahrzeugdachs, der der Heckklappe zugewandt ist. Die Befestigung ist zuverlässig und robust. Eine Umrandungs- und Befestigungslinie kann neben Magnetstreifen auch Dichtungselemente insbesondere Gummidichtungen oder in Kombination Magnetgummidichtungen aufweisen. So dichtet die äußere Befestigungslinie das Fahrzeugdach gegen Fluide und Staubpartikel ab, die sich sonst dort ablagern könnten. Es ist denkbar, dass die Bodenwanne der Dachhalterung zumindest abschnittsweise in Bereichen zwischen den Befestigungslinien von dem Automobildach beabstandet ist, also nicht ganzflächig oder vollflächig aufliegt. Dies ist insbesondere dann der Fall, wenn die Bodenwanne der Dachhalterung mit einer Vorspannung, insbesondere überwölbt am Automobildach angeordnet ist, so dass der Lack des Automobildachs möglichst nicht beeinträchtigt wird. Um den Lack des Fahrzeugdaches nicht oder minimal zu beeinträchtigen können auch/zudem Teile der Umrandungs- und Befestigungslinie am oberer Rand der Windschutzscheibe aufliegen.

In diesem Teilbereich könnten satt Magnetstreifen, Gummilippen vorgesehen sein, die insbesondere mit Unterdruck/Saugnäpfen am oberer Rand der Windschutzscheibe haften oder sich durch Formschluss im oberer Dichtungsspalt der Windschutzscheibe festsetzen.

Alternativ kann die Befestigungseinheit eine großflächige und insbesondere vollflächige Haftung zwischen dem Dachhalterung, insbesondere der Bodenwanne der Dachhalterung und dem Automobildach ermöglichen. Überraschend wurde erkannt, dass bei einer unmittelbaren Anbringung der Dachhalterung am Automobildach die gesamte Dachfläche des Automobils zur Anbringung der Befestigungseinheit nutzbar ist. Gegenüber aus dem Stand der Technik bekannten Querspangen, die beispielsweise an der Reling befestigbar sind und zur punktuellen Verriegelung mit einer Dachhalterung dienen, ist der zur Verfügung stehende Platzbedarf am Automobildach homogen und effizient ausgenutzt. Die großflächige Befestigung ist insbesondere dadurch gegeben, dass der mit dem Fahrzeugdach verbundene Flächenanteil der Bodenwanne der Dachhalterung mindestens 50 % der Fläche des Automobildachs, insbesondere 70 % der Fläche des Automobildachs, insbesondere mindestens 90 % der Fläche des Automobildachs und insbesondere mindestens 95 % der Fläche des Automobildachs abdeckt. Diese großflächige und insbesondere vollflächige Befestigung kann beispielsweise durch streifenartige Koppelelemente, insbesondere Magnetstreifen, realisiert sein, die entlang der äußeren Kontur der Bodenwanne angeordnet sind und den entsprechenden Flächenbereich des Automobildachs abdecken.

Alternativ ist es möglich, dass die Bodenwand gezielt kleinflächig ausgeführt ist und im Wesentlichen aus der integrierten Befestigungseinheit besteht. Ein flächiger Überlappungsbereich der Bodenwand am Automobildach beträgt in diesem Fall beispielsweise höchstens 50 %, insbesondere höchstens 30 %, insbesondere höchstens 20 % und insbesondere höchstens 10 %. Diese Dachhalterung ist besonders unauffällig ausgeführt.

Die Bodenwanne ist robust ausgeführt und weist eine hohe Struktursteifigkeit auf. Außenliegende Begrenzungswände bewirken eine Aussteifung der Bodenwanne. Ein Durchbiegen der Bodenwanne ist dadurch im Wesentlichen verhindert. Die Befestigung der Bodenwanne am Automobildach ist verbessert. Die Bodenwanne ist insbesondere aus einem Leichtbauwerkstoff hergestellt, insbesondere aus einer Aluminiumlegierung oder aus Kunststoff, wie beispielsweise Acrylnitril-Butadien-Styrol (ABS), insbesondere mit einer gegen UV-Licht beständigen Polymethylmethacrylat (PMMA)-Beschichtung, und/oder Polylactide (PLA). Die Bodenwanne kann auch Verbundwerkstoffe aufweisen, insbesondere faserverstärkte Kunststoffe und/oder faserverstärkte Verbundstoffe. Als Verstärkungsfasern dienen beispielsweise Glasfasern oder Kohlefasern. Derart verstärkte Werkstoffe werden als glasfaserverstärkte Kunststoffe (GFK) bzw. kohlefaserverstärke Kunststoffe (CFK) bezeichnet. Die Verstärkungsfasern sind typischerweise in einer Kunststoffmatrix eingebettet, wobei die Kunststoffmatrix insbesondere Epoxidharz aufweist. Die Bodenwanne kann auch flexible Materialien aufweisen, wie beispielsweise Elastomere, insbesondere Gummi und/oder Chloropren-Kautschuk. Es ist insbesondere denkbar, die Bodenwanne im Wesentlichen einteilig aus einem Elastomer herzustellen und vorzugsweise integrierte feste Strukturen, insbesondere zur Aussteifung der Bodenwanne, vorzusehen. Eine feste Struktur kann beispielsweise ein im Elastomer eingebetteter Rahmen, eine eingebettete Platte oder mehrere lineare und/oder nichtlineare Stabelemente sein. Diese feste, aussteifende Struktur ist insbesondere aus einem steifen Material wie beispielsweise Metall, insbesondere Aluminium und/oder Stahl, oder aus einem festen Kunststoff, insbesondere faserverstärktem Kunststoff hergestellt. Die Bodenwanne kann insbesondere eine beliebige Kombination der genannten Materialien aufweisen, auch in einer sog. Sandwichstruktur, beispielsweise in Form von sog. Organoblechen.

Ein Halteelement gemäß Anspruch 2 ermöglicht den sicheren Transport von Gegenständen mittels der Dachhalterung. Ein Gegenstand kann beispielsweise ein Snowboard, ein Surfbrett oder ein Paar Skier sein. Der Gegenstand ist unmittelbar an der Bodenwanne gehalten. Die Bodenwanne, die sich im Wesentlichen über die gesamte Dachfläche des Automobils erstreckt, ist groß genug, um große Gegenstände wie ein Surfbrett und ein Snowboard aufzunehmen. Die Gegenstände sind sicher an der Bodenwanne gehalten, so dass sich der Gegenstand auch bei einem unvorhergesehenen Fahrmanöver mit dem Automobil, insbesondere einer Vollbremsung und/oder einem Aufprall infolge eines Unfalls, nicht unbeabsichtigt von der Bodenwanne löst. Als Halteelement dient beispielsweise eine Klemmschelle, deren Schellenkontur an die Kontur des aufzunehmenden Gegenstands angepasst ist.

Ein verbindbares Deckelelement gemäß Anspruch 3 ermöglicht ein Verschließen der Dachhalterung. Durch das Deckelelement und die Bodenwanne wird eine abgeschlossene Dachhalterung gebildet. In der Dachhalterung angeordnete Gegenstände sind geschützt, insbesondere vor Witterungseinflüssen und Diebstahl. Besonders vorteilhaft ist es, wenn die Dachhalterung, insbesondere das Deckelelement, faltbar ausgeführt sind. Insbesondere ist das Deckelelement Teil einer Deckeleinheit, die auch Seitenwände und/oder eine Rückwand aufweisen kann. Das Deckelelement wird auch als Deckelwand bezeichnet. Bezüglich der konkreten Ausgestaltung eines faltbaren Dachbehälters, insbesondere des Deckelelements und dessen Anlenkung an der Bodenwanne, wird auf die WO 2017/134 047 A1 verwiesen.

Mit der Bodenwanne ist eine Deckeleinheit verbindbar. Die Deckeleinheit kann auffaltbar sein. In einem zusammengefalteten Zustand der Deckeleinheit ist der Dachbehälter flach und insbesondere flächenhaft ausgeführt. Flächenhaft bedeutet, dass der Dachbehälter eine Höhe aufweist, die deutlich kleiner ist als die Länge und die Breite des Dachbehälters. Die Höhe ist insbesondere um eine Größenordnung kleiner als die Länge und die Breite des Dachbehälters. Die Höhe beträgt insbesondere weniger als 10 cm, insbesondere weniger als 8 cm und insbesondere weniger als 5 cm. Im zusammengefalteten Zustand der Deckeleinheit ist die Höhe des Dachbehälters im Wesentlichen so groß wie die Höhe einer Dachreling des Automobils. Im zusammengefalteten Zustand der Deckeleinheit leistet der Dachbehälter im Wesentlichen keinen zusätzlichen Luftwiderstand am Automobil. Das Automobil kann mit dem Dachbehälter im zusammengefalteten Zustand ökonomisch und ökologisch vorteilhaft betrieben werden. Im aufgefalteten Zustand der Deckeleinheit weist der Dachbehälter einen Innenraum auf, der mit Gegenständen wie Gepäck, insbesondere Taschen, Koffer und/oder Skier, beladen werden kann. Im aufgefalteten Zustand ist der Dachbehälter als Ladebehälter ausgeführt. Im aufgefalteten Zustand ist der Dachbehälter als dreidimensionaler Aufnahmebehälter ausgeführt.

Ein Magnetelement gemäß Anspruch 4 ermöglicht eine zuverlässige und sichere Befestigung der Dachhalterung unmittelbar am Automobil. Das Magnetelement ist in einer bevorzugten Ausführung ein Permanentmagnet. Das Magnetelement kann alternativ auch in Form eines schaltbaren Elektromagneten ausgeführt sein. Dadurch ist es möglich, die magnetische Haltekraft für die Befestigung der Dachhalterung schaltbar auszuführen. Insbesondere ist es möglich, für die Montage und Demontage die magnetische Haltekraft durch Deaktivierung des Elektromagneten zu deaktivieren. Die Montage und Demontage der Dachhalterung ist vereinfacht. Nach erfolgtem Aufsetzen und Ausrichten der Dachhalterung auf dem Automobil kann die magnetische Haltekraft des Elektromagneten aktiviert werden. Dadurch ist eine zuverlässige Befestigung gewährleistet. Das Magnetelement ist insbesondere in der Befestigungseinheit und/oder im Kraftfahrzeug integriert und insbesondere von außerhalb nicht sichtbar. Das Magnetelement ermöglicht ein zuverlässiges Befestigen am Automobildach und/oder an der Dachreling. Insbesondere sind mehrere Magnetelemente in der Befestigungseinheit integriert. Die Magnetelemente gewährleisten eine flächenhafte magnetische Haltekraft zwischen der Befestigungseinheit und dem Automobildach. Die Magnethaltekraft kann insbesondere auch vom Kraftfahrzeugdach ausgehen und so eingestellt und/oder geregelt sein, dass sie bei höheren Fahrzeuggeschwindigkeiten und/oder im Fall von Erschütterungen, beispielsweise im Fall eines Aufpralls, automatisch erhöht wird. Wenn ein Elektromagnet im Kraftfahrzeugdach integriert ist, ist es vorteilhaft, wenn die Befestigungseinheit, insbesondere die Bodenwanne, aus ferromagnetischem Material hergestellt ist und/oder zumindest anteilig dieses aufweist. Bei einer elektrifizierten Befestigungseinheit könnte eine derartige automatische Regelung auch in der Befestigungseinheit liegen. Eine automatische Regelung spart elektrischen Strom bei erhöhter Sicherheit. Die Befestigung ist verbessert. Die Magnetelemente können insbesondere streifenförmig, beispielsweise entlang des äußeren Umfangs der Bodenwanne, angeordnet sein. Dadurch ist insbesondere eine zuverlässige Befestigung der Dachhalterung an einem Automobildach aus einem ferromagnetischen Material, insbesondere hochfestem Stahl, möglich. Zusätzlich oder alternativ ist es möglich, das mindestens eine Magnetelement beispielsweise streifenförmig auszuführen und mit einer Quererstreckung derart an der Befestigungseinheit anzuordnen, dass sich das Magnetelement entlang einer Querrichtung der Bodenwanne erstreckt. Insbesondere ist das Magnetelement quer und insbesondere senkrecht zu Längswänden der Bodenwanne orientiert. Dadurch ist eine Befestigung der Dachhalterung an einem Automobildach möglich, das aus nicht-magnetischem Material ausgeführt ist wie beispielsweise eine Aluminiumlegierung oder Kunststoff, insbesondere kohlefaserverstärkte Kunststoffe. Das mindestens eine Magnetelement mit Quererstreckung verursacht eine magnetische Haltekraft auf die unterhalb des Automobils angeordneten Karosserieelemente, insbesondere Holme. Derartige Rahmenelemente, die beispielsweise mit der A-, B- und/oder der C-Säule verbunden sind, sind heutzutage typischerweise aus Stahlwerkstoffen hergestellt.

Formelemente gemäß Anspruch 5 ermöglichen eine mechanische Befestigung der Dachhalterung. Die mechanische Befestigung ist unkompliziert. Die Formelemente sind an der Bodenwanne, insbesondere an den Längswänden angeordnet und ermöglichen eine Befestigung an der Dachreling. Die Formelemente sind insbesondere zumindest teilweise elastisch ausgeführt. Die Elastizität der Formelemente kann durch eine Strukturelastizität und/oder durch elastische Materialeigenschaften gegeben sein.

Eine Integration der Formelemente in die Längswände ermöglicht eine robuste und unkomplizierte Ausführung der Formelemente an der Bodenwanne. Insbesondere sind die Formelemente jeweils als Klemmlippen ausgeführt, die gegenüber der Bodenwand mit einem Neigungswinkel nach außen geneigt angeordnet sind. Mit den Klemmlippen kann die Bodenwanne seitlich zwischen den Dachrelings geklemmt werden. Die Klemmlippen, die sich in einer bevorzugten Ausführung entlang der gesamten Länge oder zumindest abschnittsweise an den Längswänden erstrecken, weisen eine Strukturflexibilität auf. Die Klemmlippen ermöglichen ein kraftschlüssiges und/oder formschlüssiges Anliegen an der Dachreling. Zusätzlich oder alternativ können die Formelemente eine die Dachreling zumindest anteilig oder vollständig umgreifende Profilgeometrie aufweisen. Dadurch ist die Haltekraft durch kraftschlüssiges und/oder formschlüssiges Anliegen zusätzlich erhöht.

Ein an der Bodenwand integriertes Formelement ermöglicht die Befestigung der Dachhalterung an einer am Automobildach angeordneten Antenne. Eine derartige Antenne ist beispielsweise haifischflossenartig ausgeführt und insbesondere etwa im hinteren Drittel der Dachfläche sowie hinsichtlich einer seitlichen Orientierung mittig angeordnet. Das Formelement weist eine formschlüssige Geometrie auf, die der Form der Antenne entspricht, so dass insbesondere selbst bei einem abrupten Abbremsen und/oder einem Aufprall des Automobils ein ungewolltes Lösen der Dachhalterung wegen der umgreifenden Profilgeometrie des Formelements, die als Befestigung am Antennenformkörper dient, im Wesentlichen ausgeschlossen ist.

Eine Dachhalterung gemäß Anspruch 6 ermöglicht eine verbesserte Befestigung der Bodenwand am Automobil. Die Kontur der Bodenwandvertiefung ist insbesondere der Kontur der Aussparung für das Schiebedach entsprechend angepasst. Die Ausnehmung im Automobildach ist insbesondere eine Schiebedachausnehmung. Die Bodenwandvertiefung der Bodenwanne ist analog zum Schiebedach abgedichtet. An der Unterseite der Bodenwanne können weitere Dichtungsumrandungen um die Bodenwandvertiefung vorgesehen sein.

Dadurch, dass die Bodenwandvertiefung in einer Öffnung im Kraftfahrzeugdach angeordnet und vom Fahrgastraum aus zugänglich ist, eröffnen sich zusätzliche Funktionen für die Bodenwandvertiefung. Durch die Zugänglichkeit vom Fahrgastraum aus und den durch die Bodenwandvertiefung zusätzlich geschaffen Platz ergeben sich neue Möglichkeiten: Viele der heute üblichen Funktionen und Informationen, die Insassen eines modernen Automobils über den Eingabebildschirm im Fahrzeug aufrufen, können in der Bodenwandvertiefung Ihren Platz finden. Das ermöglicht Neu- und Bestandsfahrzeuge, die weniger modern ausgestattet sind, mit modernen Ausstattungskomponenten nachzurüsten. Hierfür kommen vor allem Funktionen aus den Themenbereichen Entertainment/Multimedia, Navigation, Kommunikation und Klimatisierung in Betracht, sowie Informationen zum Fahrzeug und seiner Außenwelt, die den Insassen interessieren könnten. Die Funktionsintegration der Dachhalterung ist erhöht.

Die Nutzung des zusätzlichen Stauraums, der durch die Bodenwandvertiefung gebildet wird, ermöglicht somit vielfältige, vorteilhafte Integrationsmöglichkeiten und insbesondere Nachrüst-Optionen für das Automobil. Die Dachhalterung, die im Wesentlichen ein Dachelement mit einer Vertiefung ist, ist integral in der Schiebedachöffnung des Automobils gehalten und bietet zusätzlichen Stauraum für Funktionselemente. Derartige Funktionselemente sind insbesondere in der Bodenwandvertiefung der Bodenwand angeordnet. Als Entertainment/Multimedia, Funktionselemente werden Unterhaltungsgeräte verstanden, die zur Audio- und/oder Video-Unterhaltung von Fahrgästen im Automobil dienen, wie beispielsweise Soundsysteme, Bildschirme etc. KI-Funktionselemente sind Komponenten für die künstliche Intelligenz in einem Automobil und umfassen sämtliche Komponenten, die für die Bereitstellung von selbstfahrenden Automobilen und Kommunikationselementen erforderlich sind. Dazu dienen insbesondere Erfassungsgeräte, wie Mikrofone und Kameras, sowie sonstige Eingabegeräte, die zur Aufnahme von Befehlen durch eine Bedienperson dienen. Die Erfassungsgeräte und/oder Eingabegeräte stellen eine Eingabe-Bedienerschnittstelle dar. Die Bedienerschnittstelle ist mit einem Rechner verbunden, der mit einem Server, insbesondere mit einem externen Server, insbesondere über eine Internet-Verbindung, gekoppelt sein kann. Als Server kann insbesondere ein Datenserver dienen, der für die Fahrgäste, insbesondere über eine kabellose Verbindung, insbesondere über mobile Endgeräte, verfügbar ist. Das System umfasst ferner ein Ausgabegerät als Ausgabe-Schnittstelle für die Bedienperson, wie einen Anzeigebildschirm und/oder Lautsprecherboxen, um eine Kommunikation mit der Bedienperson zu ermöglichen. Als Komfort-Funktionselemente werden Geräte verstanden, die den Fahrgästen im Fahrgastinnenraum des Automobils die Reise komfortabler gestalten sollen. Dies sind beispielsweise ein Klimagerät und/oder eine Standheizung. Als Komfort-Funktionselement ist auch ein Kühlschrank oder eine Mikrowelle zu verstehen. Die Dachhalterung ist eine multifunktionale Dachhalterung.

Um eine Schiebedachausnehmung zu erreichen, kann das Schiebedach geöffnet oder die verfahrbare(n) Platte(n) des Schiebedachs deinstalliert wird/werden. Insbesondere wenn die verfahrbare(n) Platte(n) des Schiebedachs so gestaltet wird das sie einfach deinstallierbar ist, kann der Öffnungsmechanismus des ursprünglichen Schiebedachs, bzw. des verbleibenden Teil des Schiebdachs, genutzt werden um Funktionen in der Multifunktionalen Bodenplatte anzutreiben. Insbesondere bei einem elektrischen Schiebedach kann der Antrieb des elektrischen Öffnungsmechanismus dafür genutzt werden einen auf der Bodenplatte montierten Deckel zu öffnen, oder, wenn es sich um einen faltbaren Deckel handelt, das Ein- und Ausfalten zu automatisieren. Das Ein- und Ausfalten einer faltbaren Dachbox könnte dann über die ursprüngliche Steuerung des Schiebedachs im Fahrzeuginnenraum geschehen.

Ein Hakenelement gemäß Anspruch 8 ermöglicht ein unmittelbares Einhaken der Dachhalterung in einem Spalt der Karosserie. Ein derartiger Spalt ist beispielsweise an einer Oberseite der Karosserie zwischen dem Automobildach und der Heckklappe üblich. Der Spalt kann auch durch das Schiebedach selbst gebildet sein. In diese Spalte kann zusätzlich ein Funktionselement eingeführt und daran befestigt werden, um beispielsweise Regen- und/oder Windabweiseelemente zu befestigen. Ein Funktionselement kann auch ein Heck- und/oder Ladekantenschutz im Bereich einer Heckklappe sein. Das Hakenelement ist beispielsweise als nach unten vorspringender Quersteg ausgeführt, der insbesondere an der Bodenwand nach unten vorsteht. Der Quersteg kann auch integral an der Heckwand ausgeführt sein, die an der Bodenwand nach unten übersteht. Der Quersteg ist in einer bevorzugten Ausführung aus einem festen oder hochfesten Material hergestellt und mit einem Elastomer, beispielsweise Gummi, umhüllt.

Ein Klemmelement ermöglicht eine zusätzliche Klemmsicherung für der Dachhalterung. Das Klemmelement ist in einer bevorzugten Ausführung flexibel, insbesondere als Klemmband ausgeführt, das in einen offenbaren Spalt der Karosserie, also einer Fahrzeugöffnung, insbesondere an einer Fahrzeugtür, an einem Schiebedach, und/oder an der Heckklappe, einklemmbar ist. Dazu kann der einzuklemmende Abschnitt ein Ankerelement aufweisen, wobei das Ankerelement eine Dicke aufweist, die größer ist als die Spaltbreite, so dass ein unbeabsichtigtes Herausziehen des Klemmelements aus dem Spalt ausgeschlossen ist. Dieses Ankerelement kann vor allem am Scharnier der Heckklappe befestigt werden, um im Falle eines Frontalcrashs eine zusätzliche Sicherung der Bodenwanne zu gewährleisten. Das Ankerelement kann magnetisch und gummiert sein, damit es fest an der Karosserieteilen haftet ohne den Lack zu beeinträchtigen. Um hinter die Heckklappenscharniere zu greifen kann das Ankerelement ein fester Stab sein, der sich nachträglich in das Klemmband einführen lässt.

Das Klemmband kann von der Beschaffenheit analog zum einem Anschnallgurt ausgestaltet sein. Besonders vorteilhaft wäre es das Klemmband an besonders festen Elementen in der Bodenwanne zu befestigen, wie den Längs- oder Querträgern.

Mindestens ein Rasthebel gemäß Anspruch 9 ermöglicht eine zuverlässige Befestigung des Behälters an der Reling, die bei einigen Fahrzeugmodellen eine Länge aufweist, die kleiner ist als die Länge der Dachfläche. Der Rasthebel ermöglicht ein verrastendes Anliegen an einer Vorderseite und/oder Rückseite der Dachreling. Ein Rasthebelgehäuse ist insbesondere an die Gestaltung der Dachreling angepasst. Durch das Rasthebelgehäuse wird die Gestalt der Reling am Automobil verlängert. Die Dachhalterung ist insbesondere in Fahrrichtung zuverlässig gehalten. Der Rasthebel kann über ein Schloss zur Verriegelung verfügen.

Ein Saugnapfelement gemäß Anspruch 10 ermöglicht eine unkomplizierte Befestigung der Dachhalterung. Die Befestigung der Dachhalterung ist zuverlässig. Die Handhabung des Saugnapfelements zum Befestigen und Lösen der Dachhalterung ist intuitiv und fehlerunanfällig. Eine Druckanzeige, zum Messen des Luftdrucks im Saugnapfelement, ist dabei vorteilhaft um dem Nutzer anzuzeigen ob der Luftdruck ausreichend ist oder sich über die Zeit verringert hat.

Eine Schutzbefestigung gemäß Anspruch 11 verhindert ein unbeabsichtigtes Lösen der Dachhalterung, insbesondere infolge eines Aufpralls des Automobils auf ein Hindernis. Die Schutzbefestigung gewährleistet, dass die Dachhalterung auch bei einem Unfall zuverlässig am Automobil befestigt bleibt. Ein unbeabsichtigtes Lösen kann auch durch unerlaubtes Entwenden gegeben sein. Die Schutzbefestigung bildet einen Diebstahlschutz. Die Schutzbefestigung ist vorzugsweise an der Bodenwanne oder an einem Rahmen der faltbaren Dachhalterung befestigt.

Ein seitlich verlagerbares Verriegelungselement gemäß Anspruch 12 ermöglicht ein zuverlässiges Verriegeln der Dachhalterung. Insbesondere wurde erkannt, dass ein Verriegelungselement in eine seitliche Vertiefung einer Dachreling eingreifen kann, so dass ein Abnehmen der Dachhalterung nur dadurch möglich ist, dass die Verriegelungsposition des Verriegelungselements gelöst wird. Das Verriegelungselement kann beispielsweise ein federgelagerter Bolzen sein, der beim Aufsetzen der Dachhalterung auf das Automobildach in eine dafür vorgesehene Vertiefung oder Ausnehmung einrastet. Das Verriegelungselement kann auch eine betätigbare Verriegelungsschraube sein, die in die Ausnehmung oder Vertiefung eingeschraubt wird. Das Verriegelungselement ist Teil eines Verriegelungsmechanismus.

Ein Koppelelement gemäß Anspruch 13, insbesondere in Form einer Befestigungsschraube, ermöglicht ein unmittelbares Koppeln an einer dafür vorgesehenen, an einem Automobildach integrierten Koppelstelle. Insbesondere sind die Koppelstellen an einer Oberseite des Automobildachs angeordnet. Das mindestens eine Koppelelement ist quer, insbesondere senkrecht, zur Bodenwand, also in Höhenrichtung, verlagerbar.

Eine Koppelstelle kann auch zur Befestigung der Antenne am Automobildach dienen. Zur Befestigung der Antenne dienen mindestens eine oder mehrere Antennenschrauben. Insbesondere wurde erkannt, dass es möglich ist, die Antennenschraube zu lösen, die Antenne vom Dach des Automobils abzunehmen und die am Dach des Automobils integrierte bzw. verankerte Gewindeöffhung zum Einschrauben der Befestigungsschraube zu nutzen. Die Befestigungsschraube kann in die durch das Lösen der Antenne frei gewordene Gewindebohrung zum Befestigen der Dachhalterung eingeschraubt werden. Entsprechend ist an der Dachhalterung, insbesondere an der Deckeleinheit und insbesondere an der Deckelwand, eine korrespondierende Gewindebohrung vorgesehen, um die Antenne an der Dachhalterung zu befestigen. Die an der Dachhalterung befestigte Antenne ist mit einem Signalkabel mit der Koppelstelle verbunden, wobei das Signalkabel insbesondere entlang des Deckelelements, über ein Rahmenscharnier und der Bodenwanne hin zur Koppelstelle und der Antennenschraube geführt sein kann. Grundsätzlich ist es auch denkbar, eine kabellose Übertragung des Antennensignals von der Antenne an der Dachhalterung zu der Koppelstelle vorzusehen.

Eine Schutzschicht gemäß Anspruch 14 gewährleistet, dass ein Aufsetzen und/oder Abnehmen der Dachhalterung keine Beschädigungen am Automobil verursacht. Insbesondere ist ausgeschlossen, dass Lackschäden am Automobil verursacht werden. Die Schutzschicht kann insbesondere vollflächig an der außenliegenden Unterseite der Bodenwanne ausgeführt sein. Für die Schutzfunktion der Schutzschicht kann es ausreichend sein, wenn die Schutzschicht zumindest teilweise an der Unterseite angeordnet ist. Die Schutzschicht ist insbesondere eine flexible Lage. Die flexible Lage ist insbesondere aus einem elastischen Material ausgeführt, das insbesondere eine Dämpfungsfunktion aufweist. Das Material ist insbesondere ein Elastomer, insbesondere Gummi.

Eine Vorrichtung gemäß Anspruch 15 ermöglicht insbesondere eine verbesserte Reinigung von Feinpartikeln aus der Umgebungsluft. Insbesondere bei Automobilen, die mit Diesel-Motoren angetrieben werden, werden Schadstoffe, insbesondere Feinpartikel, an die Umgebungsluft abgegeben. Es wurde gefunden, dass die Dachhalterung zusätzlichen Bauraum bietet, der auch für Funktionskomponenten des Automobils, insbesondere den Feinpartikelfilter nutzbar ist. Dadurch ist es möglich, zusätzlich und/oder größere Feinpartikelfilter mit dem Automobil mitzuführen. Die Bauraumbeschränkung in einem Automobil gemäß dem Stand der Technik ist damit überwunden. Die Vorrichtung mit zusätzlichen und/oder größeren Feinpartikelfiltern gewährleistet, dass ein damit ausgerüstetes Automobil mehr Feinpartikel aus der Umgebungsluft filtern kann, als es selbst verursacht. Ein mit der Vorrichtung ausgerüstetes Automobil ist ein Reinigungsautomobil zum Reinigen der Umgebungsluft. Wesentlich ist dabei die Erkenntnis, dass die Dachhalterung nicht nur zum Transport von Gegenständen genutzt werden kann, sondern insbesondere auch zur Integration und insbesondere zur nachträglichen Integration von Funktionselementen vorteilhaft genutzt werden kann. Ein Funktionselement im Sinne der Patentanmeldung ist ein Element, das eine Zusatzfunktion am Fahrzeug erfüllt. Insbesondere ist es damit möglich, Komfortfunktionen für das Fahrzeug und/oder den Fahrgast bequem und unkompliziert nachzurüsten. Insbesondere Kraftfahrzeuge, die mit einem vergleichsweise niedrigen Komfortstatus ausgerüstet sind, können durch zusätzliche Funktionselemente entsprechend nachgerüstet und aufgewertet werden.

Weitere vorteilhafte Ausgestaltungen, zusätzliche Merkmale und Einzelheiten der Erfindung ergeben sich aus der nachfolgenden Beschreibung von Ausführungsbeispielen anhand der Zeichnung. Es zeigen:
- Fig. 1: eine perspektivische Explosionsdarstellung eines Dachbehälters mit einer erfindungsgemäßen Dachhalterung,
- Fig. 2: eine Draufsicht auf eine Bodenwanne des Dachbehälters gemäß Fig. 1,
- Fig. 3: eine perspektivische, teilgeschnittene vergrößerte Detaildarstellung von hinten des Dachbehälters gemäß Fig. 2,
- Fig. 4: einen Fig. 3 entsprechenden Längsschnitt,
- Fig. 5: eine perspektivische Schemadarstellung eines Automobildaches mit einer Dachreling,
- Fig. 6: eine Schnittdarstellung gemäß Schnittlinie IV-IV in Fig. 5,
- Fig. 7: eine zu Fig. 6 korrespondierende Schnittdarstellung einer Befestigungseinheit mit einem seitlichen Formelement,
- Fig. 8: eine perspektivische Ansicht von oben auf ein Automobildach mit einer Bodenwanne gemäß einer weiteren Ausführungsform,
- Fig. 9: eine vergrößerte Schnittdarstellung einer seitlichen Befestigung der Bodenwanne gemäß Fig. 8,
- Fig. 10: eine schematische Schnitt-Darstellung einer Befestigung mittels eines Hakenelements gemäß Schnittlinie X-X in Fig. 8,
- Fig. 11: eine perspektivische Ausschnittansicht eines Automobils mit dem Dachbehälter mit aufgefalteter Deckeleinheit und Klemmelementen,
- Fig. 12: eine perspektivische Darstellung eines Automobils mit einem Dachbehälter gemäß einer weiteren Ausführungsform,
- Fig. 13: eine vergrößerte Detaildarstellung der Befestigungseinheit gemäß Fig. 12 in einem aktivierten bzw. geöffneten Zustand,
- Fig. 14: eine perspektivische Darstellung eines Automobildaches mit Koppelstellen,
- Fig. 15: eine perspektivische Ansicht einer Bodenwanne für einen Dachbehälter gemäß einer weiteren Ausführungsform,
- Fig. 16: eine Fig. 15 entsprechende Draufsicht,
- Fig. 17: eine vergrößerte, perspektivische Detaildarstellung einer Schutzbefestigung,
- Fig. 18: eine schematische Darstellung des Dachbehälters gemäß Fig. 15 in einer verriegelten Anordnung der Schutzbefestigung an der Dachreling,
- Fig. 19: eine perspektivische vergrößerte Darstellung einer weiteren Schutzbefestigung,
- Fig. 20: eine schematische Darstellung einer funkgesteuerten Betätigung eines Schlosses eines Dachbehälters,
- Fig. 21: eine vergrößerte Detaildarstellung einer am Dach des Automobils befestigten Antenne,
- Fig. 22: eine Fig. 21 entsprechende Darstellung in einer gelösten Anordnung der Antenne vom Automobildach,
- Fig. 23: eine Querschnittsdarstellung mit einem an der Koppelstelle gemäß Fig. 22 befestigten Dachbehälter,
- Fig. 24: eine Fig. 23 entsprechende Darstellung mit der am Dachbehälter befestigten Antenne gemäß Fig. 22,
- Fig. 25: ein Längsschnitt der am Dachbehälter befestigten Antenne gemäß Fig. 24,
- Fig. 26: eine Antenne eines Automobils gemäß einer weiteren Ausführungsform,
- Fig. 27: eine Darstellung der von einer Halterung gelösten Antenne gemäß Fig. 26,
- Fig. 28: eine Fig. 23 entsprechende Darstellung zur Befestigung des Dachbehälters in einer dafür vorgesehenen Koppelstelle gemäß Fig. 27,
- Fig. 29: eine perspektivische Ansicht der Bodenwanne des Dachbehälters gemäß Fig. 1 mit einem daran befestigten Gegenstand,
- Fig. 30: eine vergrößerte, perspektivische Querschnittsdarstellung durch einen Dachbehälter im zusammengefalteten Zustand,
- Fig. 31: eine Fig. 2 entsprechende perspektivische Darstellung einer Bodenwanne gemäß einer weiteren Ausführungsform,
- Fig. 32: eine vergrößerte perspektivische Darstellung eines Profilelements mit einer Saugnapfbefestigung,
- Fig. 33: einen Längsschnitt gemäß Schnittlinie XXXIII - XXXIII in Fig. 32,
- Fig. 34: eine schematische Schnittansicht eines Dachbehälters gemäß einer weiteren Ausführungsform mit einem Ladungssensor,
- Fig. 35: eine perspektivische Darstellung des aufgefalteten Dachbehälters in geöffneter Anordnung gemäß einer weiteren Ausführungsform,
- Fig. 36: eine perspektivische Darstellung des Rahmens des Dachbehälters gemäß Fig. 35,
- Fig. 37: eine vergrößerte Detaildarstellung des Details XXXVII in Fig. 36,
- Fig. 38: eine vergrößerte perspektivische Detaildarstellung eines Dachbehälters, bei dem die Befestigungseinheit mindestens einen Rasthebel aufweist,
- Fig. 39: eine Fig. 38 entsprechende Anordnung mit dem Rasthebel in geschwenkt verrastetem Zustand,
- Fig. 40: eine schematische Darstellung einer Dachhalterung mit einem daran befestigten Feinpartikelfilter als ein Beispiel für ein Funktionselement,
- Fig. 41: eine vergrößerte halb geschnittene Seitenansicht eines Kraftfahrzeugdachs mit einer eine Bodenwandvertiefung aufweisende Bodenwanne,
- Fig. 42: eine Fig. 41 entsprechende Darstellung mit einem ein Panoramadach aufweisenden Fahrzeugdach,

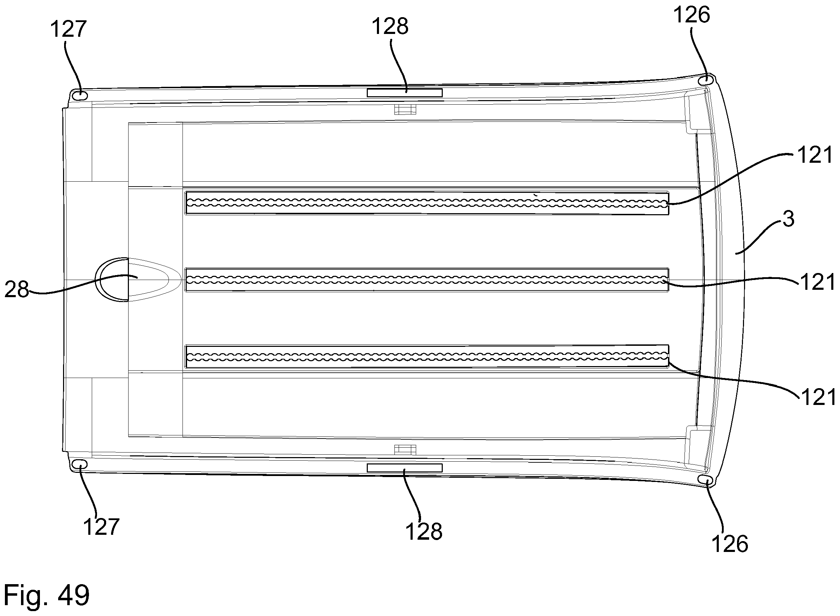

- Fig. 43 bis 84: weitere Darstellungen von Dachhalterungen,
- Fig. 85: eine Seitenansicht eines Dachbehälters in geschlossener Anordnung.

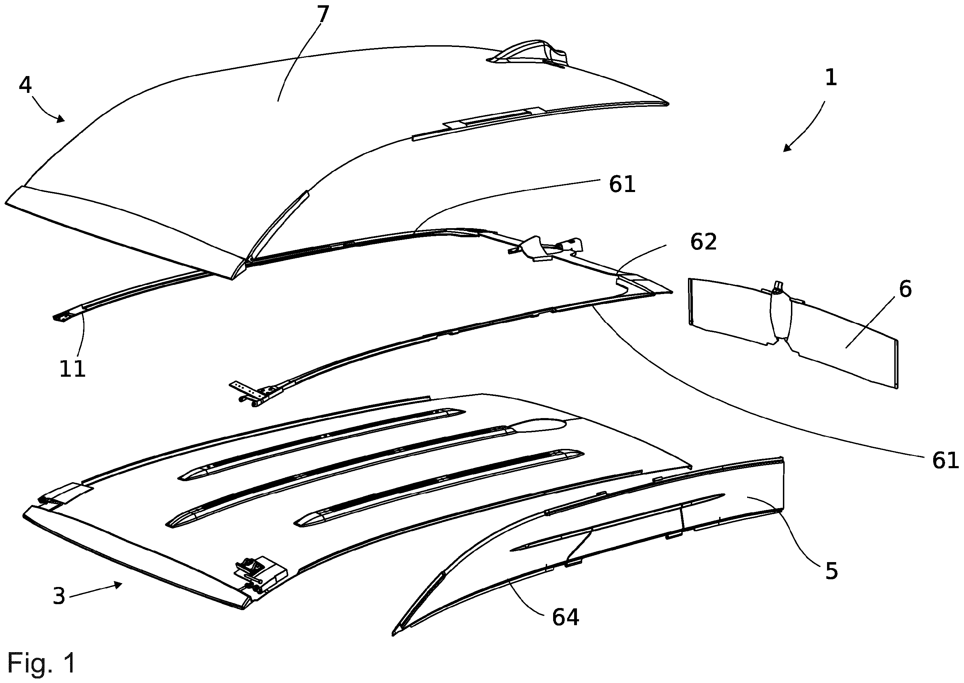

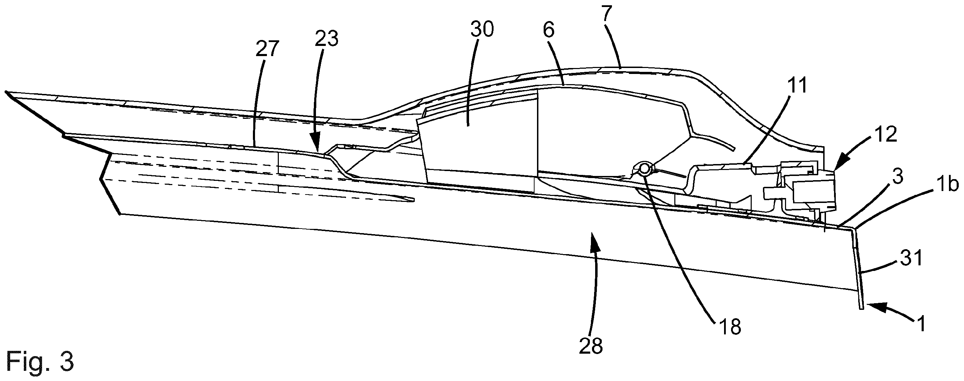

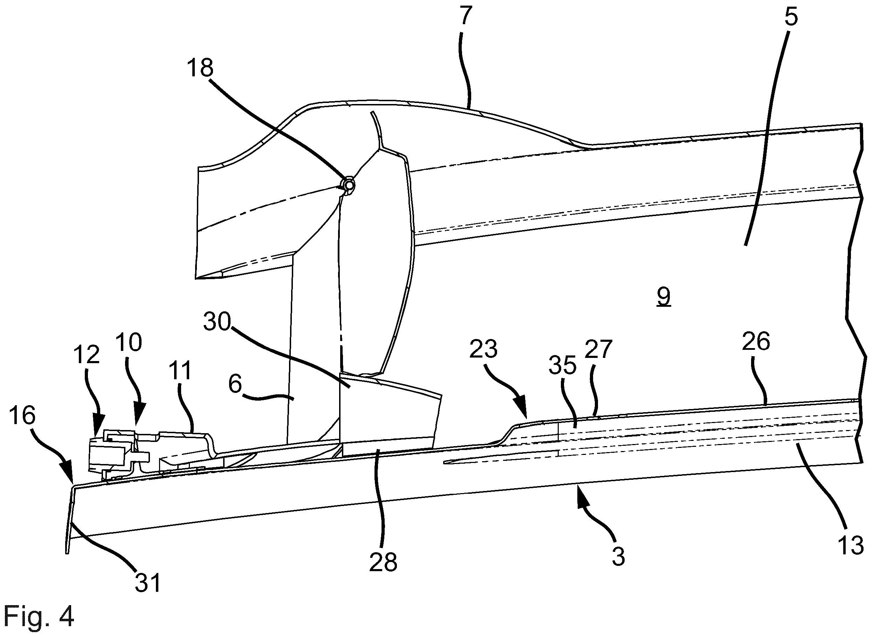

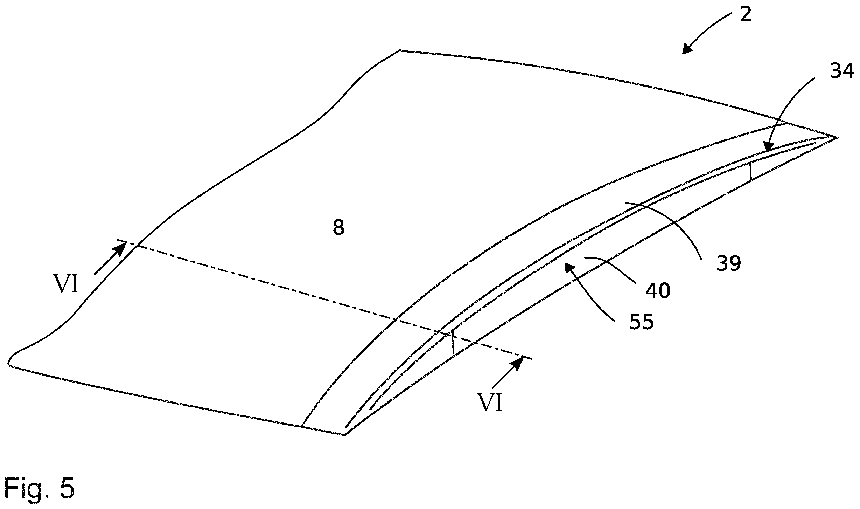

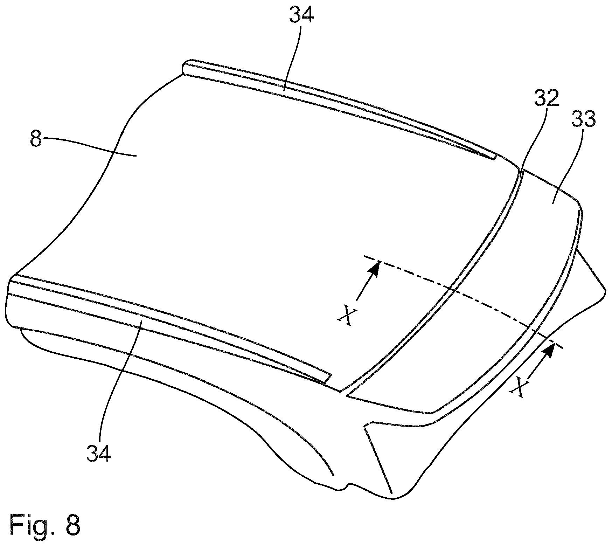

Ein in Fig. 1 bis 11 dargestellter Dachbehälter 1 für ein Automobil 2 umfasst eine Bodenwanne 3 und eine daran befestigte Deckeleinheit 4. Die Deckeleinheit 4 ist über einen Rahmen 11 an der Bodenwanne 3 befestigt. Der Rahmen 11 ist im Wesentlichen U-förmig ausgeführt und weist zwei seitliche Längselemente 61 auf, die im Wesentlichen parallel zueinander orientiert und an einer Rückseite mittels eines Heckelements 62 einstückig miteinander verbunden sind.

Der Dachbehälter 1 kann auch ohne Deckeleinheit 4 ausgeführt sein. Die Bodenwanne 3 bildet dann mit einer integrierten Befestigungseinheit eine Dachhalterung.

Die Deckeleinheit 4 umfasst faltbare Seitenwände 5, wobei aus darstellerischen Gründen in Fig. 1 nur eine Seitenwand 5 gezeigt ist. Die Seitenwände 5 sind jeweils um ihre untere Kante 64 schwenkbar an der Bodenwanne 3 angelenkt. Die Deckeleinheit 4 weist ferner eine Rückwand 6 und eine Deckelwand 7 auf. Der Rahmen 11 verbindet die Seitenwände 5, die Rückwand 6 und die Deckelwand 7. Die so verbundenen Elemente 5, 6, 7 und 11 bilden die Deckeleinheit 4. Die Rückwand 6 ist schwenkbar an der Bodenwanne 3 angelenkt. Die Deckelwand 7 ist schwenkbar mit den Seitenwänden 5 und der Rückwand 6 verbunden.

Die auffaltbare Deckeleinheit 4 ist zwischen einer zusammengefalteten Anordnung und einer aufgefalteten Anordnung faltbar. In der zusammengefalteten Anordnung ist der Dachbehälter 1 flach ausgeführt. Der Dachbehälter 1 kann platzsparend gelagert und mit geringem zusätzlichen Luftwiderstand auf einem Dach 8 des Automobils 2 angeordnet sein. Im aufgefalteten Zustand umschließen die Seitenwände 5, die Rückwand 6, die Deckelwand 7 und die Bodenwanne 3 einen Innenraum 9. In dem Innenraum 9 können Gegenstände transportiert werden.

Die Größe der Bodenwanne 3, also die Grundfläche des Dachbehälters 1, ist im Wesentlichen durch die Größe des Dachs 8 des Automobils 2 vorgegeben. Das Volumen des Innenraums 9 des Dachbehälters 1 kann zwischen 100 l und 500 l bei einem Automobil, insbesondere einem Personenkraftwagen, betragen. Bei einem Nutzfahrzeug, beispielsweise einem Kleintransporter, der gegenüber einem Personenkraftwagen eine größere Dachfläche aufweist, kann das Volumen des Innenraums 9 des Dachbehälters 1 deutlich größer sein und beispielsweise 700 l und insbesondere 1000 l oder mehr betragen.

Der Dachbehälter 1 weist ferner eine Schlosseinheit 10 auf. Im aufgefalteten Zustand der Deckeleinheit 4 ist die Schlosseinheit 10 außerhalb des Innenraums 9 angeordnet. Die Schlosseinheit 10 ist in einem Rahmen 11 integriert, in dem ein Schloss 12 integriert ist. Das Schloss 12 ermöglicht es, den Dachbehälter 1 zu verschließen und insbesondere eine unbeabsichtigte und/oder unberechtigte Nutzung oder Zugänglichkeit in den Innenraum 9 des Dachbehälters 1 zu verhindern.

Details eines faltbaren Dachbehälters mit einer auffaltbaren Deckeleinheit sowie Details, betreffend das Auffalten und Zusammenfalten eines derartigen Dachbehälters, sind in der DE 10 2011 051 891 A1 und in der US 9,193,306 B2 beschrieben, worauf hiermit ausdrücklich verwiesen wird. Ein wesentlicher Unterschied gegenüber diesen vorbekannten Dachbehältern besteht darin, dass die Deckelwand 7 des Dachbehälters 1 einstückig ausgeführt ist. Die Deckelwand 7 wird auch als Deckelelement bezeichnet.

Nachfolgend wird insbesondere die Bodenwanne 3 näher erläutert. Die Bodenwanne 3 kann im Wesentlichen wannenartig ausgeführt sein. Die Bodenwanne 3 ist einstückig ausgeführt.

Die Bodenwanne 3 weist eine Bodenwand 13 auf. Die Form der Bodenwand 13 ist an die Kontur des Daches 8 des Automobils 2 angepasst. Die Bodenwand 13 kann eine Krümmung aufweisen. Im Wesentlichen ist die Bodenwand 13 flächig ausgeführt. Die Bodenwand 13 ist im Wesentlichen rechteckförmig ausgeführt und weist zwei seitliche Längskanten 14, eine Frontkante 15 sowie eine Heckkante 16 auf. Die Frontkante 15 ist der Windschutzscheibe 63 des Automobils 2 zugewandt und ist entsprechend der Kontur der Windschutzscheibe 63 und/oder der Kontur des Daches 8 des Automobils 2 gekrümmt. Die Längskanten 14 sind gegenüberliegend zueinander an der Bodenwand angeordnet. Die Längskanten 14 sind einer Dachreling 34 zugewandt angeordnet. Die Heckkante 16 ist dem Fahrzeugheck, insbesondere einer Heckklappe 33 zugewandt angeordnet. Die Bodenwanne 3 und insbesondere die Bodenwand 13 weisen eine Längsachse 17 auf. Bezüglich der Längsachse 17 ist die Bodenwanne 3 symmetrisch ausgeführt. Die Seitenwände 5 der Deckeleinheit 4 sind jeweils im Bereich der Längskanten 14 schwenkbar an der Bodenwanne 3 angelenkt. Die Rückwand 6 der Deckeleinheit 4 ist um eine Schwenkachse 18 schwenkbar an der Deckelwand 7 angelenkt. Die Deckelwand 7 ist schwenkbar im Bereich der Frontkante 15 an der Bodenwanne 3 angelenkt. Zur schwenkbaren Anlenkung der Deckelwand 7 an der Bodenwanne 3 sind Schwenkbolzen 22 vorgesehen, die im vorderen Bereich der Bodenwand 13 benachbart zu der Frontkante 15 angeordnet sind.

Im Bereich der Heckkante 16 weist die Bodenwand 13 ein einteilig angeformtes Hakenelement 31 auf. Das Hakenelement 31 ist als ein entlang der Heckkante 16 nach unten, also dem Autodach 8 zugewandt, orientierter Steg ausgeführt. Das Hakenelement 31 ist ein Bestandteil der Befestigungseinheit und dient zum Einhaken in einen Spalt 32 des Automobils 2. Der Spalt 32 ist insbesondere zwischen dem Dach 8 und einer Heckklappe 33 des Fahrzeugs 2 angeordnet. Das Hakenelement 31 verhindert ein unbeabsichtigtes Nachvornerutschen des Dachbehälters 1 bei einer Vollbremsung und/oder einem Aufprall des Automobils 2 auf ein Hindernis. Das Hakenelement 31 ermöglicht einen unmittelbaren Formschluss des Dachbehälters an dem Automobil 2. Insbesondere wurde erkannt, dass der am Automobil 2 ohnehin vorhandene Spalt 32 zum formschließenden Befestigen des Dachbehälters 1 genutzt werden kann.

Wenn an der Heckklappe 33 ein Luftleitelement in Form eines Heckspoilers angeordnet ist, kann an der Bodenwanne 3 eine Abdeckung für den Heckspoiler befestigt werden. Eine Befestigung der Abdeckung an der Bodenwanne 3 ist beispielweise durch eine Klettverschlussverbindung möglich. Es ist auch eine Druckknopfbefestigung denkbar oder eine Reißverschlussbefestigung. Die Abdeckung ist eine Schutzabdeckung.

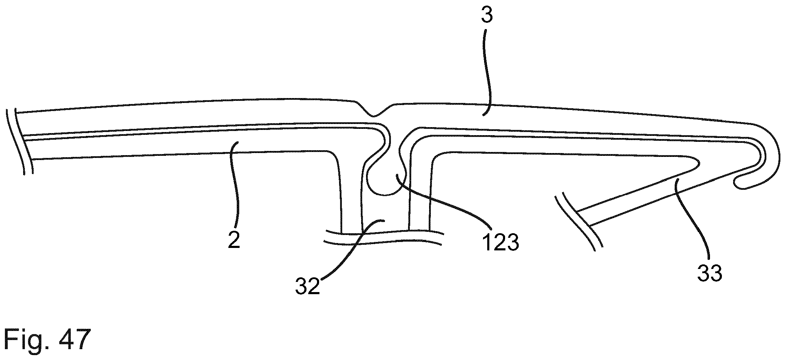

In einer alternativen Ausgestaltung kann an der Bodenwanne 3 auch eine Rastnase 123 einteilig angeformt sein. Insbesondere ist die Rastnase 123 eine Rastleiste, die sich quer zur Fahrtrichtung des Fahrzeugs, also entlang des Spalts 32 erstreckt. Diese Ausgestaltung der Bodenwanne 3 mit der Rastnase bzw. der Rastleiste 123 ist in Fig. 47 dargestellt. Wesentlich ist, dass die Rastfunktion der Rastnase bzw. Rastleiste 123 dadurch gebildet wird, dass die Rastnase 123 eine Verdickung aufweist, die größer ist als die minimale Spaltbreite des Spaltes 32. Die Rastnase bzw. Rastleiste 123 wird in den Spalt 32 gedrückt und ist dann dort zuverlässig gehalten.

Einteilig an der Bodenwand 13 sind eine Frontwand 19, eine Heckwand 20 sowie zwei Längswände 21 angeordnet. Die Wände 19, 20, 21 sind insbesondere miteinander verbunden und bilden eine umlaufende Seitenbegrenzungswand um die Bodenwand 13.

In der Bodenwand 13 sind gemäß dem gezeigten Ausführungsbeispiel drei Profilelemente 23 eingeformt. Die Profilelemente 23 sind jeweils parallel zur Längsachse 17 ausgerichtet. Die Profilelemente 23 sind Längs-Profilelemente. Die Profilelemente 23 weisen eine Längserstreckung auf, die parallel zur Längsachse 17 orientiert ist. In einer Schnittebene senkrecht zur Längsachse 17 weisen die Profilelemente eine im Wesentlichen trapezförmige Kontur auf, die dem Innenraum 9 zugewandt ist. Die Profilelemente 23 sind Erhebungen, die sich von der Bodenwand 13 aus in Richtung des Innenraums 9 erstrecken.

In Längsrichtung weisen die Profilelemente 23 jeweils an einem vorderen, jeweils der Frontkante 15 zugewandten Ende und an einem jeweils hinteren, der Heckkante 16 zugewandten Ende einen Auslaufbereich 24 auf. In einem zwischen den Auslaufbereichen 24 angeordneten Hauptbereich 25 des Profilelements 23 sind an einer Horizontalwand entlang der Längserstreckung mehrere Langlöcher 26 und Durchgangsöffnungen 27 vorgesehen und insbesondere wechselweise angeordnet.

Die Profilelemente 23 bilden eine integrierte Verankerungseinheit. Die Verankerungseinheit dient zum Verankern eines Gegenstands, wie beispielsweise eines Koffers oder von Skiern, in dem Dachbehälter 1. Unbeabsichtigte und insbesondere kritische Lenk-, Beschleunigungs- und/oder Bremsmanöver führen nicht zu einer unerwünschten Verlagerung der Gegenstände in dem Dachbehälter 1. Sowohl der Dachbehälter 1 als auch die Gegenstände sind dadurch besser geschützt. Die Verankerungseinheit umfasst im Wesentlichen Verankerungselemente, die durch die Langlöcher 26 und/oder die Durchgangsbohrungen 27 gebildet sind. Entsprechend können an den Gegenständen korrespondierende Verankerungsgegenelemente vorgesehen sein, die zum verrastenden Anliegen oder Eingreifen oder Einschrauben ausgeführt sein können.

Die Langlöcher 26 weisen eine im Wesentlichen konstante Langlochbreite auf, die an einer Stelle, insbesondere entlang der Längsachse 17 mittig, eine Zentralbohrung 60 mit einem Durchmesser aufweist, der größer ist als die Breite des Langlochs. An der Zentralbohrung 60 kann beispielsweise ein Verriegelungsgegenelement eines Gegenstands in den Schlitz des Langlochs 26 eingeführt sein. Das Verriegelungsgegenelement kann beispielsweise ein federgelagerter Kopfbolzen sein, dessen Kopf einen Durchmesser aufweist, der kleiner ist als der Durchmesser der Zentralbohrung 60, aber größer als die Breite des Schlitzes des Langlochs 26 ist. Durch Längsverschieben des Gegenstands mit eingeführtem Kopfbolzen entlang des Langlochs ist der Gegenstand mit dem Verriegelungsgegenelement sicher an dem Profilelement 23 befestigt. Um ein unerwünschtes Verrutschen entlang des Langlochs 26 zu verhindern und insbesondere auszuschließen, kann der Kopf an dem Verriegelungsgegenelement federgelagert ausgeführt sein, so dass eine Federkraft ein Anpressen des Kopfes vom Hohlraum 35 an die Unterseite des Profilelements 23 bewirkt. Am Langloch 26 können auch mehrere Zentralbohrungen 60 vorgesehen sein, die insbesondere gleich beabstandet am Langloch 26 angeordnet sind. Die Abstände zwischen zwei benachbarten Zentralbohrungen 60 eines Langlochs 26 können auch unterschiedlich groß ausgeführt sein.

Die Bodenwand 13 weist ferner ein Antennen-Formelement 28 auf. Das Antennen-Formelement 28 ist als Durchgangsöffnung in der Bodenwand 13 ausgeführt. Die Durchgangsöffnung ist konzentrisch zur Längsachse 17 und benachbart zur Heckkante 16 angeordnet. Das Antennen-Formelement 28 ist gemäß dem gezeigten Ausführungsbeispiel in Fig. 1 mit dem Auslaufbereich 24 des mittig angeordneten Profilelements 23 überlagert. Durch das Antennen-Formelement 28 kann die Antenne 30 des Automobils 2 durchgeführt werden.

An der dem Dach 8 zugewandten Unterseite weist die Bodenwand 13 eine Schutzschicht bzw. einen Schutzbelag auf. Dadurch ist gewährleistet, dass beim Aufsetzen und/oder Abnehmen des Dachbehälters 1 auf dem Dach 8 der Lack nicht zerstört oder verkratzt wird. Die Schutzschicht und/oder der Schutzbelag kann im Bereich der Antenne des Automobils 2 die Form der Antenne einnehmen und sich insbesondere über die Antenne als Formelements 28 erstrecken, so dass auch die Antenne 30 vor Verkratzungen geschützt ist.

In der Bodenwanne 3 ist eine Befestigungseinheit integriert. Die Befestigungseinheit dient zum unmittelbaren Befestigen des Dachbehälters 1 bzw. deren Bodenwanne 3 auf dem Dach 8 des Automobils 2. Mittels der Befestigungseinheit ist der Dachbehälter 1 lösbar am Dach 8 befestigbar. Der Dachbehälter 1 ist abnehmbar ausgeführt. Zusätzliche Koppelelemente, beispielsweise Trägerelemente in Form von Dachgepäckträgern, sind entbehrlich. Der Dachbehälter 1 wird unmittelbar auf das Automobildach 8 aufgesetzt und befestigt.

Die Befestigungseinheit weist gemäß dem gezeigten Ausführungsbeispiel mehrere integrierte Magnetelemente 29 auf. Die Magnetelemente 29 sind insbesondere streifenförmig ausgeführt und in die Bodenwand 13 der Bodenwanne 3 eingebettet. Gemäß dem gezeigten Ausführungsbeispiel sind die Magnetelemente 29 entlang der Längskanten 14 und der Frontkante 15 angeordnet. Es ist auch denkbar, entlang der Heckkante 16 zusätzliche Magnetelemente vorzusehen. Anzahl und Form der Magnetelemente kann in Abhängigkeit einer zu erzielenden magnetischen Haltekraft angepasst werden. Insbesondere ist es denkbar, zusätzliche oder alternative Magnetelemente 29 vorzusehen. Insbesondere ist es denkbar, dass mehrere Magnetelemente 29 quer und insbesondere senkrecht zur Längsachse 17 orientiert sind. Vorteilhaft ist es, wenn die Magnetelemente 29 neben der unmittelbaren Befestigung am Dach 8 des Automobils 2 auch eine Befestigung an unterhalb des Daches 8 angeordneten Rahmenelementen, insbesondere Tragsäulen des Automobilrahmens ermöglichen.

Die Magnetelemente 29 können auch in den vertikal orientierten Längswänden 21 integriert sein. Dadurch ist es möglich, die Bodenwanne 3 mit zusätzlicher magnetischer Haltekraft an einer Dachreling 34 zu befestigen. Die Magnetelemente 29 können zusätzlich oder alternativ in einem von dem Profilelement 23 gebildeten, dem Innenraum 9 abgewandten Hohlraum 35 angeordnet sein.

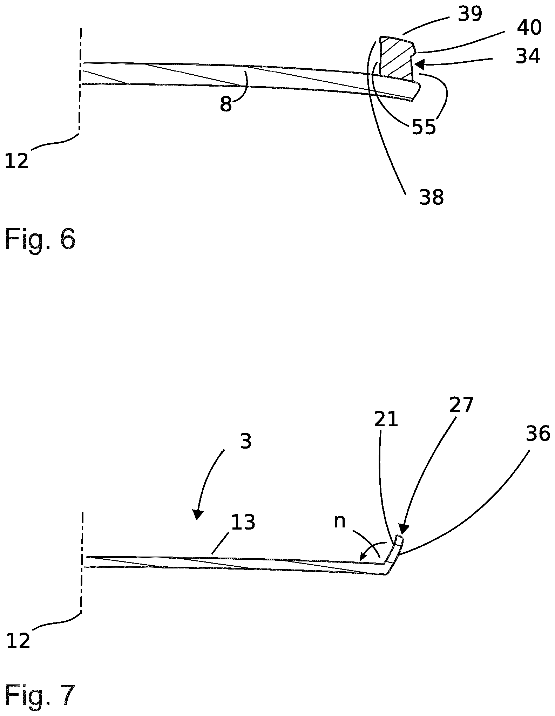

Gemäß dem gezeigten Ausführungsbeispiel weist die Befestigungseinheit weitere Formelemente auf, die an den Längswänden 21 angeordnet sind. Die Formelemente sind derart ausgeführt, dass sie mit der Bodenwand 13 der Bodenwanne 3 einen Neigungswinkel n einschließen, der größer ist als 90°. Die Formelemente der Längswände 21 sind gegenüber der Bodenwand 13 nach außen geneigt angeordnet, also dem Innenraum 9 abgewandt. Die nach außen geneigten Formelemente an den Längswänden 21 sind als Klemmlippen 36 ausgeführt. Es ist möglich, dass, wie in Fig. 7 gezeigt, die Längswand 21 insgesamt die Klemmlippe 36 bildet. Es ist alternativ möglich, dass eine Klemmlippe als Abschnitt oder Bereich an der Längswand angeschwenkt ist. In diesem Fall könnte die Längswand 21 im Wesentlichen vertikal angeordnet sein mit einer sich davon geneigt erstreckenden Klemmlippe.

Wesentlich ist, dass die Klemmlippe 36 mit einem freien Ende, also mit einer äußeren Klemmlippenkante 37 klemmend an einem korrespondierenden Vorsprung 38 der Dachreling 34 anliegt. Der Vorsprung 38 ist an einem oberen Ende einer seitlichen Vertiefung 55 angeordnet. Die seitliche Vertiefung 55 ist in Höhenrichtung durch das Dach 8 und den Vorsprung 38 begrenzt. Die seitliche Vertiefung 55 ist insbesondere auch auf einer dem Dachbehälter 1 abgewandten Außenseite der Dachreling 34 vorgesehen. Die Dachreling 34 weist einen mehrfach gewölbten, in einer bevorzugten Ausführung im Wesentlichen T-förmigen Querschnitt in einer Ebene senkrecht zur Längsachse 17 auf. An einer dem Automobildach 8 abgewandten Oberseite weist die Dachreling 34 einen oberen Steg 39 auf, der beidseitig an einem Vertikalsteg 40 vorsteht. Dadurch, dass die Breite des Vertikalstegs 40 kleiner ist als die Breite des oberen Stegs 38, sind beidseitig Vertiefungen 55 an der Dachreling 34 vorgesehen, wobei sich die Vertiefungen 55 entlang der Längsachse 17 lediglich bereichsweise erstrecken und insbesondere nicht die gleiche Länge aufweisen wie der obere Steg 39. Insbesondere in den Endbereichen, in welchen die Höhe der Dachreling 34 bis auf einen minimalen Wert reduziert ist, weist der Vertikalsteg 40 im Wesentlichen die identische Breite auf wie der obere Steg 39. In diesem Bereich sind keine Vertiefungen angeordnet. Die Vertiefungen der Dachreling 34 sind axial begrenzt.

Wesentlich ist auch, dass die Klemmlippe 36 geeignet ist, einen im Wesentlichen freistehenden Steg einer Dachreling, die insbesondere nur im Front- und Heckbereich des Automobils 2 mit dem Dach 8 verbunden ist, zu umgreifen. Bei einer derartigen Dachreling 34 ist ein Vertikalsteg 40 nicht vorgesehen. Die Vertiefungen 55 sind nicht sacklochartig ausgeführt, sondern durchgängig. Die seitlichen Vertiefungen 55 sind Durchgangsöffnungen in einer Querrichtung des Automobils 2.

Die Klemmlippe 36 ist strukturelastisch ausgeführt. Das bedeutet, dass die Materialstärke der Klemmlippe 36 derart dünn ist, dass ein elastisches Einbiegen der Klemmlippe 36 zu der Bodenwand 13 hin möglich ist. Insbesondere ist die elastische Durchbiegung im Wesentlichen unabhängig von dem Material, aus dem die Klemmlippe 36 gefertigt ist. Dadurch ist es möglich, den Dachbehälter 1 mit der Bodenwanne 3 von oben auf das Automobil 2 aufzusetzen. Ein äußerer Abstand der beiden Klemmkanten 37 der gegenüberliegenden Klemmlippen 36 ist größer als ein innerer Abstand, der von den einander zugewandten Innenkanten der oberen Stege 39 der Dachreling 34 vorgegeben ist. Durch das Aufsetzen des Dachbehälters 1 mit der Bodenwanne 3 wird dieses auf das Automobildach aufgerastet und mit den Klemmlippen 36 in die seitlichen Vertiefungen 55 der Dachreling 34 verrastet, indem die Klemmlippenkanten 37 an den Vorsprüngen 38 der Vertiefungen 55 klemmend anliegen.

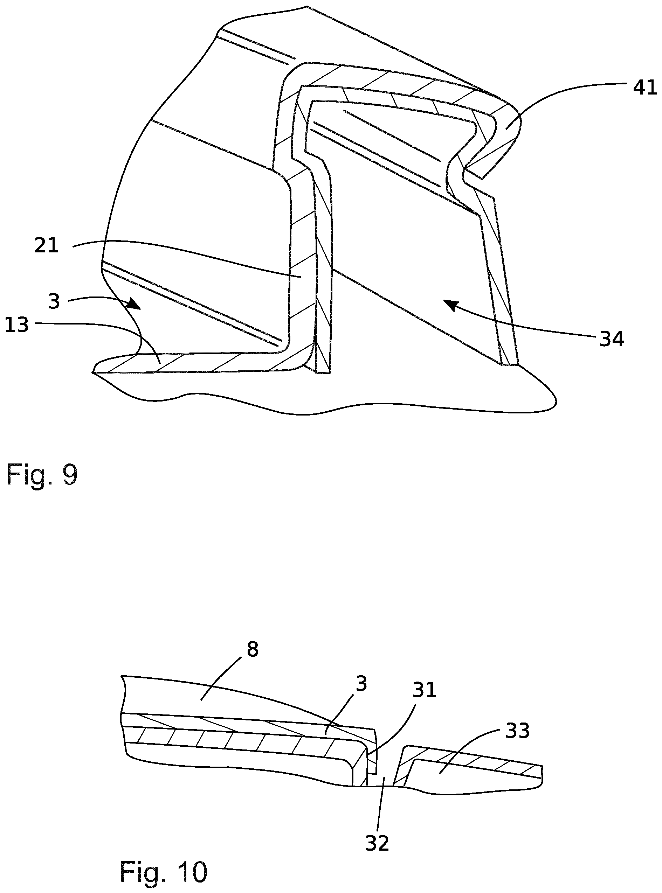

In einer alternativen Ausführungsform gemäß Fig. 9 können die Formelemente, die an den Längswänden 2l integriert angeformt sind, eine der Dachreling 34 entsprechende Profilgeometrie 41 aufweisen. Dadurch ist eine Haltekraft des Dachbehälters 1 am Automobildach 8 verbessert. Die Bodenwand 13 ist vorteilhaft am Automobildach befestigt und ergibt ein ästhetisch ansprechendes Gesamtbild. Der auf das Dach 8 aufgesetzte Dachbehälter ergibt zusammen mit dem Dach 8 eine einheitliche Erscheinungsform. Der aufgesetzte, abnehmbare Dachbehälter 1 wird nicht als zusätzliches Element wahrgenommen.

Bei der Ausführungsform in Fig. 9 oder einer ähnlichen Ausführungsform kann die Bodenwanne 3, insbesondere im Bereich der Längswände 21 der Dachhalterung nach innen zugewandte und/oder der Dachhalterung nach außen abgewandte Beleuchtungselemente aufweisen. Beleuchtungselemente sind insbesondere LED-Elemente. Die Beleuchtungselemente können an einer Innenseite, insbesondere im Bereich der Profilgeometrie 41 angeordnet sein. Dadurch ist eine indirekte Beleuchtung eines Zwischenraums zwischen der Dachreling 34 und der Profilgeometrie 41 der Bodenwanne 3 möglich und erzeugt einen besonderen lichttechnischen Effekt.

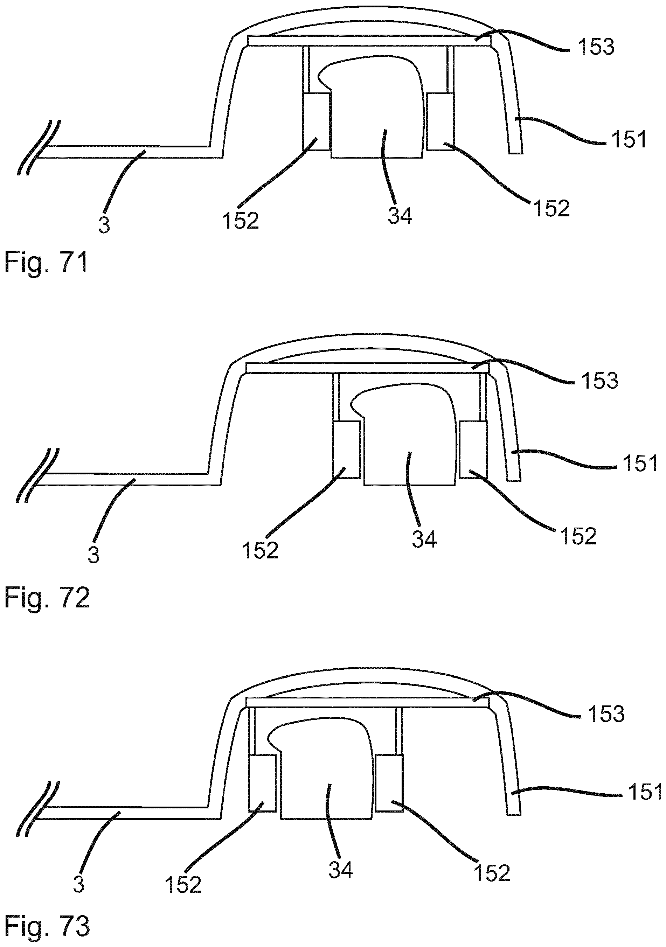

Gemäß einer weiteren Ausführungsform, die in Fig. 71 bis 73 schematisch dargestellt ist, sind die Formelemente 151 an den Längswänden 21 veränderlich einstellbar ausgeführt. Das bedeutet, dass die Formgeometrie der Formelemente 151 bewusst größer ausgeführt ist, als eine Dachreling 34. Die Formgeometrie weist eine unmittelbar der Bodenwand 13 sich anschließende Innenwand, die der Dachhalterung zugewandt ist, und eine an einer Außenseite der Dachreling 34 angeordnete Außenwand, die der Dachhalterung abgewandt ist, auf. An den Innenflächen der Innenwand und/oder der Außenwand sind quer verstellbare Klemmelemente 152, insbesondere mittels Stellschrauben, angeordnet. Das Formelement dient zum Umhüllen der Reling. Die veränderlich einstellbaren Klemmelemente dienen zum klemmenden Befestigen der Bodenwanne mit dem Formelement an der Dachreling 34. Die Klemmelemente 152 sind insbesondere in Breitenrichtung entlang eines Portals 153, das an der Innenseite des Formelements 151 befestigt ist, veränderlich einstellbar. Das Portal 153 bildet eine Schiebekulisse für die Klemmelemente 152. Die Klemmelemente 152 können flexibel und unabhängig voneinander entlang des Portals 153 klammerartig verschoben werden. Dadurch ist die Bodenwanne 3 mit dem Formelement 151 an verschiedene Dachgeometrien und insbesondere verschiedene Relings 34, insbesondere verschiedene Anordnungen der Relings 34 am Kraftfahrzeugdach 2 und/oder verschiedenartig ausgeführte Relings 34, individuell anpassbar.

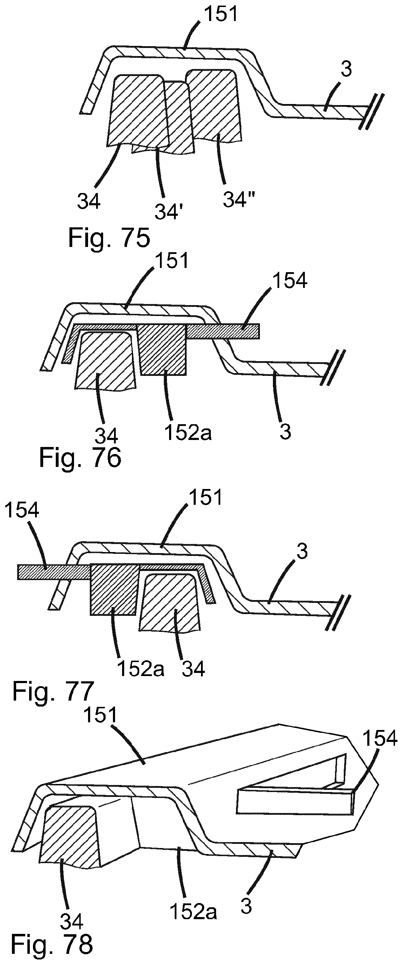

Ein alternatives, flexibles Befestigungssystem der Bodenwanne 3 an der Reling 34 ist in Fig. 75 bis 78 dargestellt. In dem Formelement ist ein mittels eines Rasthebels 154 an der Reling 34 mechanisch klemmbares Klemmelement 152a vorgesehen.

Der Rasthebel 154 kann von einer Innenseite der Bodenwanne 3, wie in Fig. 76 dargestellt, oder von einer Außenseite der Bodenwanne 3, wie in Fig. 77 dargestellt, an dem Formelement 151 seitlich vorstehen. Das Klemmelement 152a kann, wie in Fig. 76 und Fig. 77 dargestellt, jeweils einseitig an der Reling 34 angreifen und diese gegen die Innenseite des Formelements 151 klemmen. Es ist aber auch denkbar, wie in Fig. 75 angedeutet, dass die Reling 34 mittig in dem Formelement 151 angeordnet ist und insbesondere beidseitig von dem Klemmelement 152a geklemmt wird. In Fig. 75 sind exemplarisch drei verschiedene, insbesondere bezüglich ihrer seitlichen Position voneinander abweichende Positionen der Reling 34, 34' bzw. 34" schematisch angedeutet.

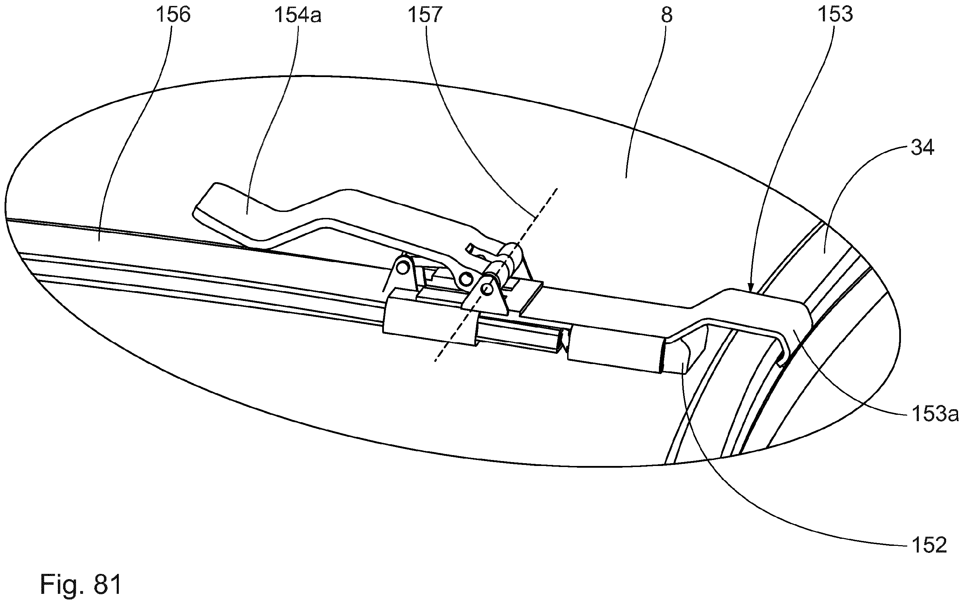

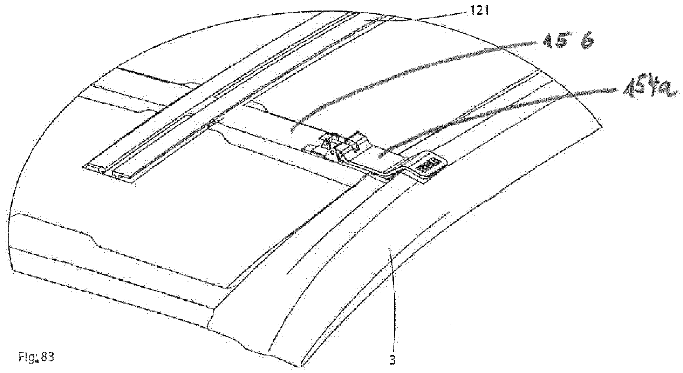

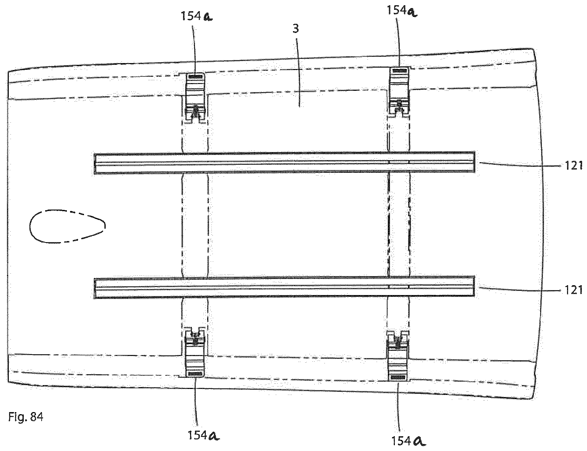

Gemäß einer weiteren Ausführungsform, die in Fig. 81 bis 84 dargestellt ist, kann gemäß der Erfindung die in Fig. 83 und 84 dargestellte Bodenwanne 3 an der Dachreling 34 verrastet werden. Dazu ist an der die nicht dargestellten Bodenwanne eine Querstrebe 156 befestigt, die quer und insbesondere senkrecht zur Dachreling 34 am Fahrzeugdach 8 angeordnet ist. Die Querstrebe 156 ist insbesondere in einer dafür vorgesehenen Ausnehmung an der Bodenwanne eingepasst. Insbesondere ist die Querstrebe an einer dem Kraftfahrzeugdach 8 zugewandten Unterseite der Bodenwanne angeordnet.

An der Querstrebe 156 ist der Rasthebel 154a angeordnet, der mit dem entlang der Querstrebe 156 verlagerbaren Klemmelement 152 mechanisch gekoppelt ist. Durch Betätigung des Rasthebels 154a wird das Klemmelement 152 in einer Querrichtung relativ zu der Dachreling 34, insbesondere zu der Dachreling 34 hin bzw. von der Dachreling 34 weg, verlagert. Zum Betätigen des Rasthebels 154a wird dieser um eine Scharnierachse 157 geschwenkt. Die Scharnierachse 157 ist im Wesentlichen parallel zur Längsorientierung der Dachreling 34 orientiert. Die Scharnierachse 157 ist insbesondere quer und insbesondere senkrecht zur Orientierung der Querstrebe 156 orientiert.

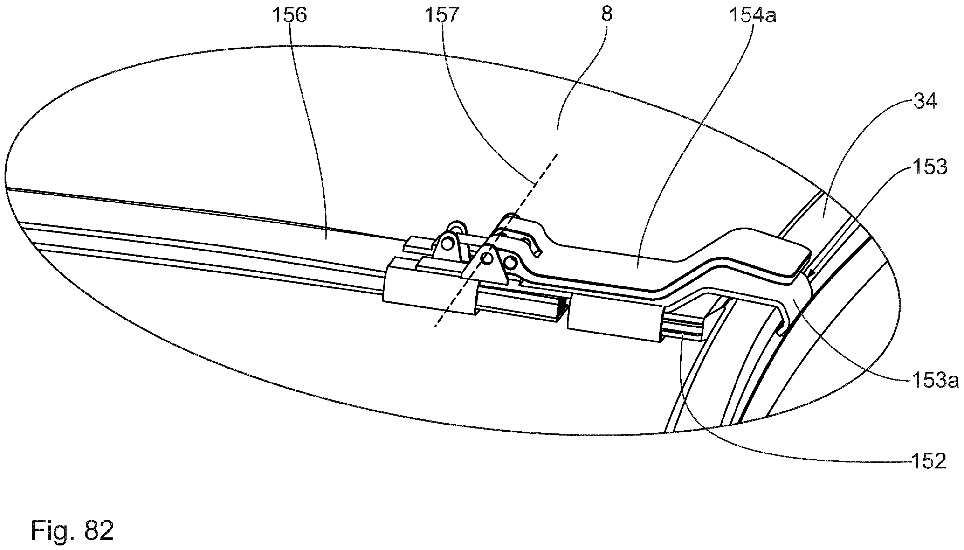

Fest mit der Querstrebe 156 ist auch das Portal 153 verbunden. Das Portal 153 weist einen äußeren Klammerabschnitt 153a auf, der die Dachreling 34 von einer Außenseite des Kraftfahrzeugs her umgreift. Durch Betätigung des Rasthebels 154a wird das Rastelement 152 zu dem Klammerabschnitt 153a hin verlagert und dadurch die Bodenwanne mit der Querstrebe 156 an der Dachreling 34 verriegelt. Die verriegelte Anordnung ist in Fig. 82 dargestellt.

In der verriegelten Anordnung liegt das Klemmelement 152 an einer Innenseite der Dachreling 34 klemmend an. Die Innenseite ist der Außenseite, die von dem Klammerabschnitt 153a umgriffen wird, gegenüberliegend angeordnet.

Insbesondere weist die Querstrebe 156 zwei Rasthebel zum Betätigen jeweils eines Klemmelements 153 auf, so dass die Querstrebe 156 an den beiden Dachrelingen 34 am Kraftfahrzeugdach 8 zuverlässig befestigt werden kann. An der Bodenwanne 3 können auch mehrere Querstreben 156 vorgesehen sein, um eine Mehr-Punkt-Befestigung der Bodenwanne 3 an jeder Dachreling 34 zu gewährleisten.

Vorteilhaft ist, dass sich das Klemmelement 153 mehrere Zentimeter in Querrichtung verschieben lässt. Somit ist es variabel für diverse Fahrzeuge einer Fahrzeugkategorie einsetzbar. Beim Verschließen durch Klemmung des Rasthebels wird das Verschieben erst in Quer- und dann auch in Längsrichtung durch sequenzielle Klemmung blockiert. Des Weiteren wird beim Klemmen ein "Totpunkt" überschritten, sodass das System selbstsichernd ist. Ein unbeabsichtigtes Öffnen des Klemmelements 153 ist zuverlässig verhindert.

An der Querstrebe 156 können auch ein oder mehrere Befestigungselemente in Form von Längsschienen 121 angebracht und damit verbunden sein.

Eine so ausgeführte Dachhalterung ist flexibel einsetzbar und kann insbesondere an verschiedenen Autodachgeometrien befestigt werden. Die Befestigung der Dachhalterung ist im Wesentlichen unabhängig vom Fahrzeughersteller. Unterschiedliche Geometrien der Dachreling und/oder unterschiedliche Anordnungen der Dachreling am Kraftfahrzeugdach können durch die bewusste breite Gestaltung des Formelements und die daran angeordneten veränderlich einstellbaren Klemmelemente ausgeglichen werden. Die Bodenwanne ist für verschiedene Kraftfahrzeuge flexibel einsetzbar.

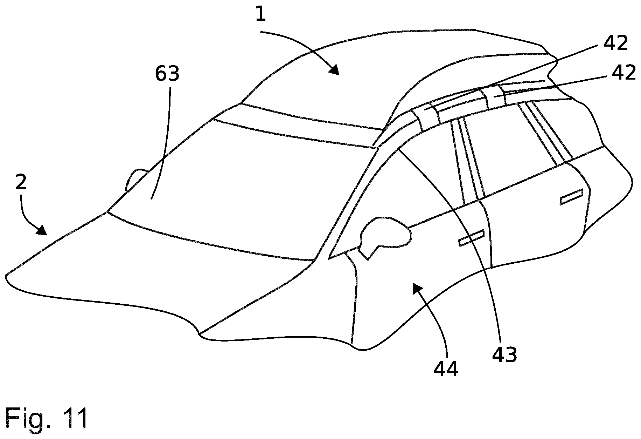

Die Befestigungseinheit kann weitere Klemmelemente 42 aufweisen, die in Fig. 11 dargestellt sind. Die Klemmelemente 42 sind insbesondere jeweils als Klemmband ausgeführt. Das Klemmband ist mit einem ersten Ende am Dachbehälter 1, insbesondere an der Bodenwanne 3 und insbesondere an der Bodenwand 13 festgelegt. Über eine beispielsweise schlitzförmige Öffnung, die insbesondere in der Längswand 21 integriert sein kann, ist das Klemmelement 42 aus dem Dachbehälter 1 herausgeführt. Ein zweites, dem ersten Ende gegenüberliegend angeordnetes Ende des Klemmelements 42 weist ein nicht dargestelltes Ankerelement auf, das eine gegenüber dem Klemmelement 42 vergrößerte Dicke aufweist. Das Ankerelement ist insbesondere als Verdickung des Klemmbands ausgeführt. Das Klemmelement 42 kann in einem Türspalt 43 der Autotür 44 und/oder Heckklappe eingeklemmt werden. Das Klemmelement 42 ist insbesondere ein flexibles Band.

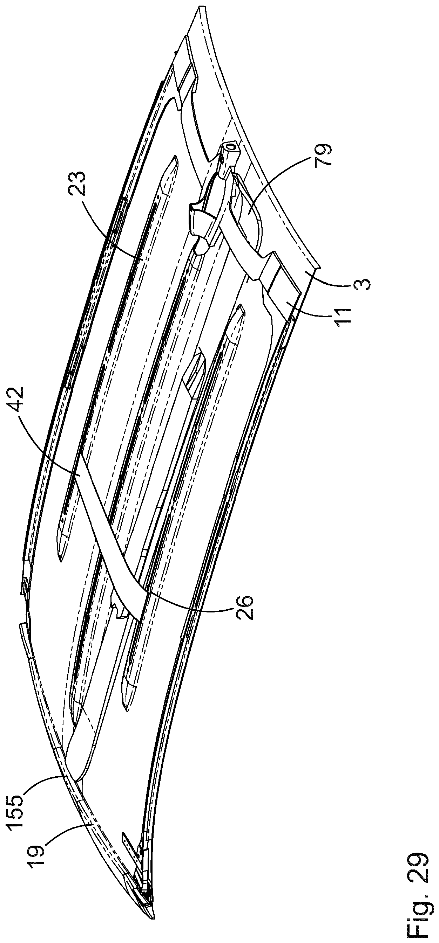

Analog zu einem Anschnallgurt kann das Klemmelement 42 als ein quer und/oder längs durch den Innenraum 9 des Dachbehälters 1 und/oder durch die Bodenwanne 3 des Dachbehälters 1 durchgehender Gurt ausgeführt sein. Das Klemmelement 42 ist insbesondere entsprechend einem modernen Fahrzeuggurt ausgeführt. Beispielsweise kann in Abhängigkeit einer Fahrgeschwindigkeit des Automobils ein automatisiertes Nachspannen des Klemmelements 42 erfolgen. Zusätzlich oder alternativ kann ein Klemmelement-Schloss vorgesehen sein, in dem das Klemmelement verschließbar, ähnlich einem Gurtschloss, anordenbar ist. In der verschlossenen Anordnung des Klemmelements in dem Klemmelement-Schloss kann ein Freigabesignal von dem Klemmelement-Schloss erzeugt und insbesondere an einen Bordcomputer des Automobils 2, insbesondere kabellos, übermittelt werden. Beispielsweise ist es denkbar, die Armaturentafel des Automobils mit einer zusätzlichen Signalanzeige für das zuverlässige Schließen des Klemmelements auszurüsten. Der Gurt kann beispielsweise zur Gepäckarretierung, insbesondere von Skiern 79, verwendet werden, wie dies in Fig. 29 dargestellt ist. Ein Ski 79 ist mittels des Klemmelements 42 in Form eines Klemmgurts an der Bodenwanne 3 gehalten. Das Klemmelement 42 ist durch die Langlöcher 26 der Profilelemente 23 zu einer Unterseite der Bodenwanne 3 bzw. in den von den Profilelementen 23 gebildeten Hohlraum 35 geführt. In dem Hohlraum können die Gurtschlösser angeordnet sein. Entlang der Langlöcher 26 bzw. entlang der Profilelemente 23 können mehrere Klemmelemente 42 zur Sicherung des Skis 79 angeordnet sein.

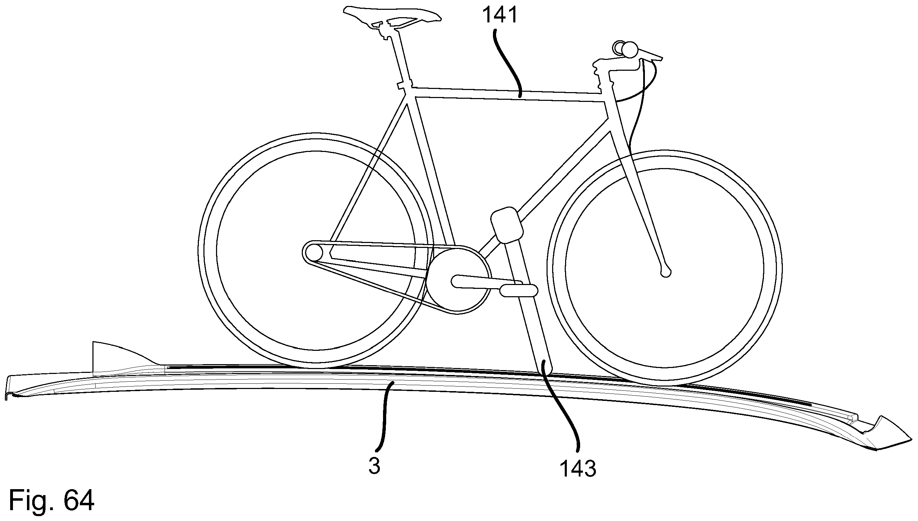

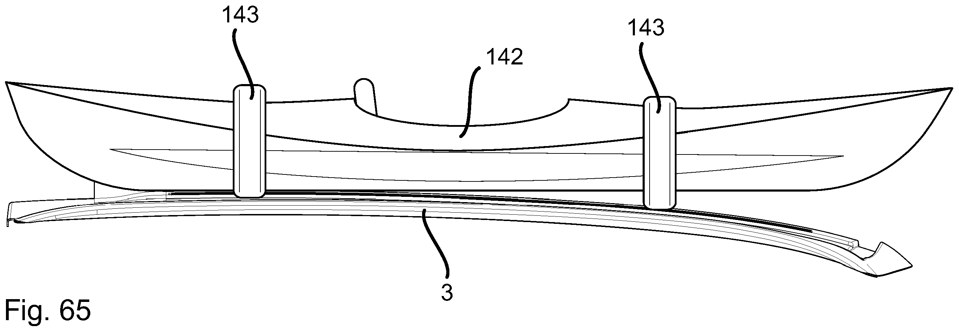

Die Bodenwanne 3 kann auch als Ersatz für einen Standarddachträger eingesetzt werden. Die Bodenwanne 3 kann beispielsweise für den Transport und zur Befestigung von Fahrrädern 141 (Fig. 64), Surfbrettern oder Kanus 142 (Fig. 65) genutzt werden. Für die Befestigung eines Fahrrads 141 oder eines Kanus 142 an der Bodenwanne 3 können separate, dafür geeignete Trägersysteme 143 verwendet werden, die insbesondere an der Bodenwanne 3 befestigt sind. Es ist eine zusätzliche Versteifung der Bodenwanne 3 vorteilhaft. Die zusätzliche Versteifung kann durch zwei Bogenförmige Rahmenelemente erfolgen, die etwa U-förmig ausgeführt sind. Die Rahmenelemente sind aus einem Metallwerkstoff, insbesondere aus einem Aluminiumprofil, hergestellt. Die Rahmenelemente können auch aus einem Kunststoffmaterial hergestellt sein, insbesondere faserverstärktem Kunststoffmaterial, wie beispielsweise kohlefaserverstärktem Kunststoff (CFK) oder glasfaserverstärktem Kunststoff (GFK) und/oder einem Metall-Kunststoff-Verbundmaterial, wie beispielsweise einem Metallkern mit einer Kunststoffummantelung. Wesentlich ist, dass die Rahmenelemente der Bodenwand 13 eine erhöhte Eigensteifigkeit verleihen. Die Bodenwand 13 ist mit einer stabilen Gitterstruktur ausgeführt. Die Rahmenelemente verbinden die insbesondere in den Eckenbereichen der Bodenwanne 3 angeordneten Magnetelemente mit den dazwischen angeordneten Profilelementen 23.

Zusätzlich können Sensoren in der Bodenwanne 3 angeordnet sein, die erfassen, ob ein Gegenstand in dem Dachbehälter 1 bzw. auf der Bodenwanne 3 angeordnet ist. Derartige Sensoren werden beispielsweise im Fahrzeugsitz zur Erfassung einer Person auf dem Sitz verwendet. Sofern ein Gegenstand in dem Dachbehälter angeordnet, aber nicht mittels des Halteelements 42 verankert ist, kann ein Warnsignal an den Fahrer im Automobil übermittelt werden und der Fahrer zur Ladungssicherung aufgefordert werden. Die Sensoren sind insbesondere in der Bodenwanne 3 integriert.

Der Gurt kann in den Klemmspalten 32, 43 eingeklemmt und somit verankert werden. Insbesondere ist das Band wasserabweisend. Insbesondere sind an dem Dachbehälter 1 vier Klemmelemente 42 vorgesehen, jeweils zwei an den Längswänden 21.

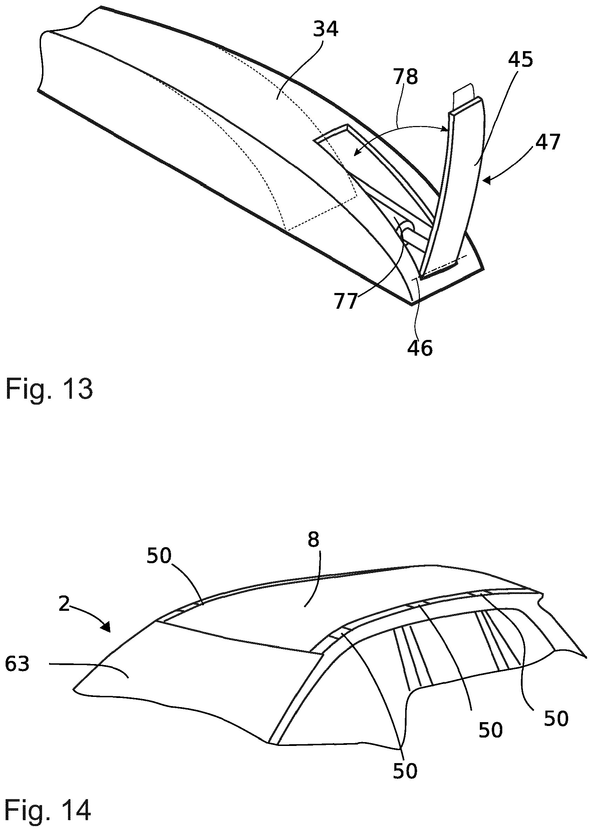

Der Dachbehälter 1, insbesondere die Bodenwanne 3 und insbesondere die Bodenwand 13, weisen eine Schutzbefestigung 48 in Form von nicht dargestellten Befestigungsschrauben auf, die durch Befestigungsöffnungen 49 gesteckt und zum unmittelbaren Verschrauben an Koppelstellen 50 gemäß Fig. 14 an einem Automobildach 8 dienen. Derartige Koppelstellen 50 sind insbesondere bei Automobilen 2 vorgesehen, die keine Dachreling aufweisen. Derartige Koppelstellen 50 sind im Automobildach 8 integriert. Die Koppelstellen 50 weisen insbesondere Aufnahmeschraubgewinde auf, in die die Befestigungsschrauben eingeschraubt werden können. Die Befestigungsöffnungen 49 sind insbesondere nur bei geöffnetem, also nicht verschlossenem Dachbehälter 1 zugänglich. Die Schutzbefestigung 48 stellt einen Diebstahlschutz dar.

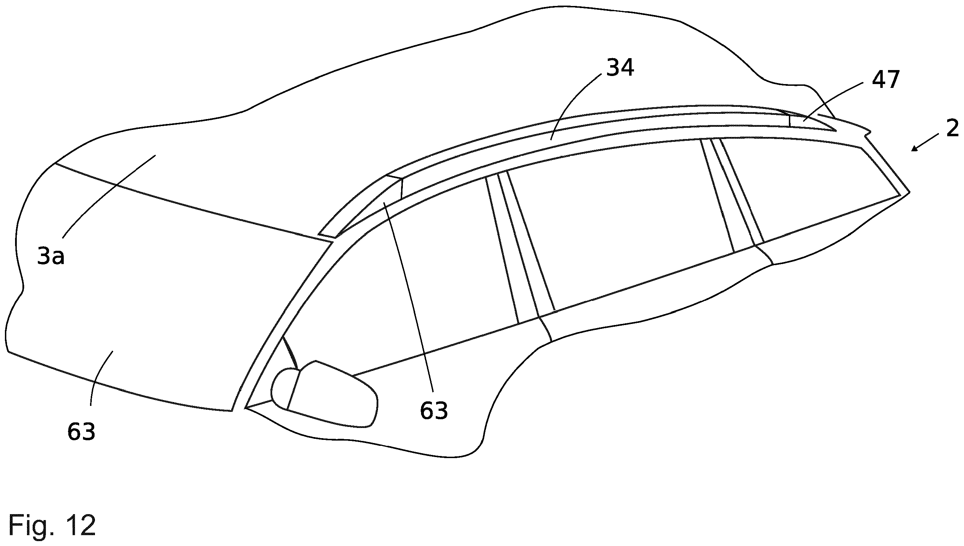

Im Folgenden wird unter Bezugnahme auf Fig. 12 und 13 ein weiteres Ausführungsbeispiel der Erfindung beschrieben. Konstruktiv identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a.

Der wesentliche Unterschied des Dachbehälters 1a besteht darin, dass die Bodenwanne 3a einen vorderen Bereich und einen hinteren Bereich aufweist, in welchen die Bodenwanne 3a sich im Wesentlichen über die gesamte Breite des Dachs 8 des Automobils 2 erstreckt. Insbesondere ist die Breite der Bodenwanne 3a senkrecht zur Längsachse 17 größer als ein Abstand der Dachreling 34 des Automobils 2. Dadurch ist es möglich, zusätzlichen Stauraum für den Dachbehälter 1a zu erschließen, da sich der Dachbehälter 1a über die gesamte Dachfläche, insbesondere die gesamte Länge des Dachs 3 erstrecken kann.

Um diesen Dachbehälter 1a, insbesondere die Bodenwanne 3a zusätzlich zu befestigen, kann die Befestigungseinheit mehrere Rasthebel 45 aufweisen. Der Rasthebel 45 ist um eine Schwenkachse 46 in einem Rasthebelgehäuse 47 entlang einer Schwenkrichtung 78 schwenkbar angeordnet. Das Rasthebelgehäuse 47 ist im Wesentlichen keilförmig ausgeführt und an die Form der am Automobil 2 vorhandenen Dachreling 34 angepasst. In einer verrasteten Position ist der Rasthebel 45 in oder an dem Rasthebelgehäuse 47 angeordnet. Der Rasthebel 45 ist über Rastelemente an dem Rastelementgehäuse 47 und/oder der Dachreling 34 verrastend angeordnet. In der verrasteten Anordnung des Rasthebels 45 ist der Dachbehälter 1a zusätzlich an der Dachreling 34, insbesondere entlang einer Fahrrichtung, fixiert.

Für die Schwenkbewegung des Rasthebels 45 um die Schwenkachse 46 ist ein Aktuator 77 vorgesehen. Gemäß dem gezeigten Ausführungsbeispiel ist der Aktuator 77 als Kolben-Zylinder-Einheit dargestellt, insbesondere in Form eines Pneumatikzylinders. Der Pneumatikzylinder 77 kann mittels eines Antriebs betätigt, also automatisiert ausgefahren werden. Es ist auch denkbar, dass der Aktuator 77 federgelagert ausgeführt ist und bei manuellem Betätigen des Rasthebels 45 dieser aus einer verriegelten Anordnung gemäß Fig. 12 freigibt und aufgrund der vorgespannten Feder die in Fig. 13 ausgeklappte Position schiebt. Dazu ist der Aktuator 77 mit einem freien Ende unmittelbar am Rasthebel 45 angelenkt. Der Anlenkungspunkt ist beabstandet von der Schwenkachse 46, um ein Drehmoment auf den Rasthebel 45 um die Schwenkachse 46 zu ermöglichen. Die Kolben-Zylinder-Einheit kann auch als Hydraulikzylinder ausgeführt sein. Es sind auch alternative Antriebe, beispielsweise ein Spindelantrieb denkbar.

Der Rasthebel 54 kann auch als Rastschraube oder Rastelement mit einem Drehverschluss ausgeführt sein, um die verrastende Position in oder an dem Rasthebelgehäuse 47 zu gewährleisten.

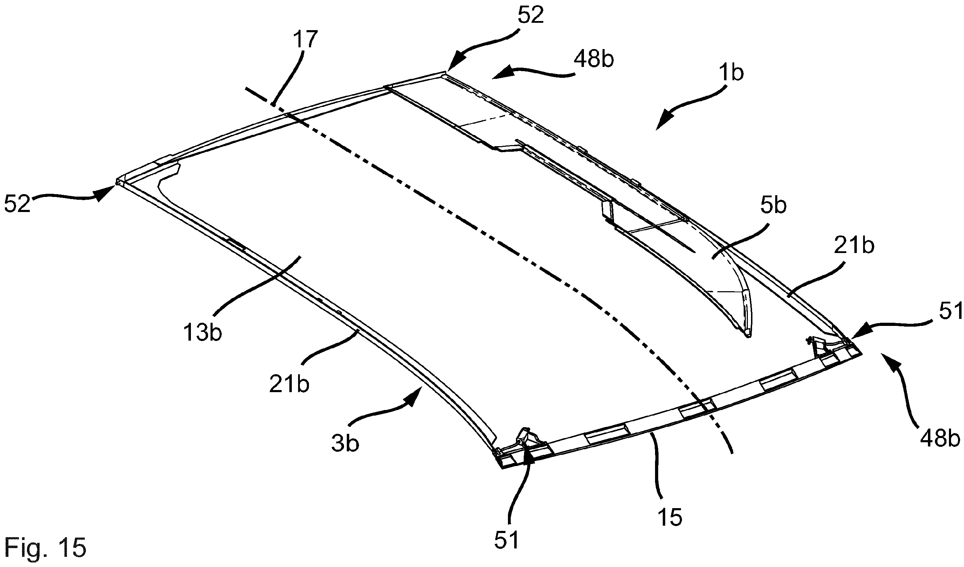

Im Folgenden wird unter Bezugnahme auf Fig. 15 bis 19 ein weiteres Ausführungsbeispiel der Erfindung beschrieben. Konstruktiv identische Teile erhalten dieselben Bezugszeichen, wie bei den vorherigen Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten b.

Der wesentliche Unterschied gegenüber den vorherigen Ausführungsbeispielen besteht darin, dass bei dem Dachbehälter 1b die Schutzbefestigung 48b zusätzliche Verriegelungselemente 51, 52 aufweist. Die Verriegelungselemente 51, 52 sind jeweils an den Längswänden 21 angeordnet. Die Verriegelungselemente 51, 52 sind seitlich, also quer und insbesondere senkrecht zur Längsachse 17 verlagerbar.

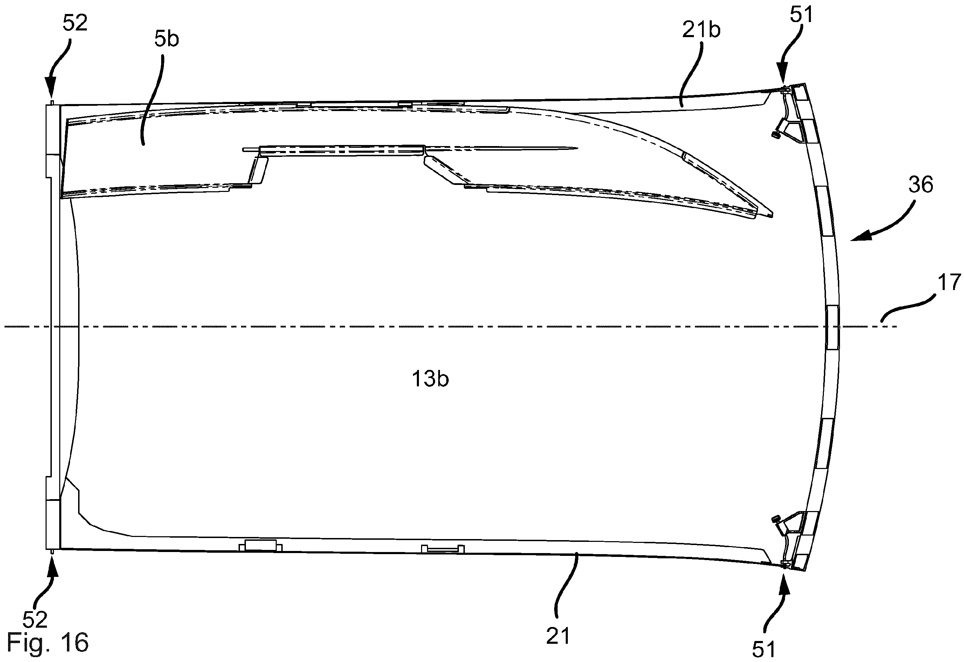

Insbesondere aus der Draufsicht in Fig. 16 wird die platzsparende Anordnung des Dachbehälters 1b im zusammengefalteten Zustand deutlich. Im zusammengefalteten Zustand sind die Seitenwände in einer im Wesentlichen horizontalen Anordnung. Die Seitenelemente sind auf die Bodenwanne geklappt. Die Seitenelemente liegen im Wesentlichen flächig der Bodenwanne auf. Dies gilt gleichermaßen für die Rückwand 6 und die Deckelwand 7 und den Rahmen 11.

In dem eingefalteten Zustand sind die genannten Elemente aufeinanderliegend, also schichtweise übereinander angeordnet. Zwischen den faltbaren Elementen des Dachbehälters 1 ist im Wesentlichen kein Zwischenraum vorgesehen.

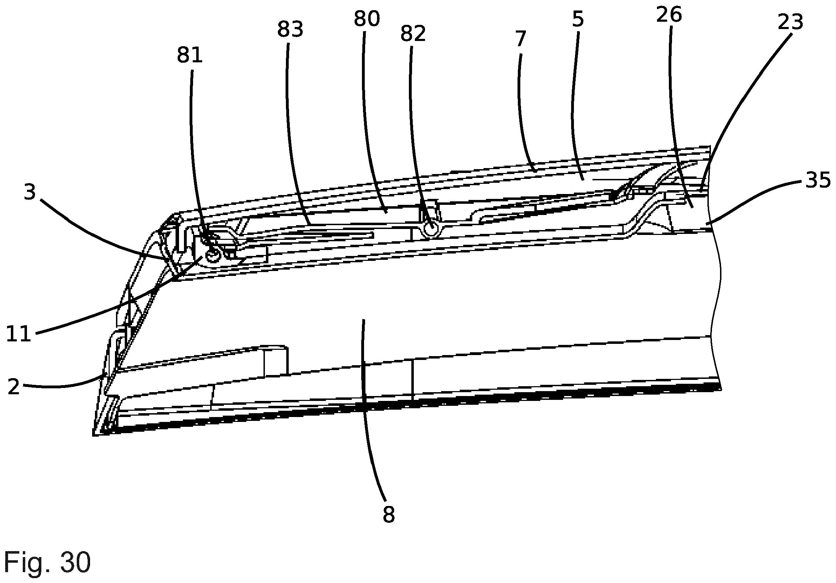

Fig. 30 zeigt eine Querschnittsdarstellung des Dachbehälters 1 in einer zusammengefalteten Anordnung. In dem zusammengefalteten Zustand ist ein klappbares, kleines Seitenwandelement 80, das Bestandteil der Seitenwand 5 ist, mehrlagig zusammengefaltet. Das Seitenwandelement 80 weist ein erstes Scharnier 81 und ein zweites Scharnier 82 mit jeweils einer Scharnierachse auf. Mit dem ersten Scharnier 81 ist das Seitenwandelement 80 am Rahmen 11 schwenkbar angelenkt. Das zweite Scharnier 82 verbindet das erste Scharnier 81 mit einem weiteren Wandelement 83, das mit der Seitenwand 5 verbunden ist. In der zusammengefalteten Anordnung gemäß Fig. 30 sind die beiden Scharniere 81, 82 im Wesentlichen auf einer Horizontalebene angeordnet.

Durch Aufklappen wird das erste Scharnier 81 im Gegenuhrzeigersinn gemäß Fig. 30 geschwenkt. Das zweite Scharnier 82 wird im Uhrzeigersinn geschwenkt. In der aufgefalteten Anordnung liegen die Scharniere 81, 82 mit ihren jeweiligen Scharnierachsen im Wesentlichen in einer Vertikalebene, so dass das zweite Scharnier 82 im Wesentlichen senkrecht oberhalb des ersten Scharniers 81 angeordnet ist.

Die Scharniere 81, 82 weisen jeweils einen rohrförmigen Hohlraum auf, in dem zusätzliche Funktionen integriert sein können wie beispielsweise ein Einrastmechanismus für das Seitenwandelement 80 und/oder ein Aufstellmechanismus, insbesondere ein Antrieb, für die Deckelwand 7.

Die Scharniere 81, 82 können auch in einer anderen Weise, insbesondere in Form eines Filmscharniers, ausgeführt sein.

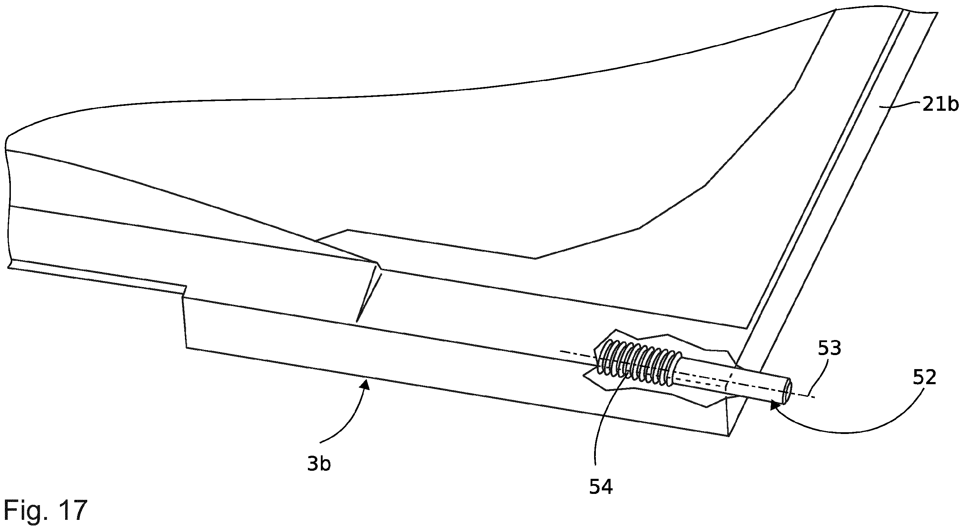

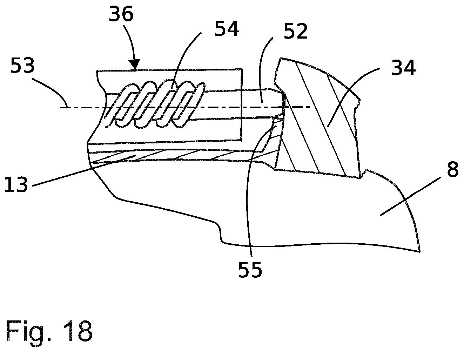

Nachfolgend werden anhand der Fig. 17 und 18 der Aufbau und die Funktion des Verriegelungselements 52 näher erläutert. Das Verriegelungselement 52 ist als federgelagerter Verriegelungsbolzen ausgeführt. Der Verriegelungsbolzen ist entlang einer Verriegelungsachse 53, die quer, insbesondere senkrecht zur Längsachse 17 orientiert ist, verlagerbar. Der Verriegelungsbolzen ist mittels eines Federelements 54, das in der Bodenwanne 3b integriert angeordnet ist, federbeaufschlagt. In einer unbelasteten Anordnung bewirkt die Federvorspannung des Federelements 54, dass der Verriegelungsbolzen aus der dafür vorgesehenen Ausnehmung an der Bodenwanne 3b herausgedrückt wird. Der Verriegelungsbolzen 52 steht an der Längswand 21b in der unbetätigten Anordnung über.

Zum Befestigen des Dachbehälters 1b auf dem Dach 8 wird die Bodenwanne 3b von oben auf das Dach 8 aufgesetzt. Der Verriegelungsbolzen des Verriegelungselements 52 steht seitlich derart weit an der Längswand 21b über, dass er insbesondere am oberen Steg 39 der Dachreling 34 ansteht. Durch den Kontakt mit der Dachreling 34 wird der Verriegelungsbolzen entgegen der Federkraft entlang der Verriegelungsachse 53 in die Bodenwanne 3b hineingedrückt.

Wenn der Dachbehälter 1b mit der Bodenwanne 3b auf dem Dach 8 des Automobils 2 aufliegt, wie in Fig. 18 dargestellt, wird der Verriegelungsbolzen infolge der Federkraft nach außen, in die seitliche Vertiefung 55 der Dachreling 34 gedrückt. In dieser Anordnung ist der Dachbehälter 1b mit der Bodenwanne 3b zuverlässig auf dem Dach 8 und insbesondere an der Dachreling 34 verrastet.

Eine Entriegelung des Verriegelungsbolzens ist ohne Weiteres nicht möglich. Eine Entriegelung ist beispielsweise über einen nicht dargestellten, im Innenraum 9 des Dachbehälters 1b angeordneten Entriegelungshebels derart denkbar, dass der Verriegelungsbolzen zurück in die dafür vorgesehene Bohrung entlang der Verriegelungsachse 53 gezogen wird. Wenn das Verriegelungselement 52 mit dem Verriegelungsbolzen außerhalb der seitlichen Vertiefung 55 angeordnet ist, kann der Dachbehälter 1b mit der Bodenwanne 3b vom Dach des Automobils 2 abgenommen werden.

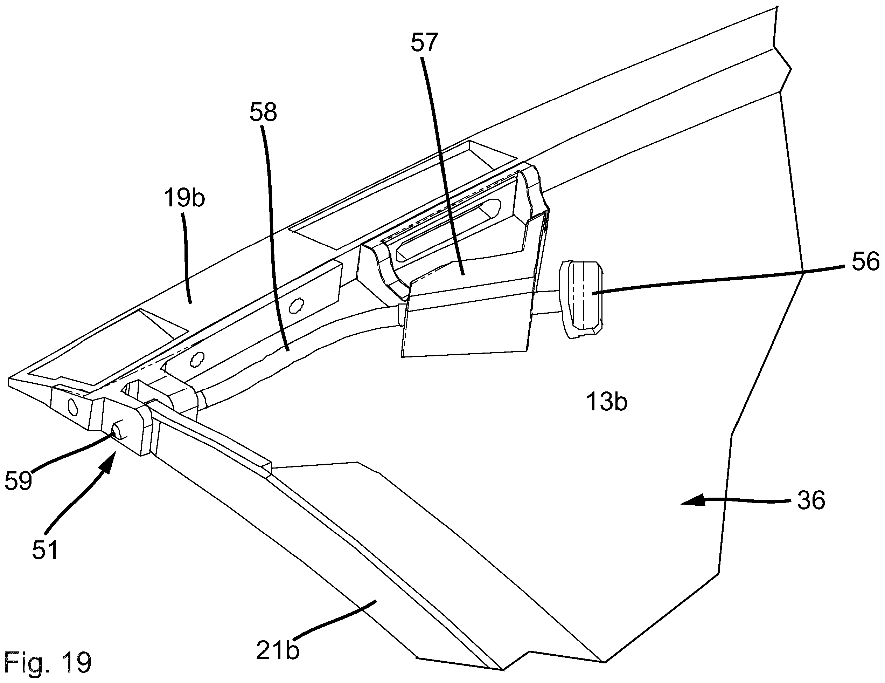

Nachfolgend werden anhand von Fig. 19 Aufbau und Funktion des Verriegelungselements 51 näher erläutert. Das Verriegelungselement 51 weist ein Betätigungselement 56 in Form eines Drehknopfes auf. Das Betätigungselement 56 ist in einer Halteanordnung 57 aufgenommen. In der Halteanordnung 57 ist ein Spindeltrieb angeordnet, der eine flexible Spindel 58 aufweist. Die flexible Spindel 58 ist aus der Halteanordnung 57 herausgeführt und weist an einem der Halteanordnung 57 gegenüberliegenden Ende einen Verriegelungsbolzen 59 auf.

Das Betätigungselement 56 mit der Halteanordnung 57 ist im Innenraum 9 des Dachbehälters 1b angeordnet. Gemäß dem gezeigten Ausführungsbeispiel ist die Halteanordnung 57 einteilig mit der Frontwand 19b ausgeführt. Die Halteanordnung 57 ist beabstandet zu der Frontwand 19b angeordnet. Die flexible Spindel 58 ist entlang einer gekrümmten Bahn angeordnet, so dass der Verriegelungsbolzen 59 benachbart zu der Frontwand 19b angeordnet sein kann. Ein Längsabstand, also ein Abstand entlang der Längsachse 17 von dem Verriegelungsbolzen 59 zu der Frontwand 19b, ist kleiner als ein Längsabstand von der Halteanordnung 57 zu der Frontwand 19b.

Durch eine Betätigung des Betätigungselements 56, also durch Drehen des Drehknopfes, wird der Spindeltrieb aktiviert und die flexible Spindel 58 ausgefahren. Entsprechend wird der Verriegelungsbolzen 59 in einer Richtung quer und insbesondere senkrecht zur Längsachse 17 gegenüber der Längswand 21b nach außen verlagert. Der Verriegelungsbolzen 59 kann, ähnlich wie der Verriegelungsbolzen des Verriegelungselements 52, in die seitliche Vertiefung 55 der Dachreling 34 eingreifen. Im Gegensatz zu dem Verriegelungselement 52 wird der Verriegelungsbolzen 59 kontinuierlich seitlich verlagert durch die Betätigung des Betätigungselements 56. Der Verriegelungsbolzen 59 ist im Wesentlichen eine Verriegelungsschraube, die an die Dachreling 34 angeschraubt wird. Die Verriegelungsschraube legt insbesondere eine Schwenkachse eines Scharniers fest, die die Bodenwanne 3 und die Deckeleinheit 4 verbindet. An dem Scharnier ist die Deckeleinheit 4 mit dem Rahmen 11 schwenkbar an der Bodenwanne 3 angelenkt. Die Scharnierachse entspricht der Verriegelungsachse 53. Die Verriegelungsachse 53 ist im Frontbereich der Bodenwand 13 angeordnet. Durch ein Auf- und Zuschwenken der Deckeleinheit 4 gegenüber der Bodenwanne 3 um die Verriegelungsachse 53 kann der Dachbehälter 1 geöffnet bzw. geschlossen werden.

Alternativ ist es denkbar, dass an der Dachreling 34 seitliche Verriegelungsöffnungen vorgesehen sind, in die der Verriegelungsbolzen 59 oder der Verriegelungsbolzen des Verriegelungselements 52 eingreifen kann.

Die Verriegelungselemente 51, 52 dienen dem Diebstahlschutz. Die Schutzbefestigungen sind insbesondere innenliegend, also im Innenraum 9 des Dachbehälters 1b angeordnet und nur bei geöffnetem Dachbehälter 1b zugänglich.

Alternativ kann zur Entriegelung des Verriegelungselements 52 auch ein Bowdenzugsystem vorgesehen sein, das in Fig. 15 bis 19 nicht dargestellt ist. Ein derartiges Bowdenzugsystem könnte beispielsweise mit einer ebenfalls nicht dargestellten Schlosseinheit verbunden sein, um beispielsweise bei Betätigen des Schlosses, also bei Aufschließen des Dachbehälters 1b, ein Entriegeln des Dachbehälters 1b ermöglichen zu können. Dazu kann eine explizite Schlüsselstellung im Schloss vorgesehen sein.

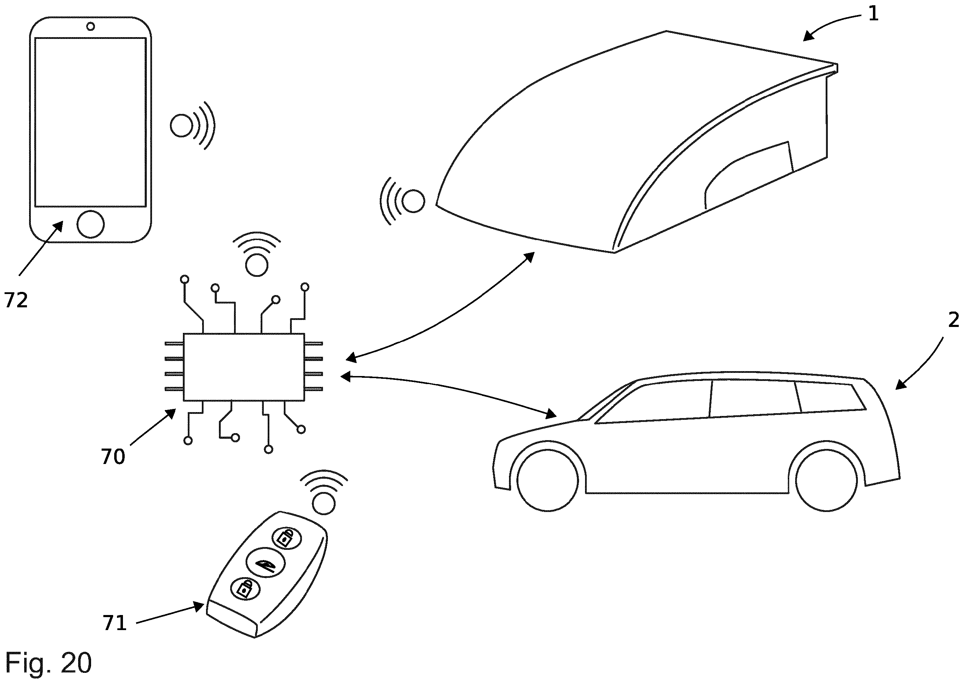

Gemäß einer weiteren, in Fig. 20 gezeigten Alternative ist es möglich, die Entriegelung des Verriegelungselements ferngesteuert zu ermöglichen. Dazu ist ein Empfängermodul 70 vorgesehen, das insbesondere in dem Dachbehälter 1 integriert ist. Das Empfängermodul 70 ist geeignet, drahtlose Signale zu empfangen. Ein drahtloses Signal kann beispielsweise von einem Funkschlüssel 71 oder einem mobilen Endgerät 72, beispielsweise einem Smartphone und/oder einem Tablet-Computer, ausgesendet werden.

Das Empfängermodul 70 ist insbesondere mit einem Antrieb zum automatisierten Öffnen, also Auffalten des Dachbehälters 1, in Signalverbindung. Diese Signalverbindung mit dem Antrieb des Dachbehälters 1 kann kabelgebunden und/oder kabellos erfolgen. Es ist auch denkbar, dass das Empfängermodul 70 im Automobil 2 integriert angeordnet ist. Insbesondere kann ein Empfängermodul 70 in dem Automobil 2 genutzt werden, das ohnehin bereits mit einem Funkschlüssel 71 kommuniziert. Eine Betätigung des Schlosses ist also mittels eines Öffnungselements möglich, das insbesondere als Funkschlüssel 71 oder mobiles Endgerät 72 ausgebildet sein kann. Das dafür erforderliche Empfängermodul 70 kann vorteilhafterweise im Bordcomputer des Automobils 2 integriert oder mit diesem kommunizierend ausgeführt sein.

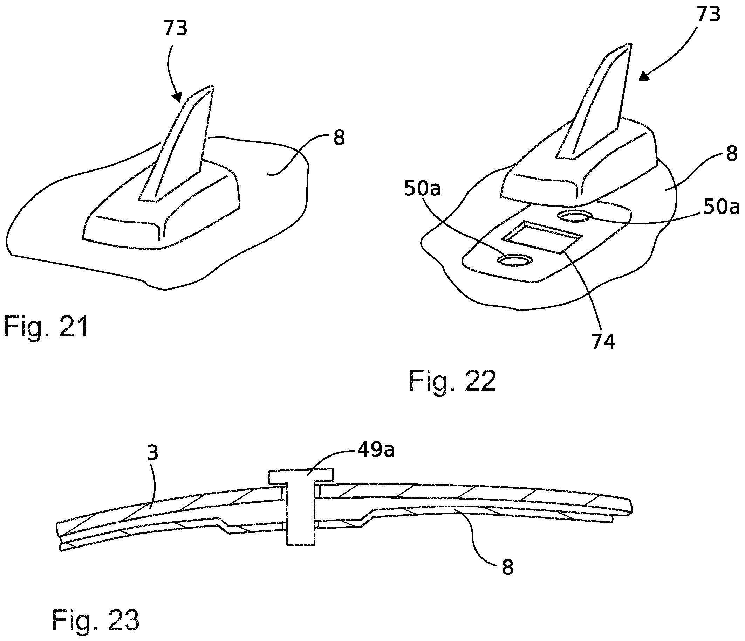

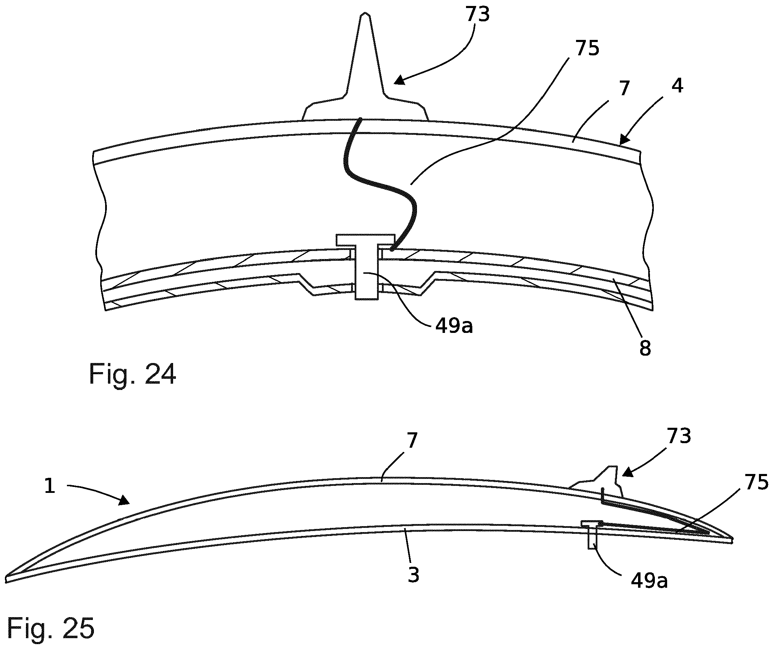

Zusätzlich oder alternativ zu den Koppelstellen 50 gemäß Fig. 14 können weitere Koppelstellen 50a am Automobildach 2 vorgesehen sein. Bei dem in Fig. 21 bis 25 gezeigten Ausführungsbeispiel ist die Automobilantenne 73 am Automobildach 8 angeschraubt. Dazu dienen die in Fig. 23 dargestellten Koppelstellen 50a, die als Gewindebohrungen ausgeführt sind. Die Gewindebohrungen weisen jeweils eine Öffnung mit Innengewinde auf, in die nicht dargestellte Antennenschrauben eingeschraubt werden können. Gemäß Fig. 23 ist zwischen den Koppelstellen 50a eine Durchgangsöffnung am Automobildach 8 vorgesehen. Die Durchgangsöffnung 74 dient beispielsweise zur Durchführung von Kabeln von der Antenne zum Automobil 2, beispielsweise zur Signalübertragung.

Es wurde erkannt, dass es vorteilhaft sein kann, die Koppelstellen 50a der Antenne 73 zur Befestigung des Dachbehälters 1 zu nutzen. Dazu werden die nicht dargestellten Antennenschrauben gelöst und die Antenne 73 vom Automobildach 8 abgenommen. Die Koppelstellen 50a liegen nun frei. In die Koppelstellen 50a kann eine Befestigungsschraube in Form eines Koppelelements 49a eingeschraubt werden, um den Dachbehälter 1 mit einer Bodenwanne 3 am Automobildach zu befestigen.

Um die Funktionalität der Antenne 73 zu gewährleisten, ist diese mit einem Signalkabel 75 mit der Befestigungsschraube 49a unmittelbar verbunden. Um eine im Wesentlichen störungsfreie Nutzung des Innenraums des Dachbehälters 1 zu gewährleisten, ist das Signalkabel 75 an einer Innenseite der Deckeleinheit 4, insbesondere der Deckelwand 7, in den Heckbereich des Dachbehälters 1 geführt und entlang der Bodenwanne 3 von dem Eckbereich zu der Befestigungsschraube 49a.

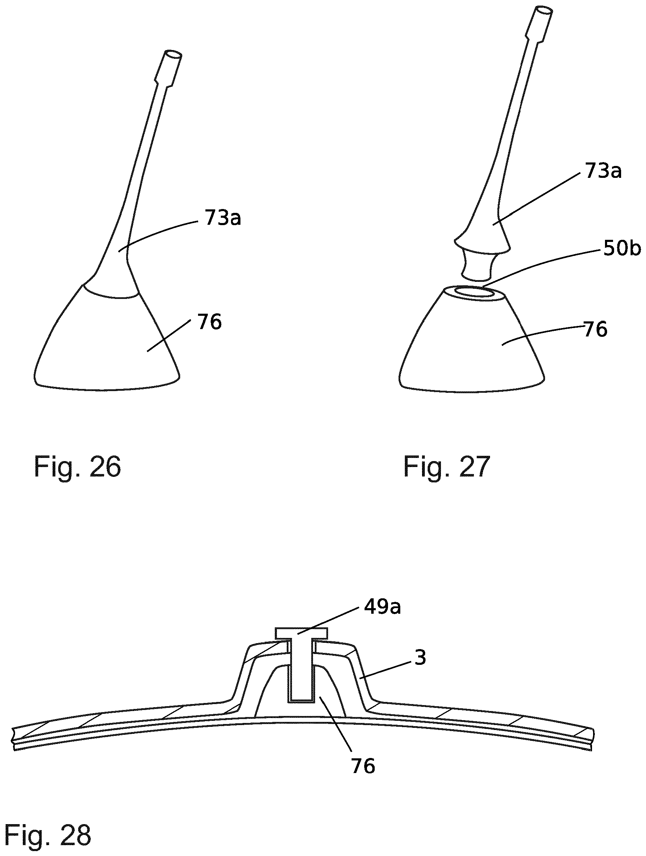

Die Befestigung des Dachbehälters 1 bei einer Antenne 73a gemäß einer weiteren, in Fig. 26 bis 28 gezeigten Ausführungsform erfolgt analog. Der wesentliche Unterschied gegenüber der Antenne 73 besteht darin, dass die Antennenschraube integraler Bestandteil der abnehmbaren Antenne 73a ist.

Die Koppelstelle 50b ist als Gewindebohrung ausgeführt. Die Gewindebohrung ist an einer Oberseite eines Antennensockels 76 ausgeführt. Der Antennensockel ist eine sockelartige Erhebung auf dem Dach 8 des Automobils. Entsprechend ist es erforderlich, dass die Bodenwanne 3 des Dachbehälters 1 eine dem Antennensockel 76 korrespondierende Ausnehmung aufweist. Im Bereich dieser Ausnehmung ist eine Durchgangsöffnung vorgesehen, durch die die Befestigungsschraube 49a zum Befestigen der Bodenwanne 3 an der Koppelstelle 50b genutzt werden kann.

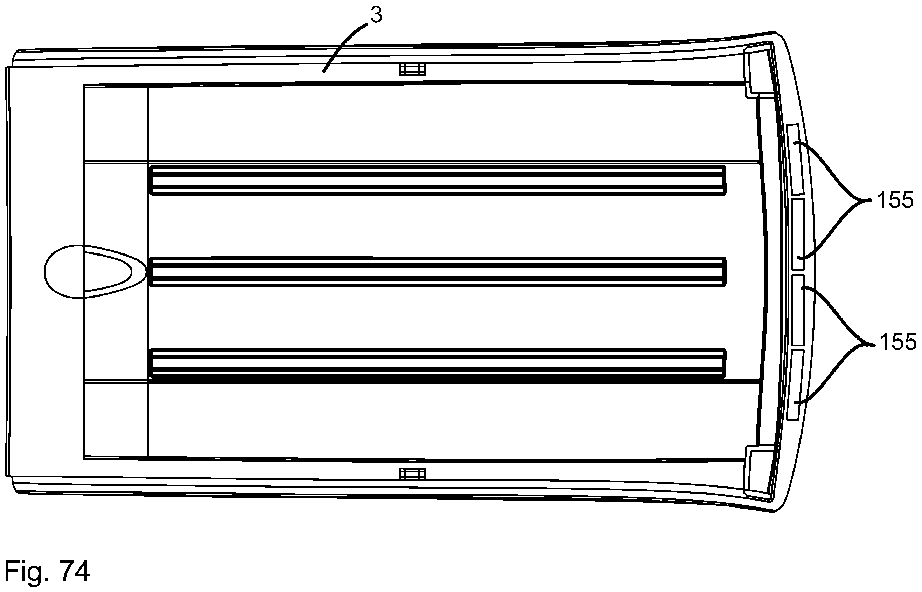

Es ist möglich, den Dachbehälter zur Energiespeicherung und/oder -versorgung von elektronischen Verbrauchern zu nutzen. Beispielsweise können an einer Oberseite des Dachbehälters, insbesondere an einer Oberseite der Deckeleinheit, insbesondere an einer Oberseite des Deckelelements, Solarzellen angebracht sein, um elektrischen Strom zu erzeugen. Dieser elektrische Strom kann beispielsweise mittels einer Energiespeichereinheit, insbesondere eines Akkumulators, gespeichert werden. Die Energiespeichereinheit 155 kann beispielsweise in der Frontwand 19 platzsparend integriert angeordnet sein, wie dies in Fig. 29 und Fig. 74 gezeigt ist. Die Energiespeichereinheit kann im Dachbehälter integriert sein. Es ist auch denkbar, dass ein Ackumulator genutzt wird, der im Automobil ohnehin vorhanden ist. Zu diesem Zweck ist eine Energieübertragungsschnittstelle zwischen dem Dachbehälter und dem Automobil vorgesehen. Die Energieschnittstelle ist insbesondere durch induktive Übertragung ausgeführt.

Insbesondere ist der Dachbehälter derart ausgeführt, dass er energieneutral hinsichtlich des Automobils betreibbar ist. Energieneutral bedeutet, dass sämtliche elektrische Energie, die für mögliche Energieverbraucher des Dachbehälters, wie beispielsweise das Anzeigeelement, das Schloss, das automatisierte Auf- und Zufalten des Dachbehälters, insbesondere die dafür erforderlichen Antriebe, und/oder die Steuereinheit für das autonome Fahren, mittels der elektrischen Energie versorgt werden, die von den Solarzellen erzeugt und/oder in der Speichereinheit zwischengespeichert werden. Die elektronischen Verbraucher sind insbesondere unmittelbar mit den Solarzellen und/oder mit der Speichereinheit verbunden.

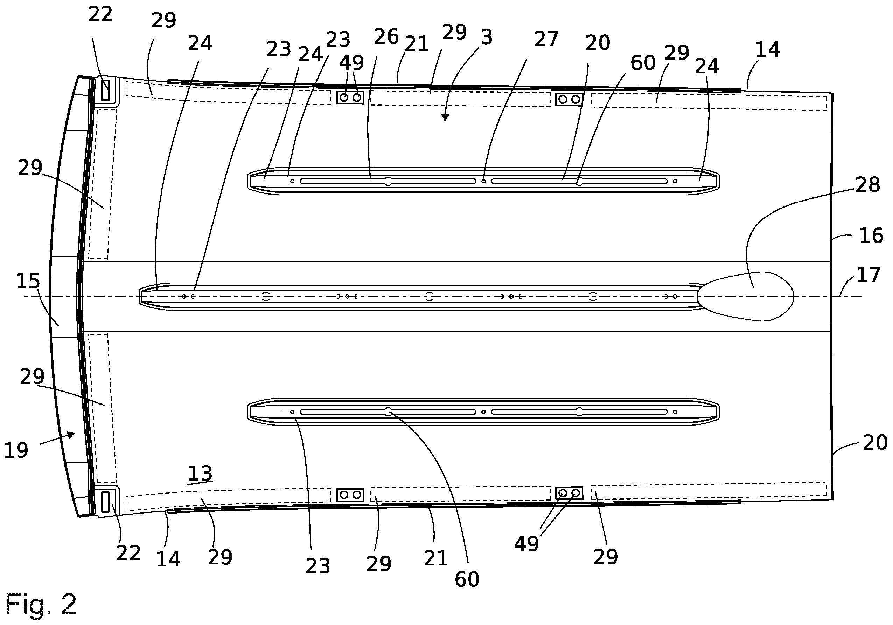

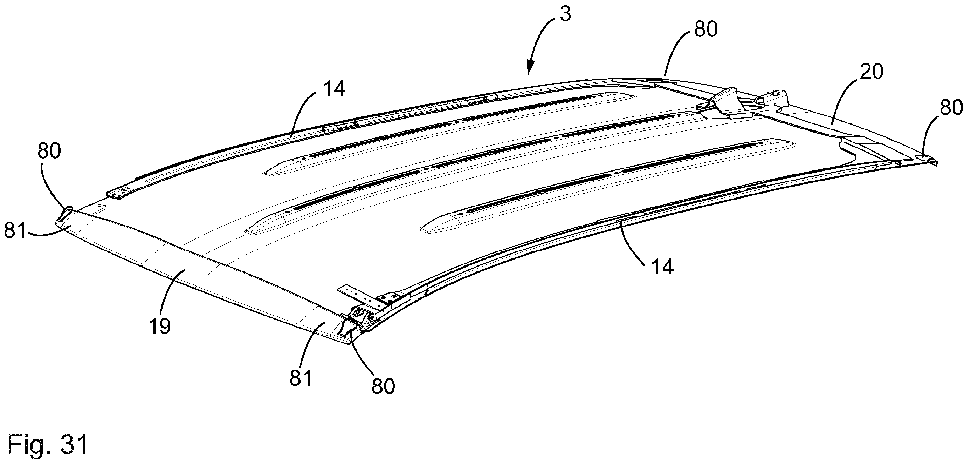

Nachfolgend wird anhand von Fig. 31 eine weitere Ausführungsform einer Bodenwanne 3 beschrieben. Die Bodenwanne 3 entspricht im Wesentlichen dem in Fig. 2 gezeigten.

Die Bodenwanne 3 weist vier Aushebelaschen 80 auf, die jeweils in den Eckenbereichen der Bodenwanne 3 um eine Schwenkachse 81 schwenkbar angelenkt sind. Jeweils zwei Aushebelaschen 80 sind an der Frontwand 19 bzw. an der Heckwand 20, jeweils in einem seitlichen Außenbereich angeordnet. Es können auch mehr oder weniger als vier Aushebelaschen 80 vorgesehen sein. Die Aushebelaschen können auch im Bereich der Längskanten 14 der Bodenwanne 3 angeordnet sein.

Die Aushebelaschen 80 sind im Wesentlichen ringförmig ausgeführt. Die Aushebelaschen 80 können einen Greifabschnitt aufweisen, der das Greifen der Aushebelaschen 80 mit zwei oder mehr Fingern vereinfacht. Die Aushebelaschen 80 können im Bereich des Greifabschnitts gepolstert ausgeführt sein, damit ein Nutzer bequem den Greifabschnitt der Aushebelaschen 80 greifen und daran ziehen kann. In Fig. 31 sind die Aushebelaschen 80 in einer an der Bodenwanne 3 anliegenden Position angeordnet. In dieser Position sind die Aushebelaschen inaktiv und platzsparend an der Bodenwanne 3 angeordnet.

Die Aushebelaschen 80 dienen zum erleichterten Anheben der Bodenwanne 3, also um die Bodenwanne 3 vom Dach des Automobils zu entfernen. Dazu können die Aushebelaschen 80 um die jeweilige Schwenkachse 81 der Bodenwanne 3 weggeklappt werden, bis sie im Wesentlichen senkrecht zu einer von dem Bodenwanne 3 gebildeten Ebene angeordnet sind. In dieser Anordnung kann ein Nutzer der Bodenwanne 3 und insbesondere den Dachbehälter 1 an den Aushebelaschen 80 vom Automobildach abheben. Der Kraftaufwand zum Entfernen der Bodenwanne 3 vom Automobildach ist für einen Nutzer reduziert. Die Handhabung ist vereinfacht. Die Gefahr einer unbeabsichtigten Beschädigung des Automobildachs beim Abnehmen des Dachbehälters ist reduziert.

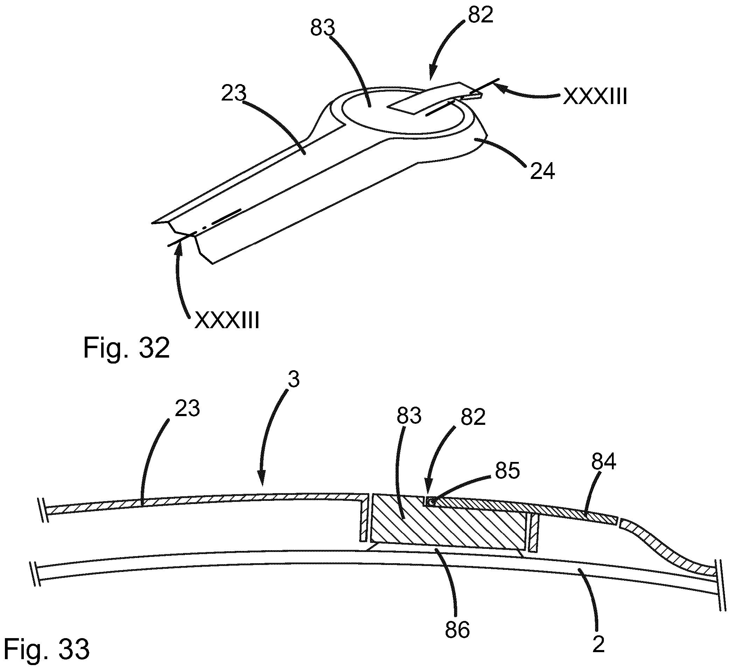

Nachfolgend wird anhand von Fig. 32 und Fig. 33 eine weitere Ausführungsform einer Bodenwanne 3 näher erläutert. Bei der Bodenwanne 3 ist in mindestens einem der Profilelemente 23 ein Saugnapfelement 82 integriert. Das Saugnapfelement 82 ist Bestandteil der Befestigungseinheit, mittels der die Bodenwanne 3 am Automobildach 2 befestigbar ist. Die Befestigungseinheit kann insbesondere ausschließlich Saugnapfelemente, insbesondere mindestens ein Saugnapfelement 82 aufweisen. Es ist denkbar, dass Saugnapfelemente 82 mit anderen Koppelelementen, beispielsweise einer Magnetbefestigung, kombiniert werden.

Der wesentliche Vorteil einer Saugnapfbefestigung besteht darin, dass eine magnetische Haltekraft entbehrlich ist. Die Saugnapfbefestigung ist insbesondere unabhängig von dem Material. Insbesondere kann die Saugnapfbefestigung mit den Saugnapfelementen 82 an nichtmetallischen, beispielsweise aus Kunststoffmaterialien, insbesondere faserverstärkte Kunststoffmaterialien, insbesondere kohlefaserverstärkte Kunststoffmaterialien, verwendet werden.

Das Saugnapfelement 82 ist insbesondere benachbart oder an einem Auslaufbereich 24 des Profilelements 23 angeordnet. Entlang eines Profilelements 23 können auch mehr als ein Saugnapfelement 82, beispielsweise zwei Saugnapfelemente 82 angeordnet sein. Die Saugnapfelemente 82 können an verschiedenen Profilelementen 23 der Bodenwanne 3 angeordnet sein.

Das Saugnapfelement 82 weist einen hohlzylindrischen Rahmen 83 auf, der mit seiner Zylinderlängsachse im Wesentlichen senkrecht zum Automobildach 2 orientiert ist. An einem dem Automobildach 2 abgewandten oberen Ende des Rahmens ist ein Betätigungshebel 84 um eine Betätigungsachse 85 schwenkbar angelenkt. Mit dem Betätigungshebel 84 unmittelbar verbunden ist ein Saugnapfkegel 86, der an der unteren, der Betätigungsachse 85 gegenüberliegenden Stirnseite des Rahmens 83 übersteht.

In der in Fig. 33 gezeigten Anordnung ist der Betätigungshebel 84 in der Verriegelungsposition. In dieser Position ist der Saugnapfkegel 82 aktiviert, dass der Saugnapfkegel mit seiner kreisförmigen Stirnfläche am Automobildach 2 mit Unterdruck im Saugnapfkegel 86 angepresst ist. In dieser Anordnung ist das Saugnapfelement 82 am Automobildach 2 und damit das Profilelement 23 und die Bodenwanne 3 gehalten. Zum Lösen der Verriegelung wird der Betätigungshebel 84 gemäß Fig. 33 im Gegenuhrzeigersinn um die Betätigungsachse 85 angehoben. Dadurch wird der Unterdruck im Saugnapfkegel 86 freigegeben und die Bodenwanne kann vom Automobildach 2 abgehoben werden.

Es ist auch denkbar, die Saugnapfelemente 82 an anderen Stellen der Bodenwanne 3 anzuordnen. Die Anordnung bzw. die Integration in den Profilelementen 23 ist besonders platzsparend und ästhetisch ansprechend.

Der Dachbehälter 1 kann vorteilhaft aus Leichtbaumaterialien, insbesondere Leichtbaumetallen und/oder nichtmetallischen Leichtbau-Werkstoffen wie Kunststoffen, insbesondere faserverstärkten Kunststoffen und insbesondere kohlefaserverstärkte und/oder glasfaserverstärkten Kunststoffen, hergestellt sein.

Gemäß einem weiteren, in den Figuren nicht dargestellten Ausführungsbeispiel kann die Befestigungseinheit einen oder mehrere Klebestreifen aufweisen, die insbesondere wieder lösbar ausgeführt sind. Derartige Klebestreifen sind aus anderen Anwendungsbereichen, insbesondere im Haushalt bekannt. Derartige Klebestreifen können unmittelbar zwischen der Unterseite der Bodenwanne 3 und dem Automobildach 2 angeordnet sein. Die Klebestreifen können großflächig und insbesondere entlang der äußeren Kontur des Automobildachs an der Bodenwanne 3 angeordnet sein. Überraschend wurde erkannt, dass derartige Klebestreifen eine ausreichende Befestigung des Dachbehälters 1 am Automobildach 2 gewährleisten, insbesondere wenn der Dachbehälter 1 aus einem Leichtbaumaterial hergestellt ist.

Gemäß einem weiteren, nicht in den Figuren dargestellten Ausführungsbeispiel kann die Bodenwanne 3 eine Wölbung aufweisen, die größer ist als die Wölbung des Automobildachs 2. Zwischen einer Unterseite der Bodenwanne 3 und dem Automobildach 2 wird ein Hohlraum gebildet. Die Wölbung ist insbesondere in Querrichtung, also im Wesentlichen parallel zu der Frontkante 15 und/oder der Heckkante 16 ausgeführt. Dadurch, dass der Bodenwanne 3 überwölbt gegenüber dem Automobildach 2 ausgeführt ist, ist die Bodenwanne 3 mechanisch vorgespannt am Automobildach 2 angeordnet. Insbesondere ist die Bodenwanne 3 nicht vollflächig überwölbt ausgeführt. Die Überwölbung ist insbesondere bereichsweise vorgesehen. Insbesondere ist eine Überwölbung in den Bereichen von Querstreben des Fahrzeugdachs 2 entbehrlich. Derartige Querstreben sind unterhalb der Außenhaut des Automobildachs 2 zur Querverbindung der jeweils gegenüberliegenden A-, B- und/oder der C-Säulen des Automobils vorgesehen.

Eine mechanische Verankerung der Bodenwanne 2 an der Dachreling 34 ist verbessert. Durch die überwölbte Ausführung ist eine Krafteinleitung der Bodenwanne 3 auf das Automobildach 2, insbesondere auf die Dachreling 34, gewährleistet. Die Aufnahme von Axialkräften, also von Kräften, die parallel zur Fahrrichtung des Automobils wirken und die beispielsweise durch einen Bremsvorgang, insbesondere einen unbeabsichtigten Aufprall, verursacht werden, werden zuverlässig in die Dachreling 34 von dem Dachbehälter 1 übertragen. Die überwölbte Bodenwanne kann zusätzliche Koppelelemente aufweisen. Es ist auch denkbar, dass durch die überwölbte Ausführung, die mechanische Vorspannung als alleinige Befestigung des Dachbehälters 1 am Automobildach 2 dient.

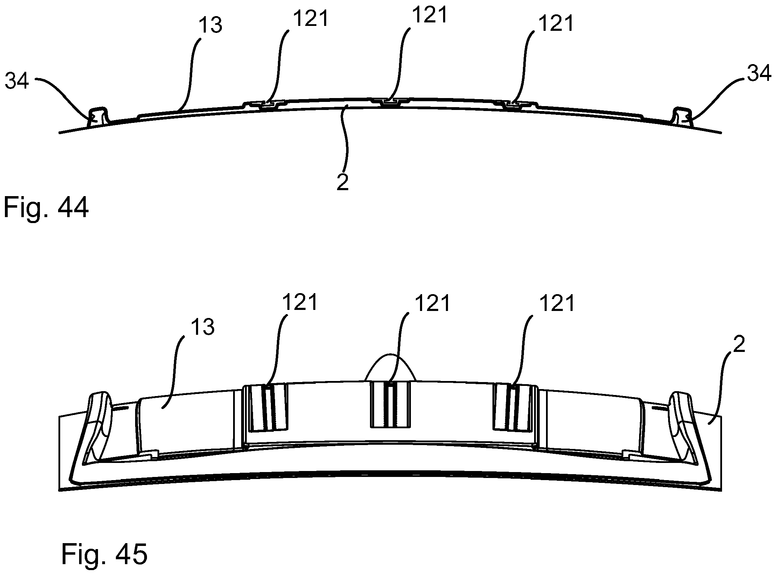

Eine alternative Ausgestaltung einer überwölbten Bodenwand 13 ist in Fig. 44 und Fig. 45 dargestellt. An der Innenseite der Bodenwand 13 sind Befestigungselemente 121 in Form von längsorientierten Schienen, sogenannten Airline-Schienen vorgesehen. Die Airline-Schienen weisen eine im Querschnitt T-förmige Befestigungsnut auf, die entlang der Längsrichtung der Schienen 121 eine Rasterung aufweist.

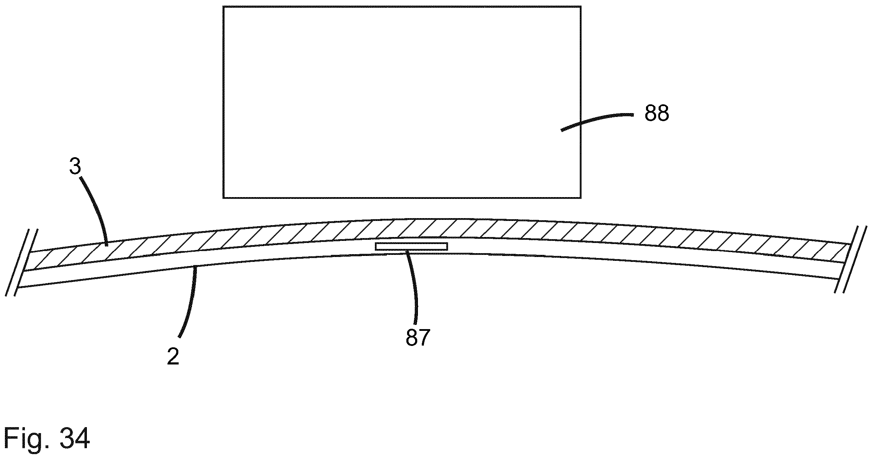

Anhand von Fig. 34 wird eine weitere Ausführungsform des Dachbehälters 1 erläutert. An einer Unterseite der Bodenwanne 3 ist ein Ladungssensor 87 angeordnet, der mit einer nicht dargestellten Steuerungseinheit in Signalverbindung steht. Insbesondere ist der Ladungssensor 87 drahtlos mit der Steuerungseinheit verbunden.

Der Ladungssensor 87 dient zur Erfassung eines im Dachbehälter, insbesondere an der Bodenwanne 3 befestigten Ladeguts 88. Für die Erkennung der Ladung kann der Ladungssensor auf verschiedenen physikalischen Messprinzipien basieren, beispielsweise als Gewichtssensor und/oder kapazitiver Sensor. Der Ladungssensor 87 ist gemäß dem gezeigten Ausführungsbeispiel zwischen der Unterseite der Bodenwanne 3 und der Oberseite des Automobildaches 2 angeordnet. Der Ladungssensor kann im Automobildach 2 integriert sein. Der Ladungssensor kann auch an einer Innenseite des Dachbehälters 1 angeordnet sein. Beispielsweise kann der Ladungssensor 87 in dem von einem Profilelement 23 gebildeten Hohlraum integriert sein. Es können auch mehrere Ladungssensoren 87 vorgesehen sein.

Der Ladungssensor 87 kann insbesondere als drucksensitive Folie ausgeführt sein, die eine flächige, insbesondere vollflächige Ladungsüberwachung im Dachbehälter 1 ermöglicht.

Der Ladungssensor 87 dient zur Erfassung, ob ein Ladegut 88 im Dachbehälter 1 angeordnet ist. In diesem Fall kann der Ladungssensor 87 ein Signal an die Steuerungseinheit übermitteln. Zusätzlich können Verriegelungselemente vorgesehen sein, um zu erfassen, ob das Ladegut 88 an der Bodenwanne 3 verriegelt oder gesichert ist. Falls im Dachbehälter 1 ungesichertes Ladegut 88 angeordnet ist, kann der Automobilfahrer ein entsprechendes Signal von der Steuerungseinheit, beispielsweise auf dem Bordcomputer erhalten. Das Risiko des Transports ungesicherter Ladung im Dachbehälter ist reduziert. Der Ladungssensor 87 kann auch dazu verwendet werden, um eine gleichmäßige Beladung des Dachbehälters 1 zu ermöglichen. Dazu ist vorteilhaft, mehrere entlang der Bodenwanne 3 verteilt angeordnete Ladungssensoren individuell auszulesen, um ein Beladeprofil entlang der Fläche der Bodenwanne 3 zu erstellen und zu analysieren.

Der Ladungssensor 87 kann auch dazu verwendet werden, um eine Überladung, also eine Überschreitung eines maximalen Zuladegewichts, zu verhindern. Der eine oder die mehreren Ladungssensoren 87 können eine Gesamtbeladung erfassen und mit einem in der Steuerungseinheit hinterlegten Grenzwert vergleichen. Bei Überschreiten des Grenzwerts kann eine Warnung, beispielsweise an den Bordcomputer des Automobils, übermittelt werden.

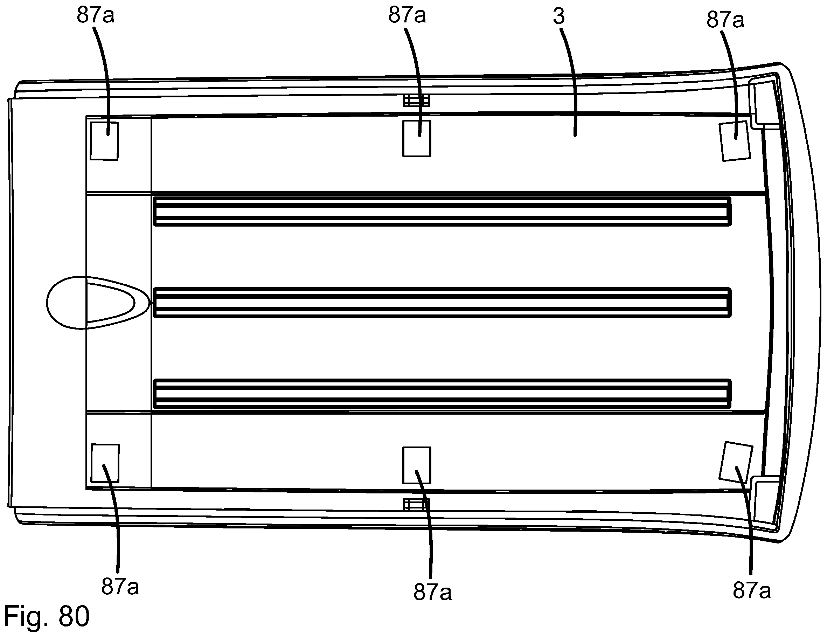

In dem weiteren Ausführungsbeispiel gemäß Fig. 80 sind an der Bodenwanne 3 insgesamt sechs Ladungssensoren 87a vorgesehen. Die Ladungssensoren ermöglichen die Erfassung von Ladung, insbesondere in Abhängigkeit deren Positionierung innerhalb der Bodenwanne 3. Die Ladungssensoren können auch als Wiegesensoren, insbesondere zur Erfassung des Ladungsgewichts verwendet werden.

Sämtliche elektronische Komponenten des Dachbehälters 1 können zur Energieversorgung mit einer Batterie ausgeführt sein. Zusätzlich oder alternativ zu der Batterie ist es denkbar, dass eine Transmissionseinheit vorgesehen ist, die Signale von einer externen Sendeeinheit empfängt. Die von der externen Sendeeinheit empfangenen Signale können zumindest teilweise mittels einer Induktionsvorrichtung zur Energieumwandlung und Energiespeicherung beispielsweise in einem Kondensator genutzt werden. Dadurch ist es möglich, die elektronischen Komponenten des Dachbehälters 1, beispielsweise den Ladungssensor 87, mittels Induktion Energie zu übertragen und diese Energie zum Betreiben des Ladungssensors und/oder anderer Komponenten in dem Dachbehälter 1 zu nutzen. Eine separate, eigenständige Energiequelle für den Dachbehälter 1 ist dann entbehrlich.

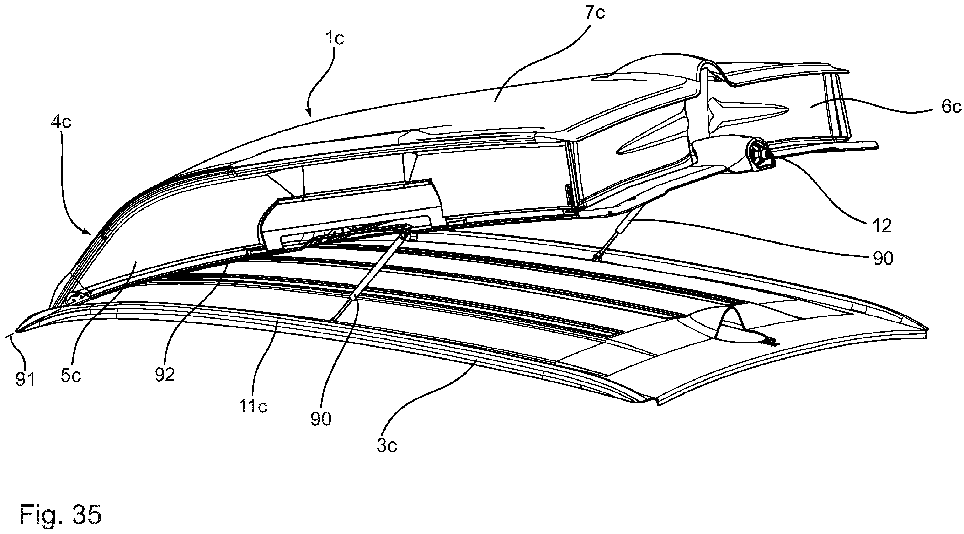

Im Folgenden wird unter Bezugnahme auf Fig. 35 bis 37 ein weiteres Ausführungsbeispiel der Erfindung beschrieben. Konstruktiv identische Teile erhalten dieselben Bezugszeichen, wie bei den vorherigen Ausführungsbeispielen, auf deren Beschreibung hiermit verwiesen wird. Konstruktiv unterschiedliche, funktionell gleichartige Teile erhalten dieselben Bezugszeichen mit einem nachgestellten c.

Der Dachbehälter 1c unterscheidet sich gemäß dem in Fig. 1 bis 4 gezeigten Dachbehälter im Wesentlichen dadurch, dass zum Öffnen der Deckeleinheit 4c mit der Deckelwand 7c seitlich jeweils ein Kraftspeicherelement 90 angeordnet ist. Das Kraftspeicherelement 90 ist gemäß dem gezeigten Ausführungsbeispiel als Gasdruckfeder ausgeführt. Ein erstes Ende des Kraftspeicherelements ist an der Bodenwanne 3c und insbesondere an einer Innenseite des Rahmens 11c angeordnet. Ein zweites, dem ersten Ende gegenüberliegendes Ende des Kraftspeicherelements 90 ist an einer Seitenwand 5c, insbesondere an einer Unterseite 92 der Seitenwand 5c, schwenkbar angelenkt.

Das Kraftspeicherelement 90 ist derart ausgeführt, dass ein manuelles Aufschwenken der Deckeleinheit 4c gegenüber der Bodenwanne 3c bezüglich einer Öffhungs-Schwenkachse 91 möglich ist und insbesondere unterstützt wird. Die Öffhungs-Schwenkachse 91 ist im Wesentlichen entlang der Frontkante 15 angeordnet. Das Kraftspeicherelement 90 verhindert ein unerwünschtes Zufallen des Dachbehälters infolge des Eigengewichts der Deckeleinheit 3c.

Das Kraftspeicherelement 90 kann auch als angetriebene Einheit ausgeführt sein, insbesondere in Form eines elektrisch angetriebenen Spindeltriebs. Beim Öffnen des Dachbehälters 1c, das manuell oder elektrisch gesteuert, insbesondere funkgesteuert, über das Schloss 12 erfolgen kann, wird der elektrisch angetriebene Spindeltrieb aktiviert und damit die Öffnungsbewegung der Deckeleinheit 4c gegenüber der Bodenwanne 3c elektrisch angetrieben ausgeführt.

An der Rückwand 6c ist das Schloss 12 angeordnet. Das Schloss 12 dient insbesondere zum Verriegeln des Dachbehälters 1c in der geschlossenen Anordnung. In der geschlossenen Anordnung ist die Deckeleinheit 4c an der Bodenwanne 3c verriegelt. Ein Verschwenken um die Öffnungs-Schwenkachse 91 ist dann nicht möglich.

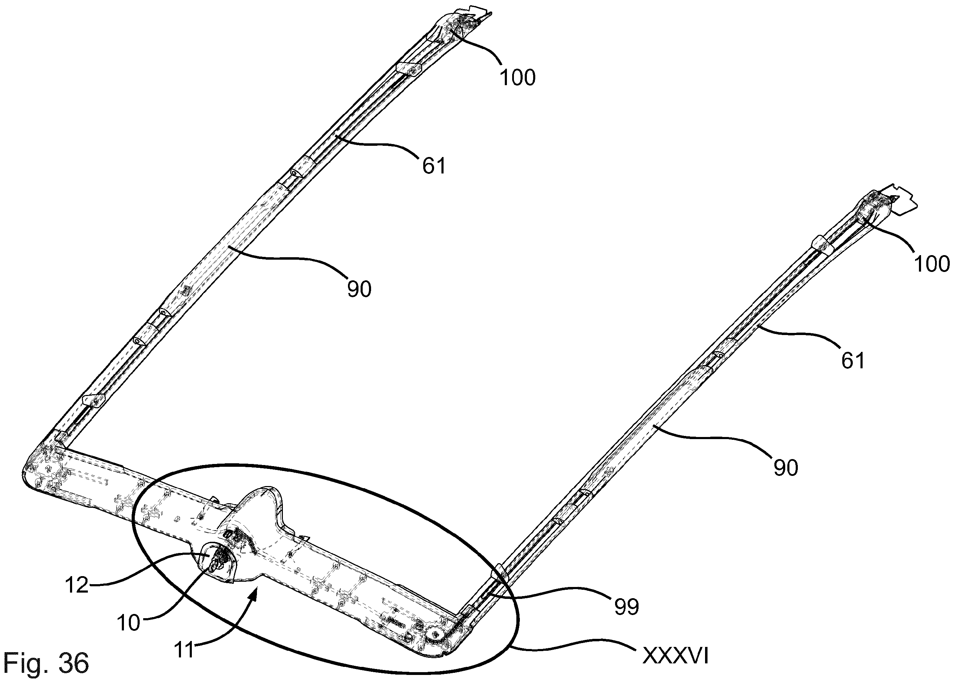

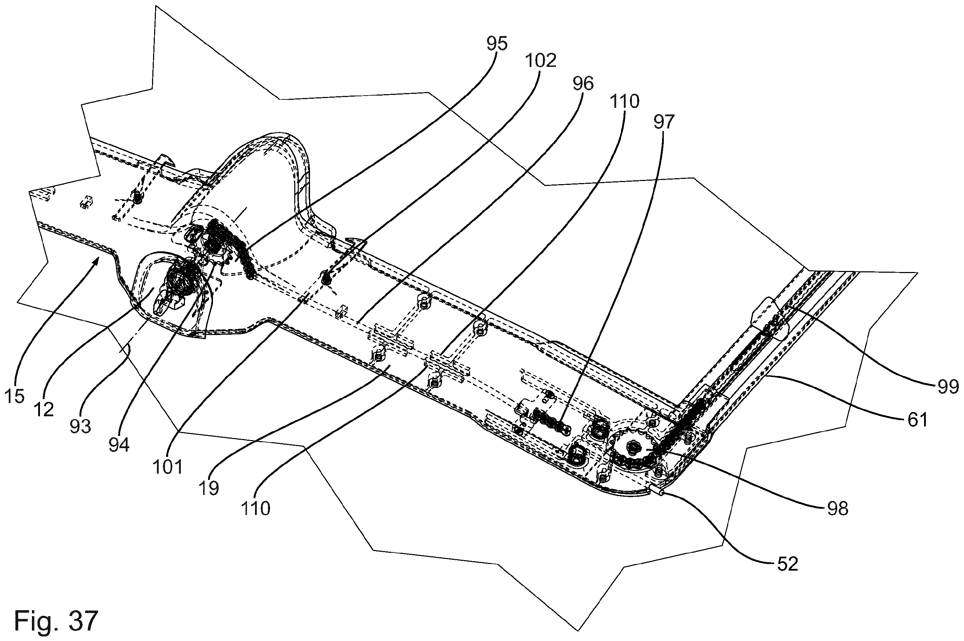

Die Verriegelungsfunktion des Schlosses 12 wird im Folgenden anhand der Fig. 36 und 37 näher erläutert. Beim Aktivieren des Schlosses erfolgt eine Drehbewegung um eine Schloss-Drehachse 93. Konzentrisch zur Schloss-Drehachse 93 ist ein Antriebszahnrad 94 drehfest mit dem Schloss 12 verbunden. Mit dem Antriebszahnrad 94 wirkt eine Antriebskette 95 zusammen, die mit einer Steuerstange 96 verbunden ist. An einem der Antriebs-Kette 95 gegenüberliegenden Ende ist die Steuerstange 96 mit einer Umlenkkette 97 verbunden, die in ein Umlenk-Zahnrad 98 zur geführten Umlenkung der Steuerkette 97 eingreift. Das Umlenk-Zahnrad 98 bewirkt eine 90°-Umlenkung der Umlenk-Kette 97. An einem der Steuerstange 96 gegenüberliegenden Ende ist die Umlenk-Kette 97 mit einer Verriegelungsstange 99 verbunden. Die Verriegelungsstange 99 erstreckt sich im Wesentlichen entlang der seitlichen Längselemente 61 des Rahmens 11c. An der Verriegelungsstange 99 ist mindestens ein Verriegelungsklotz 100 befestigt, der eine der Umlenk-Kette 97 zugewandte Schräge aufweist. An der Verriegelungsstange 99 können zusätzliche Verriegelungsklötze vorgesehen sein. Zusätzlich kann die Verriegelungsstange 99 zur Betätigung von quer ausfahrenden Verriegelungselementen, wie beispielsweise in Fig. 15 dargestellt, gekoppelt sein.

Die Steuerstange 96 wirkt mit einem federbelasteten Hakenelement 101 zusammen. Das Hakenelement 101 ist mittels eines Federelements, insbesondere in Form einer Torsionsfeder 102 derart federnd belastet, dass das Hakenelement 101 in einem unbetätigten Zustand in eine Verriegelungsposition gedrückt wird.

Bei Betätigung des Schlosses 12 wird das Schloss 12 um die Schloss-Drehachse 93 und damit das Antriebs-Zahnrad 94 gedreht. Diese Drehbewegung wird von dem Antriebs-Zahnrad 94 auf die Antriebs-Kette 95 und damit auf die Steuerstange 96 übertragen. Durch die Bewegung der Steuerstange 96 wird das Hakenelement 101 entgegen der Federkraft des Federelements 102 aus der Verriegelungsposition bewegt, also entriegelt. Die Verlagerung der Steuerstange 96 wird auf die Umlenk-Kette 97 und die Verriegelungs-Stange 99 übertragen. Die Verlagerung der Steuerstange 96 bewirkt eine Verlagerung der Verriegelungs-Stange 99 und damit der Verriegelungsklötze 100 in eine Entriegelungsposition. In dieser Position ist die Deckeleinheit 4c gegenüber der Bodenwanne 3c freigegeben, also entriegelt. Ein Öffnen des Dachbehälters 1c ist möglich.

Das Verriegeln des Dachbehälters 1c erfolgt in entsprechend umgekehrter Betätigungsrichtung des Schlosses 12 und der damit gekoppelten Komponenten.

Die Steuerstange 96 ist entlang der Frontkante 15 mittels Führungselementen 110 seitlich geführt. Die Führungselemente 110 sind insbesondere an der Frontwand 19 integriert.

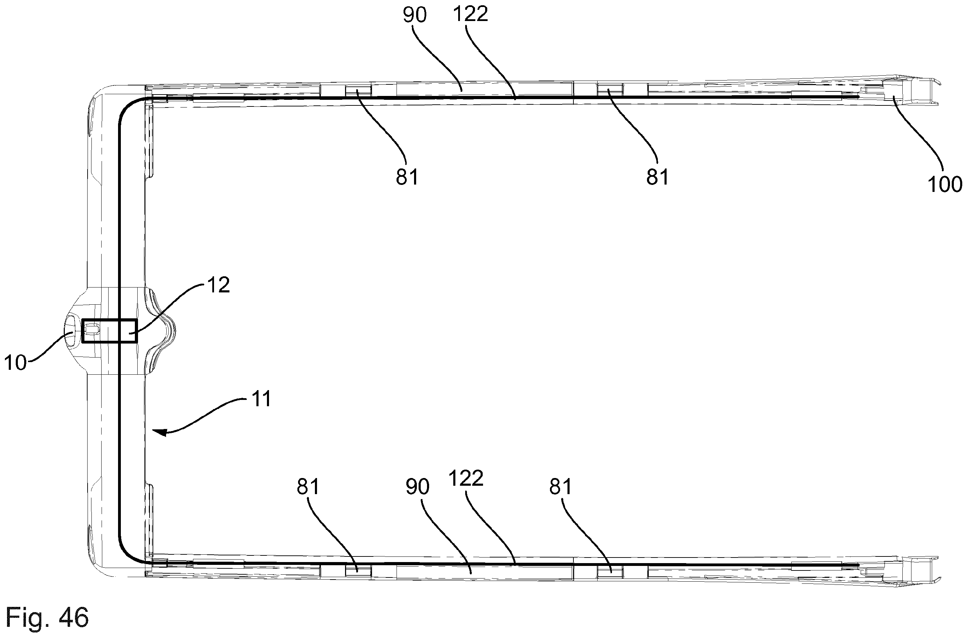

Gemäß einem in Fig. 46 dargestellten Ausführungsbeispiel kann die Verriegelungsfunktion des Schlosses 12 auch durch einen Bowdenzug 122 erfolgen. Die Verriegelungsfunktion ist analog. Durch die Verwendung des Bowdenzugs entfallen die Steuerkette und insbesondere die mechanischen Kraftübertragungselemente, wie Zahnräder und Steuerstangen. Der Aufbau der Verriegelung mittels Bowdenzug ist unkompliziert, unaufwändig und deshalb kostensparend. Durch die Verwendung des Bowdenzugs kann die Anzahl der verwendeten Komponenten reduziert werden. Der Bowdenzug ist im Vergleich zu der in Fig. 35 bis 37 gezeigten Ausführungsform leicht bauend ausgeführt.

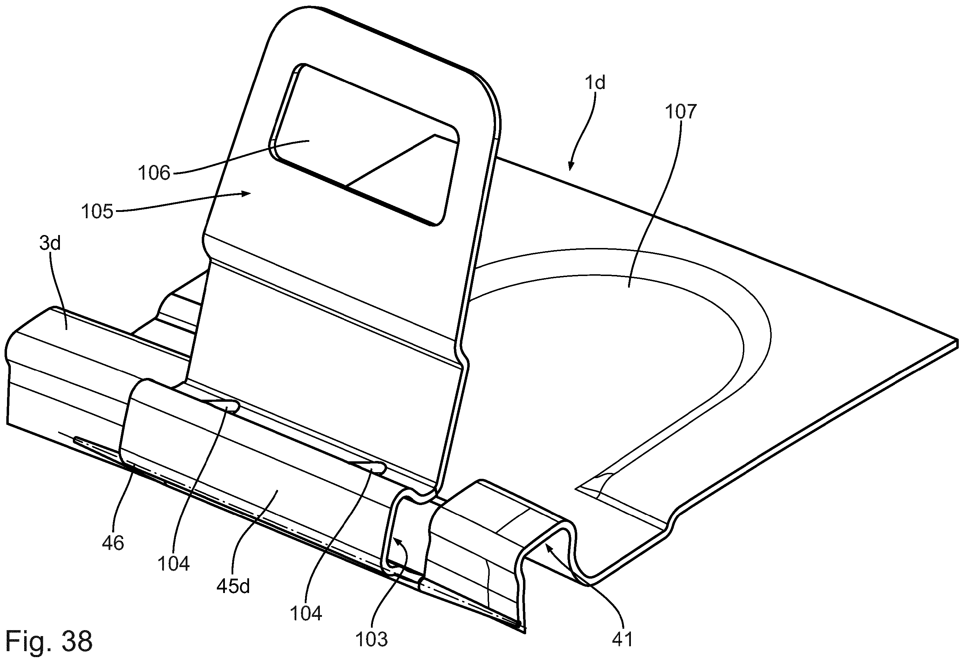

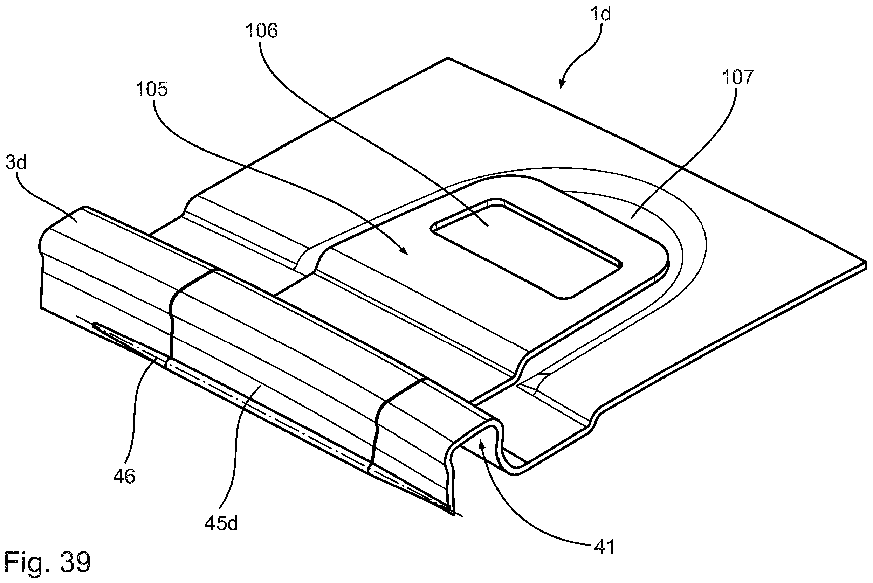

Im Folgenden wird unter Bezugnahme auf Fig. 38 und 39 ein weiteres Ausführungsbeispiel der Erfindung beschrieben. Konstruktiv identische Teile erhalten dieselben Bezugszeichen, wie bei den vorherigen Ausführungsbeispielen, auf deren Beschreibung hiermit verwiesen wird. Konstruktiv unterschiedliche, jedoch funktionell gleichartige erhalten dieselben Bezugszeichen mit einem nachgestellten d.

Bei der Ausführungsform weist die Bodenwanne 3d einen integrierten Rasthebel 45d auf. Der Rasthebel 45d ist um eine Schwenkachse 46 schwenkbar an der Bodenwanne angelenkt. Die Bodenwanne ist mit einer Profilgeometrie 41 ausgeführt, die der Außenkontur der Dachreling 34 entspricht. Die Schwenkachse 46 ist im Wesentlichen parallel zur Längsrichtung der Dachreling 34 orientiert.

Der Rasthebel 45d weist einen Verrastabschnitt 103 auf, der entsprechend der Profilgeometrie der Bodenwanne 3s ausgeführt ist. Der Verrastabschnitt kann ein oder mehrere Aussteifungselemente 104 aufweisen, die zur Aussteifung des Verrastabschnitts 103 dienen.

In der entriegelten Position gemäß Fig. 38 ist der Rasthebel 45d mit dem Verrastabschnitt 103 beabstandet von der Reling 34 angeordnet. In der entriegelten Position greift der Rasthebel 45d nicht verrastend an der Dachreling 34 an.

Der Rasthebel 45d weist zudem einen Betätigungsabschnitt 105 auf mit einem Griffloch 106. Der Betätigungsabschnitt 105, insbesondere das Griffloch 106, ist derart an dem Rasthebel 45d ausgeführt, dass in der in Fig. 39 gezeigten, verriegelten Anordnung des Rasthebels 45d der Betätigungsabschnitt 105 und insbesondere das Griffloch 106 mit Abstand bezüglich der Bodenwanne 3d angeordnet ist. Dazu weist die Bodenwanne 3d eine muldenförmige Vertiefung 107 auf, in die der Rasthebel 45d eingelegt werden kann. In der verriegelten Anordnung des Rasthebels 45d fügt sich dieser in die Außenkontur der Bodenwanne 3d ein. Der Rasthebel 45d steht einer Verwendung des Dachbehälters 1d und insbesondere der Bodenwanne 3d nicht im Wege. Deren Funktionalität ist durch den Rasthebel 45d nicht eingeschränkt.

Zum Verrasten der Bodenwanne 3d auf dem Automobildach wird der Rasthebel 45d ausgehend von der entriegelten Anordnung in Fig. 38 um die Schwenkachse 46 geschwenkt, bis der Rasthebel 45d mit dem Verrastabschnitt 103 auf die Dachreling 34 aufgerastet ist. Durch die Aussteifungselemente 104 ist eine straffe Verbindung zwischen dem Rasthebel 45d und der Dachreling 34 insbesondere formschlüssig gegeben. Ein Entriegeln erfolgt dadurch, dass eine Bedienperson in die Griffmulde 106 des Bedienabschnitts 105 eingreifen und den Rasthebel 45d um die Schwenkachse 46 aufschwenken kann. Dadurch, dass der Rasthebel 45d aus einem flexiblen Material, wie beispielsweise Kunststoff, hergestellt ist und zudem eine Strukturflexibilität aufgrund der dünnwandigen Ausführung des Verrastabschnitts 103 aufweist, ist ein mehrmaliges Auf- und Zuschwenken und ein zuverlässiges Verrasten des Anordnen des Rasthebels 45d an der Dachreling 34 gewährleistet. Die Aussteifungselemente 104 verhindern ein unbeabsichtigtes Öffnen des Rasthebels 45d.

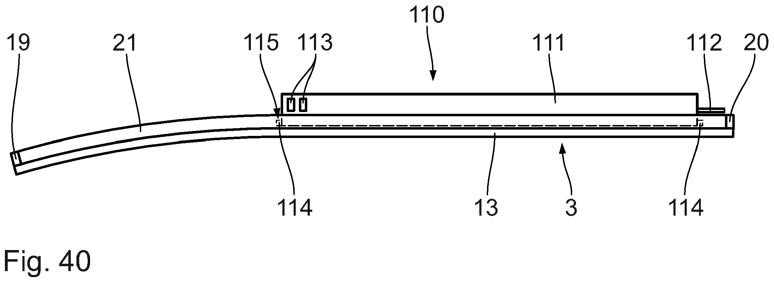

Im Folgenden wird unter Bezugnahme auf Fig. 40 eine Vorrichtung 110 näher erläutert. Die Vorrichtung 110 umfasst die Bodenwanne 3 mit der Bodenwand 13, der Frontwand 19, der Heckwand 20 und den beiden, jeweils zwischen der Frontwand 19 und der Heckwand 20 angeordneten Längswänden 21.

An der Bodenwanne 3 kann ein nicht dargestelltes Deckelelement angebracht sein, so dass die Bodenwanne 3 mit dem Deckelelement einen schließbaren Dachbehälter bildet.

In der Bodenwanne 3 ist ein Funktionselement 111 des Automobils angeordnet. Das Funktionselement 111 ist gemäß dem gezeigten Ausführungsbeispiel ein Feinpartikelfilter, der Feinpartikel aus der Umluft filtert, die insbesondere durch Abgase eines Dieselmotors und/oder durch Abrieb von Gummireifen des Automobils abgegeben werden. Der Feinpartikelfilter 111 wirkt alternativ oder zusätzlich zu dem im Automobil ohnehin vorgesehenen Feinpartikelfilter. Die Filterwirkung eines mit der Vorrichtung 110 ausgestatteten Automobils ist verbessert.

Der Feinpartikelfilter 111 ist über die in Fig. 40 lediglich schematisch angedeutete Fluidleitung 112 mit dem Abgasstrang des Automobils 2 verbunden, um feinstaubbelastete Abgabe des Automobils 2 unmittelbar aufzunehmen.

Zusätzlich oder alternativ kann der Feinpartikelfilter 111 an der Außenseite seines Gehäuses Eintrittsöffnungen 113 aufweisen, um dem Feinpartikelfilter 111 Umgebungsluft, die beispielsweise nicht unmittelbar von dem Automobil 2 stammt, zuzuführen. Es ist insbesondere denkbar, ein emissionsfreies Automobil, das insbesondere feinpartikelfreie Abgase emittiert, mit der Vorrichtung 110 auszurüsten. Ein derartiges Automobil 2 kann zur Reinigung der Umgebungsluft eingesetzt werden.

Wenn die Vorrichtung 110 als geschlossener Dachbehälter ausgeführt ist, weist der geschlossene Dachbehälter entsprechende Durchtrittsöffnungen auf, die an der Bodenwanne 3 und/oder an dem nicht dargestellten Deckelelement angeordnet sein können, damit Umgebungsluft durch die Durchtrittsöffnungen und die Eintrittsöffnungen 113 zu dem Feinpartikelfilter 111 gelangen kann.

Die Durchtrittsöffnungen und/oder die Eintrittsöffnungen 113 sind beispielsweise fensterartig und/oder schlitzartig ausgeführt. Um einen ausreichend großen Zustrom von Umgebungsluft zu dem Feinpartikelfilter 111 zu ermöglichen, sind mehrere, insbesondere mehr als 10, insbesondere mehr als 100 und insbesondere mehr als 1000 Eintrittsöffnungen 113 an dem Feinpartikelfilter 111 vorgesehen, wobei aus zeichnerischen Gründen lediglich zwei Eintrittsöffnungen 113 dargestellt sind.

Zusätzlich oder alternativ zu den Eintrittsöffnungen 113 können Ansaugdüsen als Hilfselemente vorgesehen sein, um mit Feinpartikeln verunreinigte Umgebungsluft zu dem Feinpartikelfilter 111 anzusaugen.

In einer alternativen, nicht dargestellten Ausführungsform können die Ansaugdüsen auch als Funktionselement 111 dienen, um die Aerodynamik für das Fahrverhalten des Kraftfahrzeugs zu verbessern.

An der Vorrichtung 110 können auch mehrere Funktionselemente 111 des Automobils 2 vorgesehen sein. Aufgrund der Erkenntnis, dass mit der lösbar befestigbaren Bodenwanne zusätzlicher Bauraum und/oder Stauraum für das Automobil erschlossen wird, können zusätzliche und/oder großbauende Komponenten vorteilhaft an der Dachhalterung angeordnet werden.

Das Funktionselement 111 ist an der Bodenwanne 3, insbesondere der Bodenwand 13 gehalten. Dazu kann die Bodenwand 13 eine dem Funktionselement 111 korrespondierende Aufnahme 115 aufweisen, die gemäß dem gezeigten Ausführungsbeispiel durch Randleisten 114 umgeben wird. Die Randleisten 114 erstrecken sich von der Bodenwand 13 nach oben und sind insbesondere einteilig an der Bodenwand 13 angeformt. Die Randleisten 114 können auch an dafür vorgesehenen Schienen längs verschiebbar angeordnet sein, um die Größe der Kontur für die Aufnahme 115 für verschiedene Funktionselemente 111 veränderlich einstellen zu können.

Die Aufnahme 115 kann auch als Vertiefung in der Bodenwand 13 ausgeführt sein. Eine Ausformung von Randleisten 14 als Erhöhung an der Bodenwand 13 ist dann entbehrlich.

Zusätzlich oder alternativ zu der Aufnahme 115 können aktive Halteelemente, wie Haltegurte, Klemmhaken oder Verriegelungselemente vorgesehen sein, die insbesondere an der Bodenwanne 3 befestigt sind.

Sofern die Vorrichtung 110 ein Deckelelement aufweist, können an der der Bodenwanne 3 zugewandten Innenseite des Deckelelements korrespondierende Halteelemente vorgesehen sein, um eine zusätzliche Sicherung des Funktionselements 111 in dem Dachbehälter zu gewährleisten.

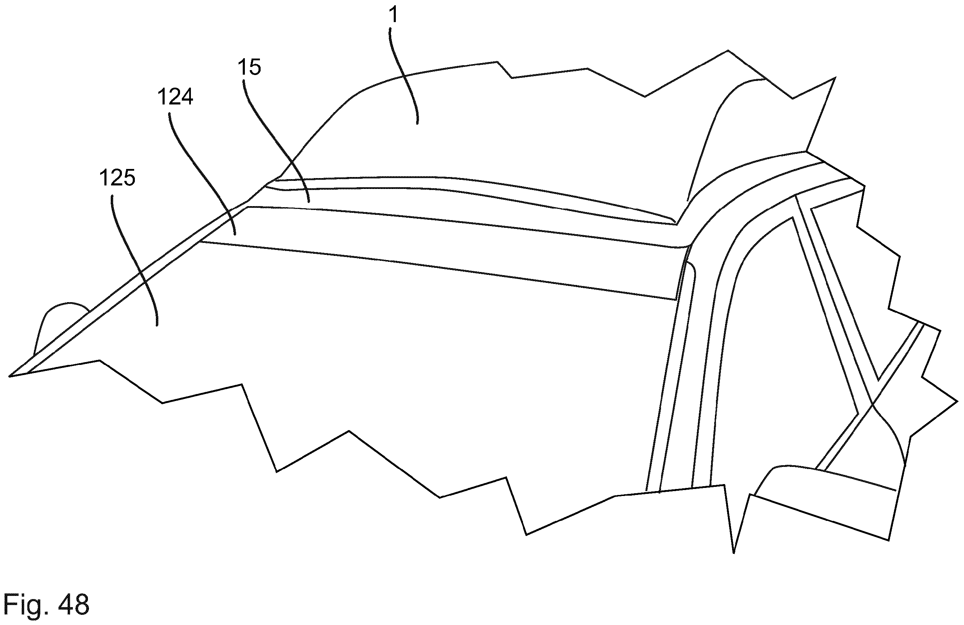

Gemäß einer in Fig. 48 dargestellten Ausführungsform kann das Funktionselement als Einstrahlelement 124 durch ein durchsichtiges Funktionsglas oder als Funktionsfolie ausgeführt sein, das insbesondere im Bereich der Frontkante 15, also an der Frontwand 19 der Bodenwand derart befestigt ist, dass das Funktionsglas zumindest abschnittsweise in einem oberen Bereich der Windschutzscheibe des Kraftfahrzeugs überlappend angeordnet ist. Das Funktionsglas ist mit einer elektronischen Steuereinheit verbunden und ermöglicht die optische Einblendung von Informationen in die Windschutzscheibe des Kraftfahrzeugs. Beispielsweise können über Außensensoren erfasste Informationen zum aktuell geltenden Tempolimit oder Informationen des Navigationssystems über das Funktionsglas an der Windschutzscheibe für den Fahrer projiziert werden. Es sind Fahrzeuge bekannt, bei welchen diese Funktion integriert ist. Die Nachrüstung einer vergleichbaren Information ist mit der erfindungsgemäßen Bodenwand möglich. Als Einstrahlelement kann auch ein Glasstab dienen, der mittels einer Lichtquelle, beispielsweise einer LED-Strahlquelle, bestrahlt wird und Lichtprojektionen im Bereich der Frontscheibe 125 des Automobils erzeugen kann. Dazu kann die Frontscheibe 125 mit einer Folie beschichtet sein, um die Lichteinstrahlungen für die Bedienperson sichtbar zu machen.

Ein Funktionselement gemäß einer weiteren Ausführungsform können Sensoren und Aktoren sowie eine Regelungseinheit dienen, die erforderlich sind, um das Kraftfahrzeug für den autonomen Fahrbetrieb zu ertüchtigen. Insbesondere können für das autonome Fahren erforderliche Sensorelemente zur Lichterkennung, Ultraschallsensoren, Lidarsensoren, Kamerasysteme und/oder Radarsensoren Funktionselemente bilden. Diese Komponenten können unmittelbar an der Bodenwanne 3 angebracht und befestigt werden. Dadurch ist eine unmittelbare Funktionserweiterung und Aufwertung des Kraftfahrzeugs möglich.

Alle möglichen Ausführungsformen des Funktionselements können an der Innenseite und/oder der Außenseite der Bodenwanne 3 befestigt werden oder daran integriert ausgeführt sein.

Vorteilhaft ist es, wenn die in oder an der Bodenwanne 3 angeordneten Funktionselemente 111 ferngesteuert bedienbar sind, insbesondere mittels einer Anwendersoftware, die auf einem mobilen Endgerät abgespeichert sein kann.

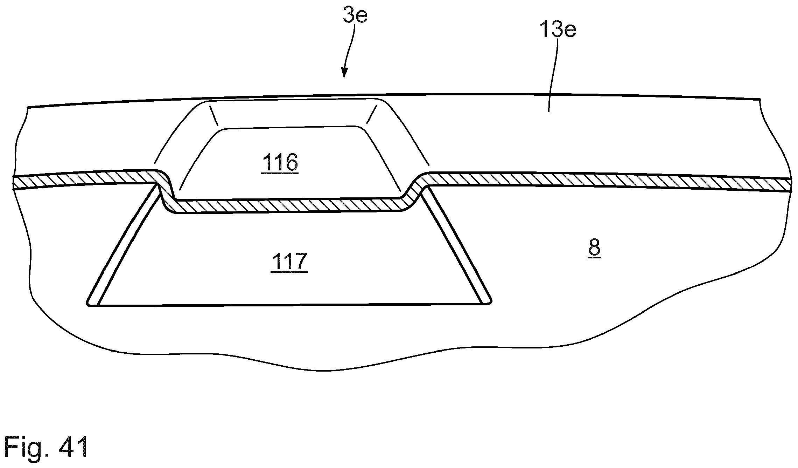

Im Folgenden wird unter Bezugnahme auf Fig. 41 ein weiteres Ausführungsbeispiel der Erfindung beschrieben. Konstruktiv identische Teile erhalten dieselben Bezugszeichen wie bei den vorherigen Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten e.

Der wesentliche Unterschied gegenüber den vorherigen Ausführungsbeispielen besteht darin, dass die Bodenwand 13e eine Bodenwandvertiefung 116 aufweist. Die Bodenwandvertiefung 116 weist eine Grundfläche auf, die im Wesentlichen der Grundfläche einer korrespondierenden Ausnehmung 117 im Kraftfahrzeugdach entspricht. Die Ausnehmung 117 ist insbesondere ein Schiebedach des Kraftfahrzeugs. Die Höhe der Bodenwandvertiefung 116 ist insbesondere derart ausgeführt, dass eine sichere Verankerung der Bodenwanne 3e mit der Bodenwandvertiefung 116 in der Ausnehmung 117 gewährleistet ist. Die Bodenwandvertiefung 116 ist formschlüssig in der Ausnehmung 117 angeordnet. Insbesondere ist die Bodenwand 13e ausschließlich durch die Bodenwandvertiefung 116 in der Ausnehmung 117 gehalten. Weitere Befestigungselemente sind entbehrlich. Die Bodenwandvertiefung 116 ist die integrierte Befestigungseinheit.

Die Unterseite der Bodenwandvertiefung 116 ist dem Fahrgastraum des Kraftfahrzeugs zugewandt und insbesondere vom Fahrgastraum aus sichtbar und zugänglich. Besonders vorteilhaft ist es, wenn die Bodenwand 13e der Bodenwanne 3e im Bereich der Bodenwandvertiefung 116 derart flexibel ausgeführt ist, dass die Bodenwandvertiefung 116 durch mechanischen Druck erzeugt und/oder veränderlich einstellbar ist. Insbesondere ist es denkbar, dass die Seitenwände der Bodenwandvertiefung 116, die sich von der Bodenwand 13e aus erstrecken, derart flexibel ausgeführt sind, dass die Tiefe der Bodenwandvertiefung 116 veränderlich festlegbar und insbesondere mit einer Höhe von 0 anordenbar ist. Eine derartige Bodenwanne 3e ist flexibel einsetzbar, insbesondere für Fahrzeuge mit und ohne Ausnehmung 117.

Gemäß dem gezeigten Ausführungsbeispiel ist die Bodenwanne 3e im Wesentlichen durch die Bodenwand 13e gebildet. Seitlich angeformte Seitenwände sind nicht vorgesehen. Die Bodenwand 13e erstreckt sich insbesondere nicht vollflächig über das Kraftfahrzeugdach. Insbesondere beträgt ein überlappender Dachbereich von Bodenwand 13e und Kraftfahrzeugdach höchstens 50 % der Dachfläche, insbesondere höchstens 30 %, insbesondere höchstens 20 %, und insbesondere höchstens 10 %. Insbesondere weist die Bodenwand 13e ausschließlich einen an der Bodenwandvertiefung 116 umlaufenden Randsteg auf, der auf dem Kraftfahrzeugdach aufliegt. Es ist auch denkbar, dass auf den umlaufenden Randsteg verzichtet wird und die Bodenwand 13e ausschließlich durch die Bodenwandvertiefung 116 gebildet ist, die als Einsatzelement in die Ausnehmung 117 eingesetzt wird. Die Bodenwand 13e kann insbesondere bündig mit der Oberseite des Kraftfahrzeugdachs abschließen. Für einen Betrachter von außen wirkt der partielle Einsatz in Form der Bodenwandvertiefung, wie das Kraftfahrzeug mit geschlossenem Schiebedach.

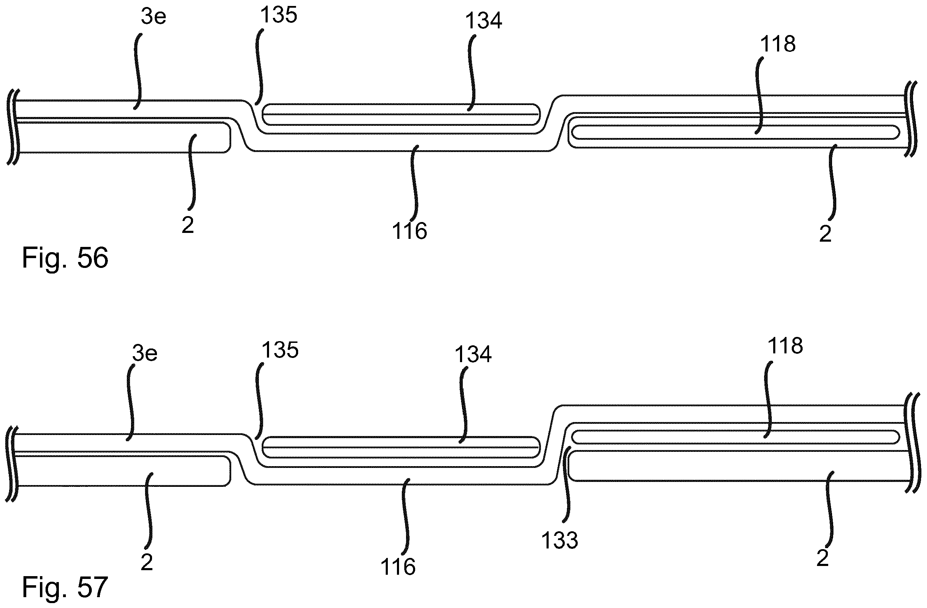

Durch die Bodenwandvertiefung 116 kann bei der Bodenwand 13e zusätzlicher Stauraum 135 erschlossen werden, der insbesondere für in der Größe der Bodenwandvertiefung 116 angepasste Accessoires 134 genutzt werden kann wie beispielsweise ein in die Bodenwandvertiefung 116 eingepasster, zusammenklappbarer Hocker, ein Koffer, ein Kinderwagen, eine faltbare Hundebox. Diese zusätzlichen Accessoires 134, die in der Bodenwandvertiefung 116 angeordnet sind, dienen insbesondere auch zur zusätzlichen Aussteifung der Bodenwanne 3e. Die Nutzung des Stauraums 135 durch Accessoires 134 ist in Fig. 56 und 57 exemplarisch gezeigt.

Entsprechend können in der Bodenwandvertiefung 116 auch ein Zigarettenanzünder, eine Warnweste, eine Warnleuchte, ein, insbesondere faltbares, Warndreieck, ein, insbesondere faltbarer, Sicherheitskegel, ein Empfänger für Reifendruckventile, eine Steckdose zur elektrischen Stromversorgung mit einem 12 V-Netz und/oder einem 24 V-Netz, ein Feuerlöscher, insbesondere mit daran angeschlossener Besprenkelungsanlage, eine Sauerstoffmaske und/oder ein Erste-Hilfe-Set bevorratet sein. In der Bodenwandvertiefung 116 kann auch eine Virtuell Reality (VR) Brille angeordnet sein.

In der Bodenwandvertiefung 116 kann ein Notfallassistent angeordnet sein. Ein Notfallassistent umfasst beispielsweise eine Alarmanlage als Diebstahlsicherung und/oder eine Direktverbindung zu einer Notfallnummer, beispielsweise bei einem Kraftfahrzeugunfall. Dadurch ist sichergestellt, dass Fahrgäste schnellstmöglich mit einer medizinischen Versorgung betreut werden können. Zusätzlich können in der Bodenwandvertiefung auch Komponenten vorgesehen sein, die Unfalldaten erfassen, beispielsweise bei einer ungewöhnlichen Erschütterung, beispielsweise mittels Beschleunigungssensoren. Insbesondere ist es dadurch möglich, unbemerkte Beschädigungen mit Fahrerflucht zu erfassen und über den Unfalldatenrechner in der Bodenwandvertiefung zu speichern und ggf. unmittelbar an den Fahrzeughalter, den Fahrzeugversicherer und/oder die Polizei zu übermitteln. Der Notfallassistent umfasst insbesondere auch eine Paniktaste, die es den Fahrgästen ermöglicht, durch Betätigung der Paniktaste einen Notruf abzusenden. Der Notruf wird beispielsweise an eine Polizeidienststelle und/oder an einen Notarzt übermittelt, um schnellstmöglich, insbesondere medizinische, Betreuung zu erhalten. Eine Paniktaste kann beispielsweise bei einem plötzlich auftretenden Schlaganfall eines Fahrgastes betätigt werden.

In der Bodenwandvertiefung 116 kann auch ein festinstalliertes Autotelefon mit eigener Telefonnummer, ein Funkgerät und/oder eine Verbindungsstation für unterschiedliche Datenverbindungen zur Verfügung gestellt werden.

In der Bodenwandvertiefung 116 können Funktionskomponenten für das Kraftfahrzeug, wie beispielsweise ein Datenschreiber und/oder ein Fahrtenbuch angebracht sein.

In der Bodenwandvertiefung 116 können Entertainment-Komponenten, wie ein Radio, eine Musikanlage und/oder ein Navigationssystem angebracht sein.

In der Bodenwandvertiefung 116 können zusätzliche Sensoren und/oder Aktoren für das Kraftfahrzeug untergebracht sein, wie beispielsweise ein Außentemperaturfühler und/oder Infrarotsensoren zur Temperaturmessung im Kraftfahrzeug oder außerhalb des Kraftfahrzeugs, ein Marderschreck, der Ultraschallsignale aussendet, um eine Beschädigung des Kraftfahrzeugs durch Marderbiss zu vermeiden, ein Zusatzairbag, insbesondere ein Kopfairbag, der insbesondere seitlich, insbesondere beidseitig, zur Absicherung des Kopfes von Fahrer und/oder Beifahrer schützt, ein Abdeckelement für die Frontscheibe gegen Vereisung und/oder Schnee, insbesondere ein Rollladen, Enteisungselemente für die Frontscheibe, insbesondere Sprühdüsen mit Flüssigkeitsenteiser und/oder für Warmluft aus einem Heißgebläse, Geräuschelemente für Warntöne.

Sämtliche Daten, die bei der erfindungsgemäßen Dachhalterung übertragen werden, können beispielsweise kabelgebunden oder kabellos mittels Funksignalübertragung und/oder mittels optischer Datenübertragung, der sogenannten Visibal Light Communication (VLC) oder der Light Fidelity (Li-Fi) übertragen werden.

In der Bodenwandvertiefung 116 kann eine separate Steuerung angeordnet sein, um eine Orientierungsbeleuchtung am Kraftfahrzeug zu ermöglichen. Eine derartige Orientierungsbeleuchtung wird auch als Coming-Home- und Living-Home-Funktion bezeichnet.

In der Bodenwandvertiefung 116 können auch eine zusätzliche Hupe und/oder mindestens ein zusätzlicher Außenlautsprecher angebracht sein.

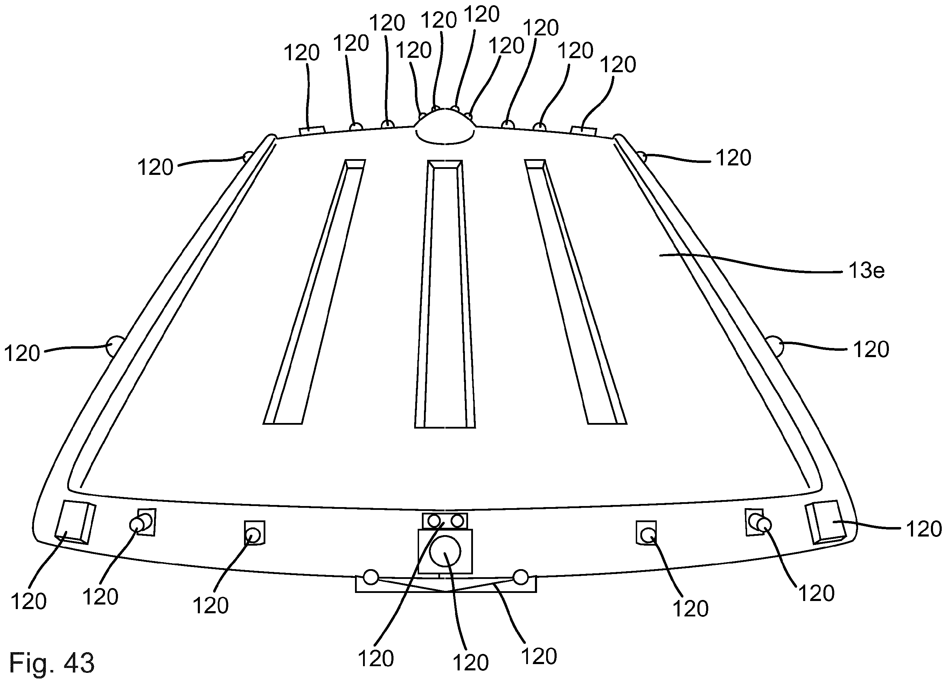

Die Bodenwanne kann gemäß Fig. 43 auch genutzt werden, um, insbesondere an der Außenseite, zusätzliche Beleuchtungselemente 120 für das Kraftfahrzeug vorzusehen, insbesondere ein Kurvenlicht, das insbesondere dynamisch der Lenkbewegung des Kraftfahrzeugs folgt, Nebelscheinwerfer, Nebelleuchte, Tagfahrlicht, Standlicht, Xenonscheinwerfer, Fernlicht und/oder eine Parkleuchte.

An der Außenseite der Bodenwanne können auch Leuchtanzeigen, insbesondere in Form einer Pannenanzeige, angebracht sein, die beispielsweise programmierbare oder hinterlegte Texte wie beispielsweise "Brauche Hilfe", "Brauche Benzin", "Brauche Diesel", "Brauche elektrischen Strom" oder "Achtung Unfall" anzeigen kann. Die Leuchtanzeige kann auch für Informationsinhalte genutzt werden, wie beispielsweise für ein autonomes Taxi oder car-sharing und/oder ridesharing Angebote, Ein Text könnte lauten: "Ich bin auf dem Weg" oder "Tschüss".

In einer Steuerungseinheit der Dachhalterung kann eine Software hinterlegt sein, die nach Beendigung einer Fahrt bei dem Fahrer abfragt, ob das Fahrzeug vermietet werden soll. In einem Eingabedialog kann der Fahrer beispielsweise Details für die geplante Vermietung wie beispielsweise Dauer und Ort angeben.

In einer Steuerungseinheit, die insbesondere in der Dachhalterung integriert ist, können auch Softwarelösungen integriert sein, die einen individualisierten Zugang zum Kraftfahrzeug bieten. Solche individualisierten Zugänge werden beispielsweise von Kraftfahrzeugherstellern für ihre Kunden für zusätzlichen Service, Produkte und Lifestyle-Angebote zur Verfügung gestellt.

Dadurch, dass die Bodenwandvertiefung 116 vom Fahrgastraum über die Ausnehmung 117 unmittelbar zugänglich ist, sind besonders vorteilhafte Integrationen weiterer Funktionselemente 111 möglich. In der Bodenwandvertiefung 116 ist insbesondere ein Funktionselement 111 für die Nachrüstung von Hardware für das autonome Fahren des Kraftfahrzeugs, also für selbstfahrende Kraftfahrzeuge, angeordnet.

Beispielsweise kann an der Unterseite der Bodenwandvertiefung 116 ein Pad-Computer oder ein Bildschirm, der beispielsweise auch folienartig ausgeführt sein kann, dem Fahrgastraum zugewendet sein. Die Pad-Computer oder Bildschirme können beispielsweise der Rücksitzbank und/oder der vorderen Sitzreihe im Automobil zugewandt angeordnet sein. Die Pad-Computer oder Bildschirme sind insbesondere um eine horizontale Schwenkachse schwenkbar an der Bodenwandvertiefung 116 angeordnet, um diese in eine optische Sichtposition für den jeweiligen Fahrgast verschwenken zu können. Die Geräte sind insbesondere um einen Schwenkwinkel von bis zu 180 ° schwenkbar.

In den Bildschirm können eine Kamera und/oder ein Mikrofon integriert sein, um eine Sprach- und/oder Gestensteuerung für die Fahrgäste zu ermöglichen, um beispielsweise Fahrzeugfunktionen, insbesondere Entertainmentfunktionen im Fahrzeug zu ermöglichen. Die Kamera und/oder das Mikrofon ermöglichen eine Kommunikation mit Dritten. Insbesondere ist es denkbar, dass in dem Kraftfahrzeug, insbesondere in einer Steuerungseinheit in der Bodenwanne 3 ein digitales Fahrzeughandbuch hinterlegt ist. Dadurch ist eine Ferndiagnose bei Störungen und/oder Beschädigungen des Kraftfahrzeugs beispielsweise über eine zentrale Servicestelle möglich. In der Bodenwandvertiefung 116 kann auch ein Projektor, insbesondere ein 3D-Projektor, integriert sein, der eine dreidimensionale Lichtprojektion in den Fahrgastraum ermöglicht. In der Bodenwandvertiefung 116 kann auch ein Lesegerät für eine SIM-Karte oder eine Datenspeicher-Karte vorgesehen sein. Die SIM-Karte kann insbesondere auch in einem dafür vorgesehenen Schacht fest verbaut sein. Die Bodenwandvertiefung 116 dient insbesondere zur Aufnahme einer eSIM-Karte. In der Bodenwandvertiefung 116 kann ein W-LAN-Router angeordnet sein, um für Fahrgäste einen drahtlosen Internetzugang zu ermöglichen.

Der Pad-Computer und/oder der 3D-Projektor können ein sogenanntes virtuelles Panoramadach nachbilden, indem über Außen-Kameras am Automobil Informationen auf den Pad-Computer und/oder den 3D-Projektor in den Fahrgastraum transportiert werden. Über Kameras im Fahrgastinnenraum ist es insbesondere möglich, eine Augen-Tracking-Funktion zu ermöglichen, um die individuell unterschiedlichen Blickwinkel der Fahrgäste auf das virtuelle Schiebedach zu erfassen und die dargestellte Information entsprechend anzupassen. Dreidimensional dargestellte Hologramme erscheinen aus unterschiedlichen Blickwinkeln unterschiedlich.

Ein Bildschirm kann insbesondere auch dazu genutzt werden, um Bildinformationen einer Rückfahrkamera für den Fahrer anzuzeigen. Die Rückfahrkamera kann beispielsweise an einer äußeren Oberseite der Bodenwandvertiefung 116 und/oder an der Fahrzeugantenne und/oder im Bereich der Kraftfahrzeugblende an der Heckklappe angeordnet sein. Es ist auch denkbar, mehrere Rückfahrkameras vorzusehen.

Eine Außenkamera, die insbesondere an der Bodenwanne 3 angeordnet ist, kann insbesondere als Parkplatz-Scanner dienen. Die Kamera ist derart ausgeführt, dass sie Parklücken erkennt und insbesondere speichert. Die Informationen über Parklücken kann an einen zentralen Server eines Dienstanbieters übertragen und/oder unmittelbar mit anderen Kraftfahrzeugen geteilt werden. Insbesondere ist dafür eine Fahrzeug-zu-Fahrzeug-Kommunikation vorteilhaft.

An der Unterseite der Bodenwandvertiefung 116 können auch Lautsprecher und/oder Beleuchtungselemente vorgesehen sein, um eine zusätzliche, verbesserte Innenbeleuchtung und Innen-Beschallung zu ermöglichen. Insbesondere kann in der Bodenwandvertiefung 116 auf der dem Fahrgastraum abgewandten Seite ein Subwoofer angeordnet sein. Über die Lautsprecher ist es insbesondere möglich, Geräusche von außerhalb des Fahrzeugs, insbesondere mittels Außenmikrofonen, wie in Fig. 43 dargestellt, die an der Bodenwand 13e angebracht sind, in den Innenraum des Kraftfahrzeugs zu übertragen. Ein Beispiel hierfür ist Vogelgezwitscher.

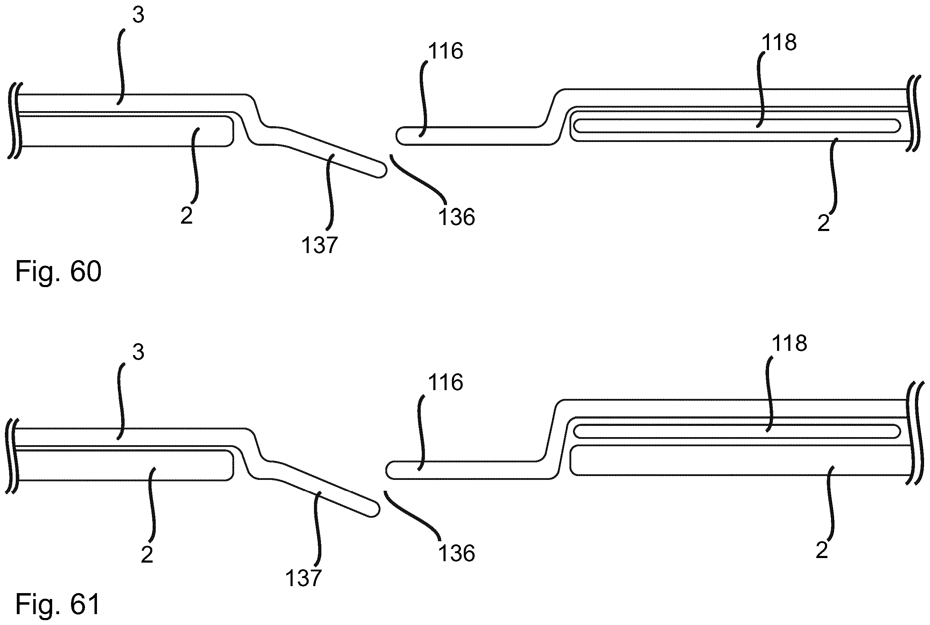

Insbesondere kann die Bodenwandvertiefung 116 eine schließbare Öffnung 136 aufweisen. Das Verschließen der Öffnung ist beispielsweise durch eine Schwenkklappe 137 oder ein Schiebeelement möglich (vgl. Fig. 60, 61). Durch die Öffnung kann ein Fahrgast im Fahrgastraum unmittelbar Zugriff auf den Innenraum der Bodenwandvertiefung 116 haben. Beispielsweise ist es denkbar, in der Bodenwandvertiefung 116 einen Kühlschrank, ein Kühlfach oder eine Mikrowelle zu integrieren, das über eine Schwenkklappe vom Fahrgastinnenraum zugänglich ist.

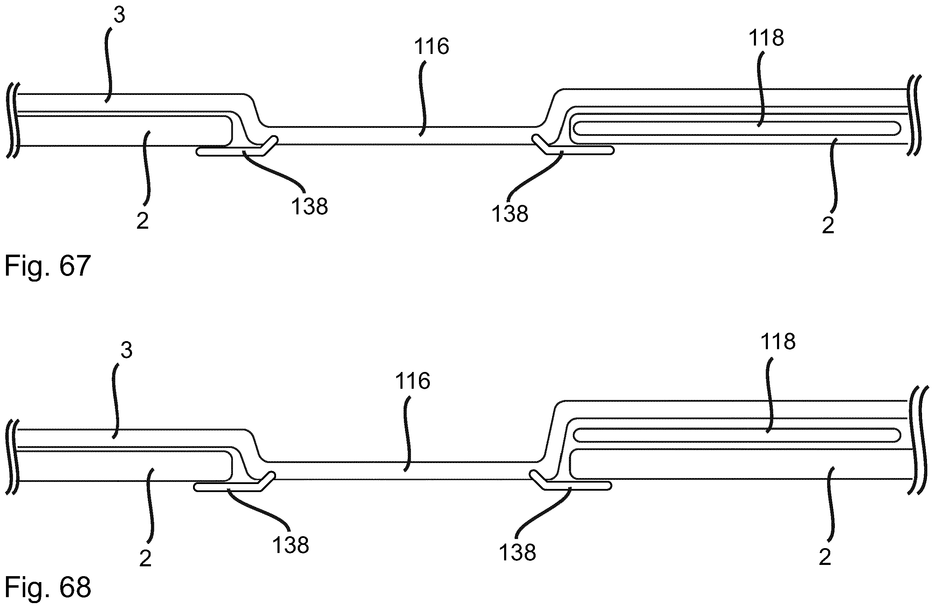

Die Bodenwanne 3 kann durch zusätzliche Verriegelungselemente 138 an einer Unterseite an dem Kraftfahrzeugdach 2 befestigt, insbesondere verriegelt sein. Diese Verriegelung ist exemplarisch in Fig. 67 und Fig. 68 dargestellt. Die Riegel 138 ermöglichen eine zusätzliche Sicherung der Bodenwanne 3 am Kraftfahrzeugdach 2. Die Riegel 138 ermöglichen einen zusätzlichen Diebstahlschutz gegen unberechtigtes Entnehmen der Bodenwanne 3 vom Kraftfahrzeugdach 2.

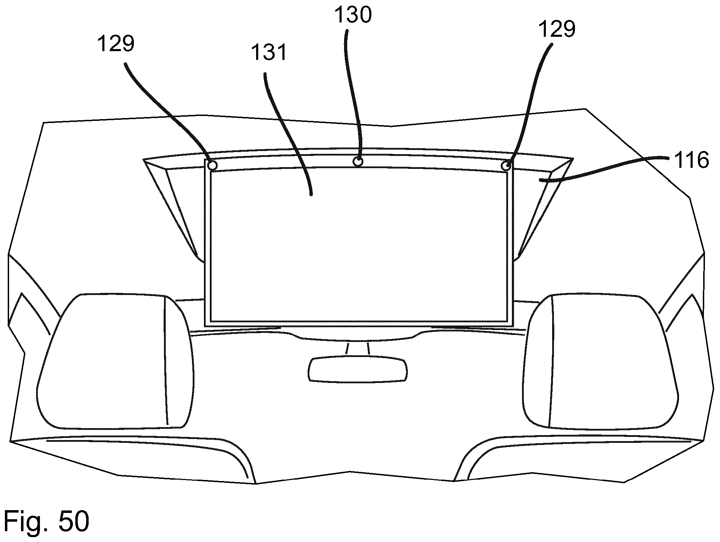

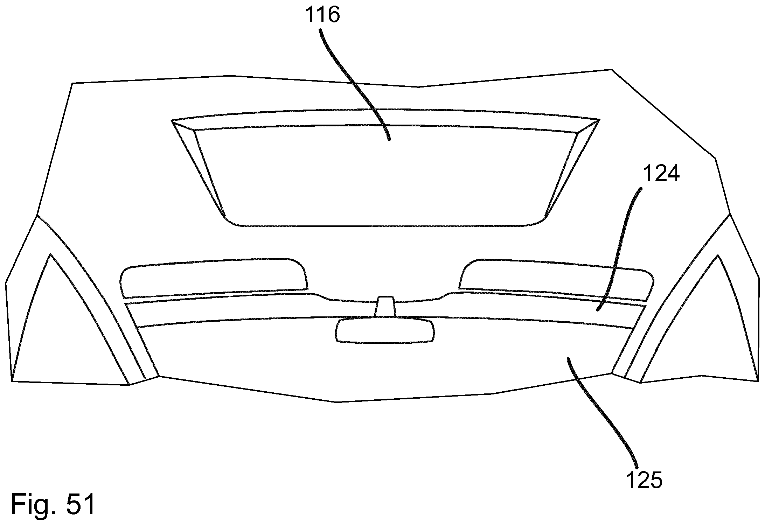

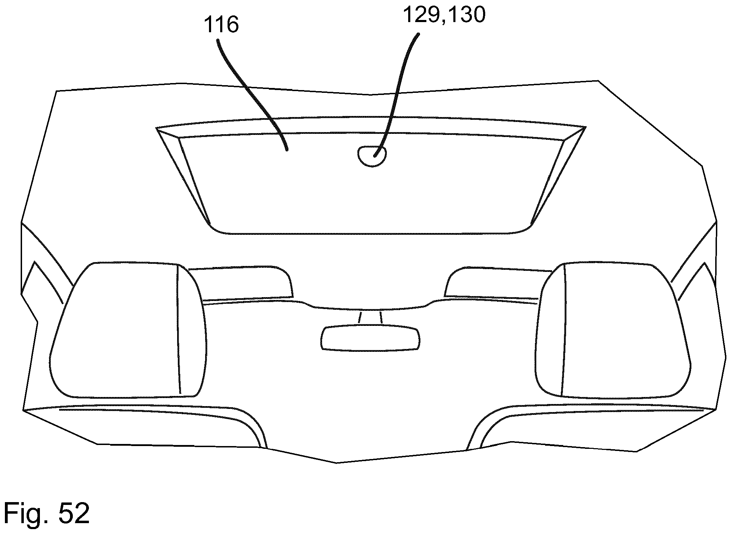

In der Bodenwandvertiefung 116 kann auch eine Spielekonsole für Computerspiele integriert sein mit einem TV-Bildschirm. An der Unterseite der Bodenwandvertiefung 116 kann ein Schalter für an der Außenseite des Fahrzeugs und/oder an der Außenseite der Bodenwanne 3e angebrachte Scheinwerfer und/oder Mikrofone vorgesehen sein. An der Unterseite der Bodenwandvertiefung 116 können Solariumstrahler angeordnet sein. An der Unterseite der Bodenwandvertiefung können auch integrierte Mikrofone 129 und/oder Lautsprecherboxen angeordnet sein, um die Kommunikation im Kraftfahrzeug zwischen den Fahrgästen zu vereinfachen und zu verbessern. An der Unterseite der Bodenwandvertiefung 116 können ein oder mehrere Spiegel angeordnet sein, um eine Sichtverbindung von der vorderen Sitzreihe auf die hintere Sitzreihe im Kraftfahrzeug zu ermöglichen. Dies kann zusätzlich oder alternativ auch mit einem Kamera- /Monitor-System erfolgen, wobei Kameras 130 und/oder Monitore 131 an der Unterseite der Bodenwandvertiefung, insbesondere ausklappbar, angeordnet sein können. Derartige Ausgestaltungen sind in Fig. 50 bis 52 gezeigt. In Fig. 51 ist zusätzlich ein Einstrahlelement 124 in Form eines Funktionsglases, das an der Frontscheibe 125 befestigt ist, dargestellt.

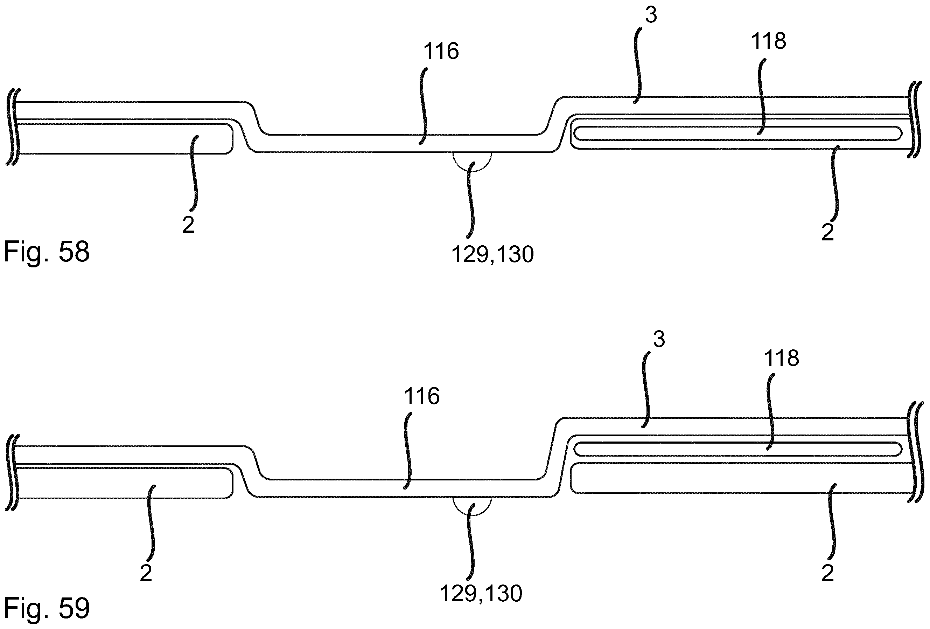

Sensoren, insbesondere in Form von Kameras 130 oder Mikrofonen 129 können insbesondere an einer dem Fahrgastraum zugewandten Unterseite der Bodenwandvertiefung 116 angeordnet sein, wie dies in Fig. 58, 59 exemplarisch gezeigt ist.

Die Öffnung in der Bodenwandvertiefung 116 kann auch derart ausgeführt sein, dass Außenluft in den Fahrgastinnenraum gelangen kann. Dazu kann die Bodenwanne 3 Lufteinlässe 126 und Luftauslässe 127 aufweisen. Die Außenluft kann beispielsweise über einen Feinpartikel- /Pollenfilter 128 gefiltert werden. Die in den Fahrgastraum strömende Luft kann zusätzlich mit einem ergänzenden Duft aromatisiert werden.

An der Unterseite der Bodenwandvertiefung 116 kann auch ein Schalter zum Öffnen des Dachbehälters vorgesehen sein, wenn an der Bodenwanne 3 ein Deckelelement angeordnet ist. Dadurch ist es möglich, den Dachbehälter von innerhalb des Kraftfahrzeugs zu öffnen. Es ist nicht erforderlich, zum Öffnen des Dachbehälters aus dem Kraftfahrzeug auszusteigen. In der Bodenwandvertiefung 116 können zusätzliche Steckplätze für USB-Anschlüsse integriert sein, die beispielsweise mit einer Stromquelle und/oder Batterien verbunden sind. Die Bodenwandvertiefung 116 kann also für eine mobile Ladestation für elektrischen Strom genutzt werden.

In die Bodenwandvertiefung 116 kann eine Vorrichtung zur Consumer Device Integration angeordnet sein, wie beispielsweise eine Handyladestelle zum Einklicken.

In der Bodenwandvertiefung 116 kann auch ein CD-Wechsler angeordnet sein. An der Bodenwandvertiefung 116 kann auch ein Müdigkeitssensor angeordnet sein, der die Fahreigenschaften des Fahrers überwacht. Dies kann beispielsweise dadurch erfolgen, dass über eine Kamera und den Rückfahrspiegel des Kraftfahrzeugs die Augen des Fahrers und/oder die Betätigung des Lenkrads überwacht werden. Ein Müdigkeitssensor ist grundsätzlich auch denkbar über das an der Windschutzscheibe angeordnete Funktionsglas.

In der Bodenwandvertiefung 116 kann auch eine Standheizung und/oder ein Klimagerät angeordnet sein, um ein Kraftfahrzeug entsprechend nachzurüsten.

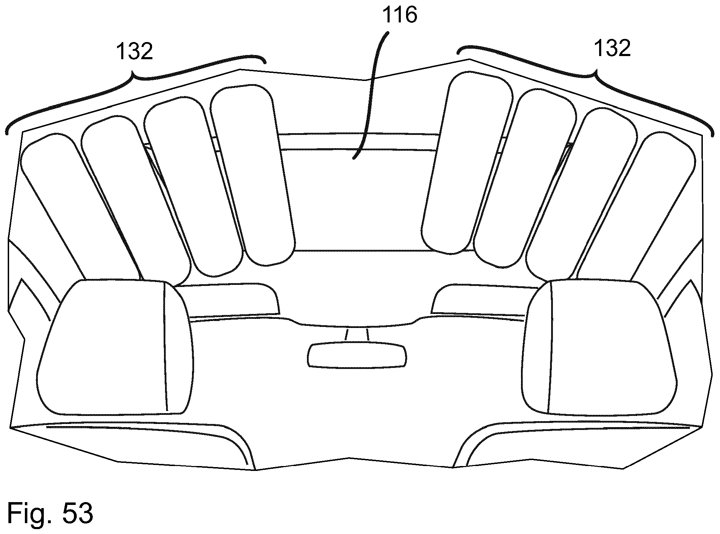

In der Bodenwandvertiefung 116 kann, wie in Fig. 53 dargestellt, auch ein Dachairbag 132 angeordnet sein, um die Sicherheit der Fahrgäste, insbesondere im Kopfbereich, zusätzlich zu erhöhen. Insbesondere in Kraftfahrzeugen, die serienmäßig ohne Dachairbag 132 ausgestattet sind, ist die Sicherheit für die Fahrgäste deutlich erhöht.

Denkbar ist, in der Bodenwandvertiefung 116 künstliche Intelligenz in Form einer Kommunikationsplattform anzubringen, die gestützt durch eine Internetverbindung und eine darüber erfolgte Verbindung mit einem Server Dienste für die Fahrgäste, insbesondere Informationsdienste, zur Verfügung stellt. Insbesondere vorteilhaft ist es, wenn eine Informationsplattform die Kommunikation von Fahrzeug zu Fahrzeug ermöglicht.

Ein Funktionselemente in der Bodenwanne 3 und insbesondere in der Bodenwandvertiefung 116 kann auch ein Mautkontrollgerät und/oder eine Stauerkennungssensorik sein.

In die Bodenwanne 3, insbesondere in die Bodenwandvertiefung 116, können zusätzliche Servicefunktionen in einer Steuerungseinheit integriert werden wie beispielsweise Fahrerassistentsysteme, ein Spurhalteassistent/oder eine Verkehrszeichenerkennung. Zumindest über Lautsprecher können von der Steuerungseinheit entsprechende Signale in den Fahrgastinnenraum abgegeben werden.

In der Bodenwandvertiefung 116 kann insbesondere ein Projektor, insbesondere ein Hochleistungsprojektor angeordnet sein, der Informationen für den Fahrer und/oder Beifahrer des Fahrzeugs auf ein ohnehin im Fahrzeug vorhandenes Informationsdisplay, die Innenseite der Frontscheibe und/oder eine transparente Folie projiziert, die an einer Oberfläche des Cockpits des Fahrzeugs, insbesondere im Bereich einer Zierleiste, insbesondere im Bereich des Beifahrers, angeordnet ist. Eine derartige Folie kann auch auf dem Informationsdisplay des Fahrzeugs angeordnet sein, um die Informationen des Hochleistungsprojektors anzeigen zu können. Zusätzlich kann eine Kamera vorgesehen sein, die sämtliche Anzeigen im Armaturenbereich, wie beispielsweise Geschwindigkeit, Drehzahl, Außentemperatur, Kraftstoffverbrauch und weitere Informationen des Bordcomputers erfasst. Darüber hinaus können zusätzliche Informationen, beispielsweise aus dem Navigationssystem und aktuelle Informationen über Informationsdienstleister und/oder Verkehrszeichenerkennung, radargesteuerte Geschwindigkeitsmessung und andere Informationen über eine Internetverbindung einer Kommunikationsplattform zur Verfügung gestellt werden. Damit ist es möglich, in einem Kraftfahrzeug eine Informationsanzeige an einer Innenfläche der Frontscheibe als Nachrüstlösung anzubieten. Wie auf dem Informationsdisplay und/oder auf einer Fläche im Armaturenbereich des Kraftfahrzeugs angeordnete Folie kann als Touchfolie ausgeführt sein, so dass die Folie unmittelbar selbst erkennt, wenn über eine Berührfläche eine Funktion ausgelöst werden soll. Zusätzlich oder alternativ kann über die Folie eine virtuelle Schaltfläche dargestellt werden, die durch den Finger eines Fahrgastes berührt wird. Die Bewegung des Fingers wird mittels einer Hochleistungskamera erfasst und lokalisiert und somit eine virtuelle Tastenberührung erkannt und entsprechend die Funktionssignale ausgelöst. Schaltflächen auf der Folie sind beispielsweise vorteilhaft, wenn der Bordcomputer in einer Statusmeldung anzeigt, dass ein Verbrauchsmittel, wie beispielsweise Wischwascher, Motoröl oder Adblue-Zusatz nachgefüllt werden muss und den Fahrgästen mittels künstlicher Intelligenz und Internetverbindung automatisch ein Kaufangebot, insbesondere eine Auswahl verschiedener Anbieter des erforderlichen Produkts und/oder der nächste Handel, insbesondere die nächste Tankstelle mit dem verfügbaren Produkt, angezeigt werden, so dass die Fahrgäste über den Kauf entscheiden und insbesondere den Kauf unmittelbar während der Fahrt initiieren können. Ein derartiges Nachbestellsystem erweitert die Funktionalität des Kraftfahrzeugs mit Blick auf die Handhabung von Verbrauchsmaterial.

Ein weiteres mögliches Funktionselement ist ein mechanisches Funktionselement in Form eines Frontspoilers und/oder Windshots, der insbesondere an der Frontwand 19 angeordnet ist. Ein zusätzliches Funktionselement ist ein Bodenausgleichselement, das an der Innenseite der Bodenwanne 3e, insbesondere auf die Bodenwand 13e aufgelegt wird. Mit dem Bodenausgleichselement sollen Unebenheiten an der Bodenwand 13e, insbesondere die Bodenwandvertiefung 116 oder die Profilelemente 23 ausgeglichen werden. Das Bodenausgleichselement ist insbesondere weich und elastisch ausgeführt, beispielsweise als Gummi-/oder Luftmatratze. Die Bodenwanne 3 mit dem darin angeordneten Bodenausgleichselement dient als Liegefläche. Insbesondere kann die Bodenwanne 3 als Dachzelt genutzt werden, wenn an den Außenwänden der Bodenwanne 3 Zeltwände befestigt werden.

Die Bodenwanne 3 und insbesondere die Bodenwandvertiefung 116 können auch als Landeplatz für Flugdrohnen dienen.

Im Folgenden wird unter Bezugnahme auf Fig. 41 ein weiteres Ausführungsbeispiel der Erfindung beschrieben. Konstruktiv identische Teile erhalten dieselben Bezugszeichen wie bei den vorherigen Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten f.

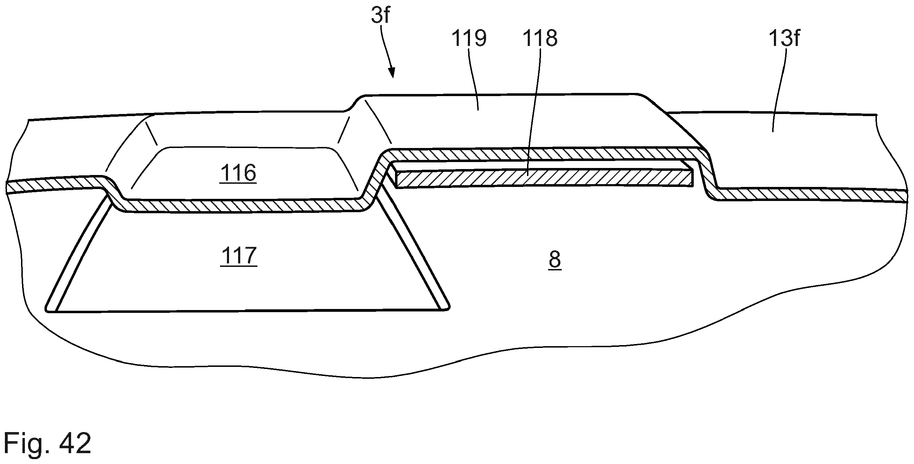

Der wesentliche Unterschied des Ausführungsbeispiels gemäß Fig. 42 gegenüber dem vorherigen Ausführungsbeispiel besteht darin, dass die Ausnehmung 117 durch ein Panoramadach gebildet wird. Das bedeutet, dass ein oben aufliegendes Dachelement 118 auf der Dachaußenseite entgegen der Windschutzscheibe nach hinten verlagert wird. Die Bodenwand 13f weist eine entsprechend dem Dachelement 118 ausgeprägte Erhöhung 119 auf. Die Bodenwanne 3f ist für den Einsatz bei einem Kraftfahrzeug mit einem Panoramadach geeignet, wobei die Bodenwandvertiefung 116 bei geöffnetem Panoramadach über die Ausnehmung 117 analog zugänglich ist.

Entsprechend können sämtliche vorstehend erläuterte Funktionselemente auch bei der Bodenwanne 3f integriert und/oder angeordnet werden.

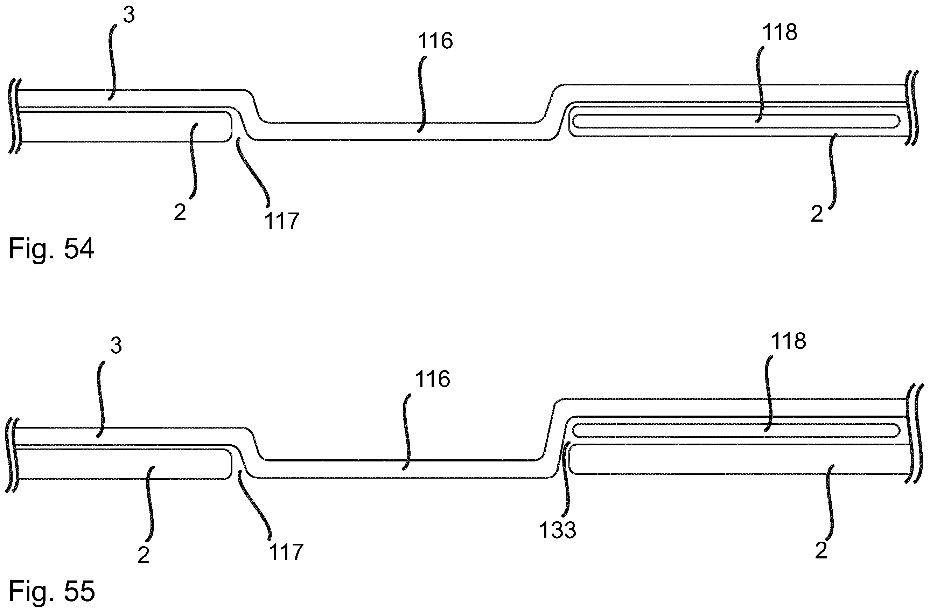

Fig. 54, Fig. 55 zeigen alternative Ausgestaltungen der Bodenwanne 3 mit der Bodenwandvertiefung 116, die in die Ausnehmung 117 des Kraftfahrzeugdachs 2 eingreift. Wenn das Dachelement 118 in Form des Schiebedachs ausschließlich linear verlagert wird, also insbesondere innerhalb der Ebene des Kraftfahrzeugdachs 2, wie in Fig. 54 dargestellt, bildet die Dachwanne 3 eine im Wesentlichen plane Fläche mit Ausnahme der Bodenwandvertiefung 116.

Wenn das Schiebedach 118, wie in Fig. 55 dargestellt, auf das Kraftfahrzeugdach nach oben aufgeschwenkt wird, weist die Bodenwanne 3 im Bereich des Schiebedachs 118 eine dafür erforderliche Erhöhung, die einen Hohlraum 133 für das Schiebedach 118 bildet, auf.

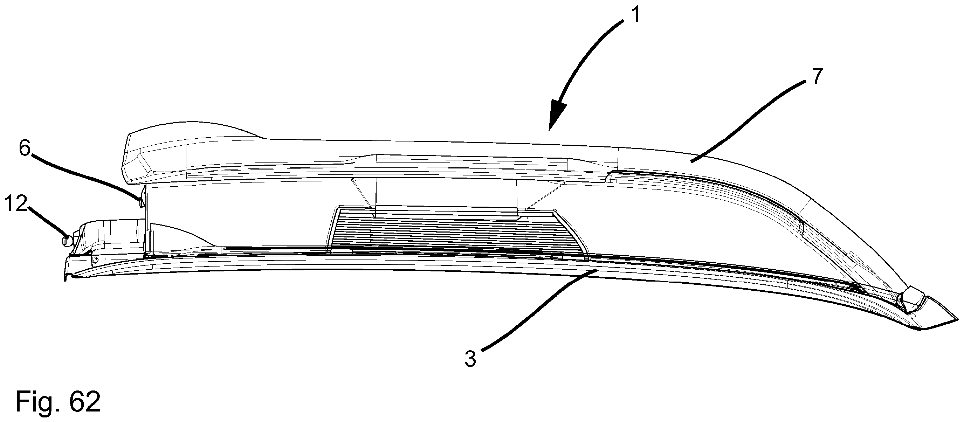

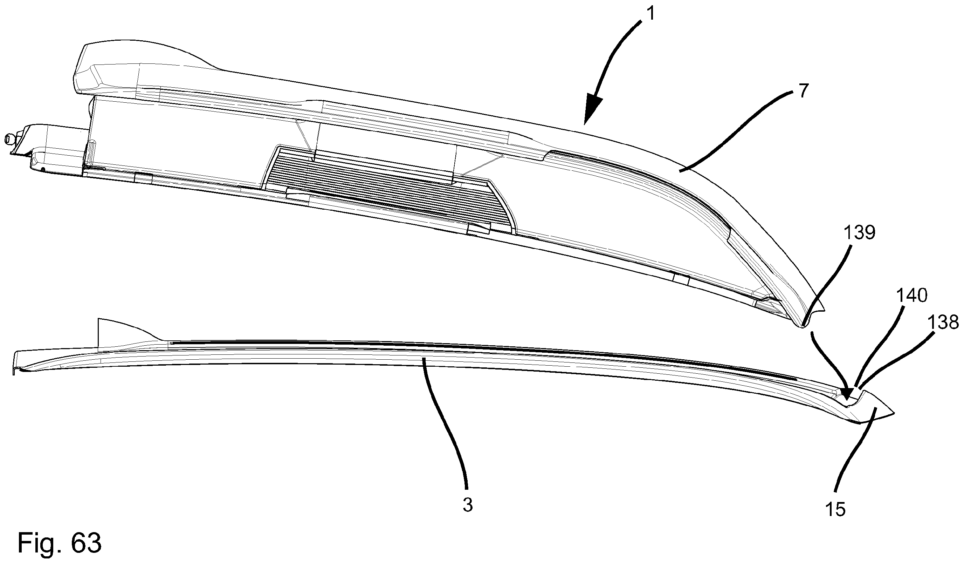

In Fig. 62 und 63 ist eine Seitenansicht eines Dachbehälters 1 mit einer Bodenwanne 3 und einem an der Bodenwanne 3 befestigbaren Deckelelement 7 dargestellt. Fig. 62 zeigt den Dachbehälter in der geschlossenen Anordnung. Fig. 63 zeigt den Dachbehälter 1 in einer Anordnung, in der das Deckelelement 7 von der Bodenwanne 3 abgenommen ist. Dazu weist die Bodenwanne 3 in einem vorderen, der Frontkante 15 zugewandten Bereich eine Befestigungsmulde 138 auf, in die eine Befestigungsnase 139 des Deckelelements 7 eingreifen und verrasten kann. Insbesondere bilden die Befestigungsmulde 138 und die Befestigungsnase 139 ein Befestigungssystem 140, das insbesondere derart ausgeführt ist, dass die Deckelwand von der Bodenwanne 3 abnehmbar ausgeführt ist. Zusätzlich weisen die Befestigungsmulde 138 und die Befestigungsnase 139 einander korrespondierende Rundungen auf, sodass das Befestigungssystem 140 eine Gelenkfunktion aufweist. Das Deckelelement 7 ist gegenüber der Bodenwanne 3 am Befestigungssystem 140 schwenkbar gelagert. Das Deckelelement 7 kann gegenüber der Bodenwanne 3 geschwenkt und/oder abgenommen werden.

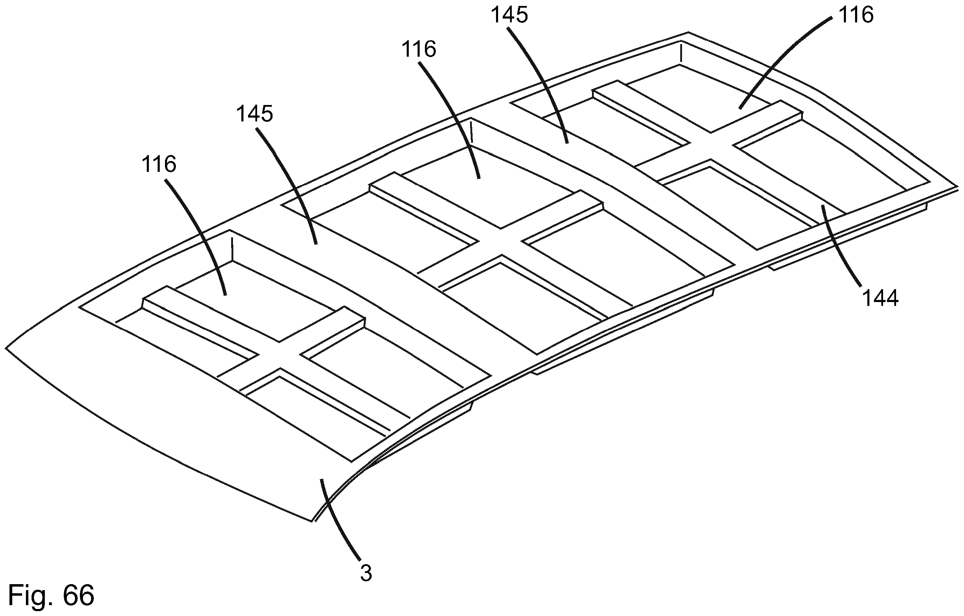

Fig. 66 zeigt eine perspektivische Ansicht von oben auf eine Bodenwanne 3, die mehrere Bodenwandvertiefungen 116 aufweist. Jede Bodenwandvertiefung 116 weist Verstärkungsrippen 144 auf. Gemäß dem gezeigten Ausführungsbeispiel sind die Verstärkungsrippen 144 im Wesentlichen kreuzförmig ausgeführt und flächig am Boden der Bodenwandvertiefung 116 angeordnet. Die Verstärkungsrippen 144 sind insbesondere einteilig an der Bodenwandvertiefung 116 angeformt. Entlang der Längsrichtung der Bodenwanne 3 sind mehrere Bodenwandvertiefungen 116 hintereinander angeordnet, wobei jeweils zwei benachbarte Bodenwandvertiefungen 116 durch eine Verbindungsfläche 145 beabstandet sind.

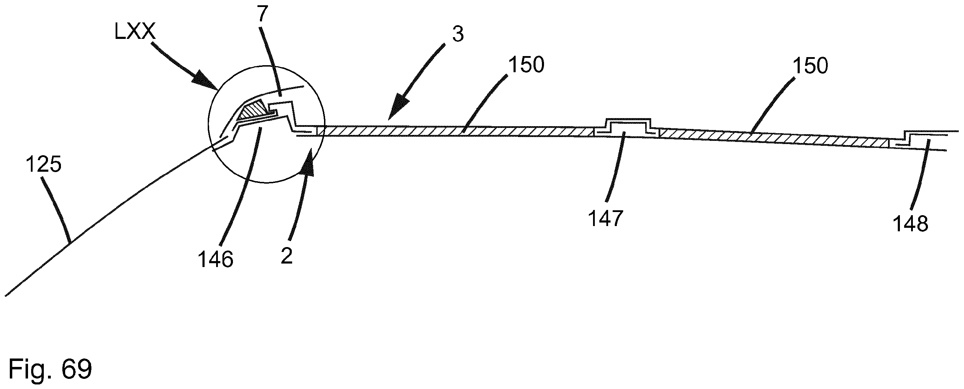

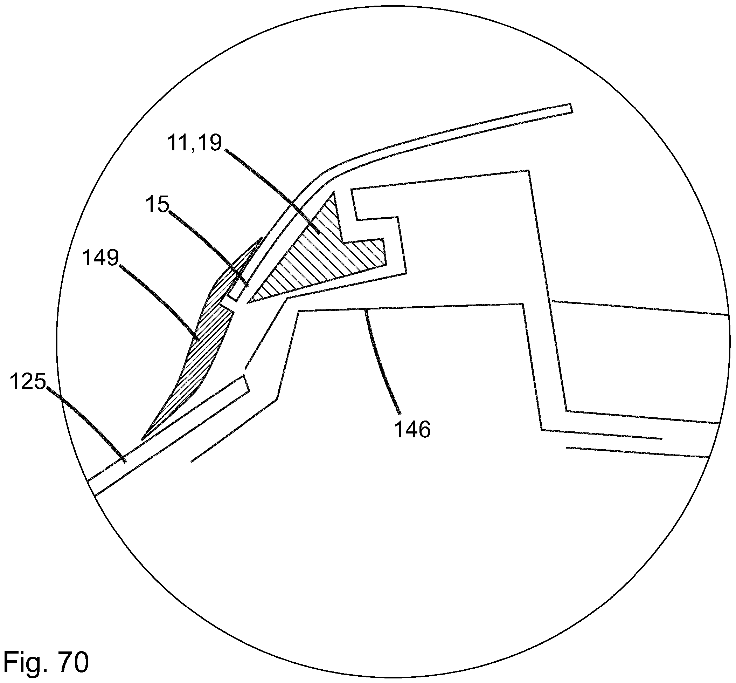

Fig. 69 und 70 zeigen einen Querschnitt durch ein Kraftfahrzeugdach 2 mit daran befestigter Bodenwanne 3. An der Bodenwanne 3 kann ein Deckelelement 7 befestigt werden, das in Fig. 69 und der vergrößerten Detaildarstellung in Fig. 70 lediglich angedeutet ist.

Die Befestigung der Bodenwanne 3 an dem Kraftfahrzeugdach 2 erfolgt insbesondere im Bereich der A-Säule 146, der B-Säule 147 und der C-Säule 148. Für einen abgedichteten Abschluss im Bereich des Übergangs der Frontkante 15 der Bodenwand 3 und der Frontscheibe 125 des Kraftfahrzeugs ist ein Dichtungselement, insbesondere in Form eines Dichtungselement 149, insbesondere in Form einer Dichtlippe und insbesondere in Form einer Dichtlippe aus Gummimaterial vorgesehen. Die Dichtlippe 149 ist insbesondere an der Bodenwanne, insbesondere im Bereich der Frontkante 15 angeformt. Beispielsweise ist die Gummi-Dichtlippe 149 an der Frontwand 19 des Rahmens 11 angeformt

Insbesondere in dem Bereich zwischen den Rahmenelementen des Kraftfahrzeugs, also der A-Säule 146, der B-Säule 147 und der C-Säule 148 ist die Bodenwanne 3 als Funktionsschicht 150 ausgeführt. Die Funktionsschicht 150 ist gemäß dem gezeigten Ausführungsbeispiel als durchschlagsichere, insbesondere dämpfende Lage ausgeführt. Die dämpfende Lage dient insbesondere zur thermischen und/oder akustischen Isolation. Die Funktionsschicht 150 ist insbesondere analog einem Dachhimmel in einem Kraftfahrzeug ausgeführt, weist aber insbesondere zusätzlich eine Durchschlagsicherung auf. Die Funktionsschicht 150 ist beispielsweise als Verbundbauteil, insbesondere als Komposit-Bauteil mit einer Aramidfaser-Einlage ausgeführt. Die Funktionsschicht 150 ist als mehrlagige Sandwich-Struktur ausgeführt, insbesondere aus einem Kunststoffschaum, insbesondere hergestellt aus Polyamid. An einer Unterseite kann die Bodenwanne 3 eine optische Schicht aufweisen, die analog einem Dachhimmel in einem Kraftfahrzeug ausgeführt ist.

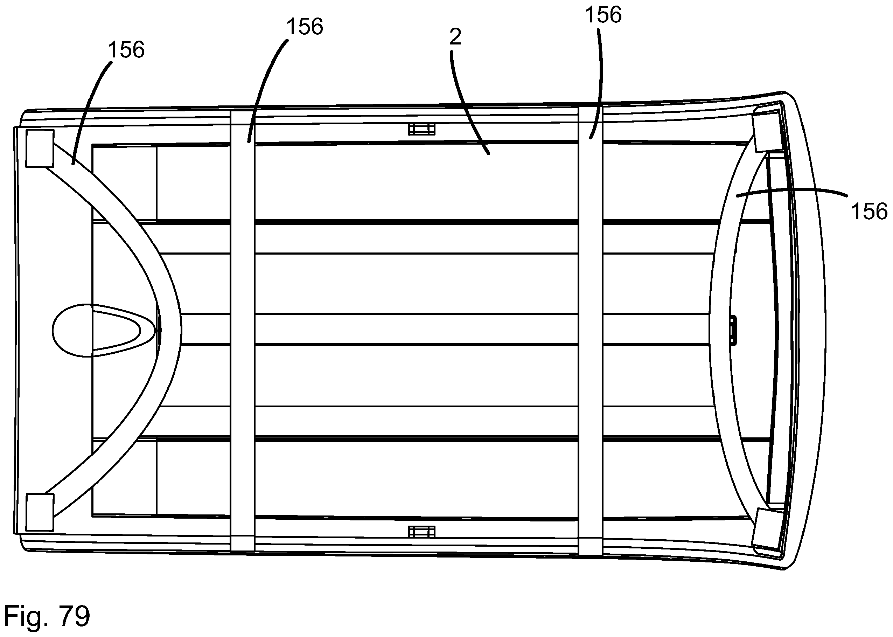

Fig. 79 zeigt eine weitere Ausführungsform einer Bodenwanne 3, wobei zur zusätzlichen Aussteifung und Stabilisierung der Bodenwanne 3 an der Unterseite, die dem Kraftfahrzeugdach 2 zugewandt ist, mehrere Aluminiumträger 156 zur Aussteifung angeordnet sind.

Alle Sensoren, die in und/oder an einer erfindungsgemäßen Dachhalterung, insbesondere in und/oder an einer Bodenwandvertiefung, angeordnet und/oder befestigt, insbesondere integriert sind, können per Software, insbesondere per Handy-Anwendung, einer sogenannten App, ausgelesen werden, Die Funktionen der App sind regelbar, insbesondere deren Status auslesbar.

Es ist denkbar, in der Bodenwand, insbesondere innerhalb des Dachbehälters, insbesondere in der Bodenwandvertiefung, einen Ersatzschlüssel für das Kraftfahrzeug zu hinterlegen. Eine derartige Ausführung ist insbesondere für car-sharing Konzepte geeignet. Der Ersatzschlüssel ist insbesondere in einer separat dafür vorgesehenen Fahrzeugschlüsselbox hinterlegt, wobei eine Vorrichtung in der Fahrzeugschlüsselbox auf den Ersatzschlüssel drückt. Die Hinterlegung des Ersatzschlüssels ermöglicht ein Öffnen und gegebenenfalls ein Starten des Kraftfahrzeugs per Fingerabdruck-Scanner. Besonders vorteilhaft ist es, in einer Steuerungseinheit eine sogenannte Moodscape-Funktion zu integrieren, die den Fahrgastinnenraum anhand eines Fahrerprofils individualisiert. Zur Individualisierung können Innenraumbeleuchtung, Musik, Erschöpfungszustand des Fahrers anhand biometrischer Analysen, GPS-Signal und/oder Kalendersynchronisation individualisiert werden.

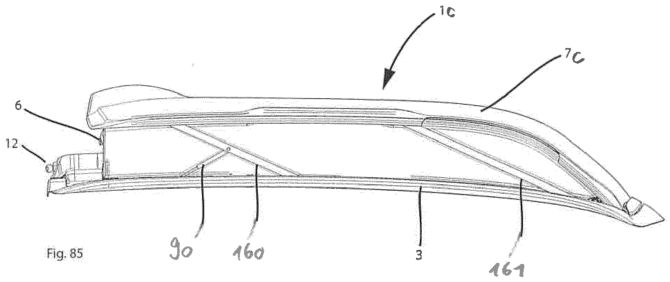

Fig. 85 zeigt ein weiteres Ausführungsbeispiel der Erfindung, die im Wesentlichen dem Ausführungsbeispiel in Fig. 35 bis 37 entspricht. Der Dachbehälter 1c weißt jeweils seitlich ein Kraftspeicherelemente 90 in Form einer Gasdruckfeder auf. Eine Aufschwenkbewegung wird durch einen ersten Schwenkhebel 160 und einen zweiten Schwenkhebel 162 verbessert.

Der erste Schwenkhebel ist schwenkbar um eine erste Schwenkachse an der Bodenwanne 3 und um eine zweite Schwenkachse mit der Deckelwand 7c verbunden. Das Kraftspeicherelement 90 ist mit einem ersten Ende schwenkbar an der Bodenwanne 3 und mit einem zweiten Ende schwenkbar an dem ersten Schwenkhebel 160 angelegt. Der Anlenkpunkt 162 des Kraftspeicherelements 90 ist an dem ersten Schwenkhebel zwischen den Anlenkpunten an der Bodenwanne bzw. der Deckelwand 7c angeordnet.

Der zweite Schwenkhebel 162 ist jeweils schwenkbar an der Bodenwanne 3 und der Deckelwand 7c schwenkbar angelenkt.

## Patentansprüche

1. Dachhalterung für ein Automobil (2) umfassend
a. eine Bodenwanne (3), die eine Bodenwand (13; 13b; 13e; 13f) aufweist,
b. eine integrierte Befestigungseinheit zum unmittelbaren lösbaren Befestigen der Bodenwand (13; 13b; 13e; 13f) am Automobil (2) derart, dass die Bodenwanne (3) an einer Dachreling (34) des Automobils (2) verrastbar ist,
**dadurch gekennzeichnet, dass**
c. an der Bodenwanne (3) eine Querstrebe (156) befestigt ist,
d. an der Querstrebe (156) ein Rasthebel (154a) angeordnet ist, der mit einem entlang der Querstrebe (156) verlagerbaren Klemmelement (152) derart mechanisch gekoppelt ist, dass durch Betätigung des Rasthebels (154a) das Klemmelement (152) in Richtung der Querstrebe (156) relativ verlagerbar ist.

2. Dachhalterung gemäß Anspruch 1, **gekennzeichnet durch** mindestens ein an der Bodenwand (13) befestigtes Halteelement zum Halten eines Gegenstands (79).

3. Dachhalterung gemäß einem der vorstehenden Ansprüche, **gekennzeichnet durch** ein mit der Bodenwand (13) verbindbares Deckelelement (7), das mit der Bodenwand (13) einen, insbesondere faltbaren, Dachbehälter (1) bildet.

4. Dachhalterung gemäß einem der vorstehenden Ansprüche, **dadurch gekennzeichnet, dass** die Befestigungseinheit mindestens ein Magnetelement (29) aufweist, das insbesondere in der Bodenwand (13; 13b; 13e; 13f) und/oder in der mindestens einen Seitenwand, insbesondere in einer Längswand (21; 21b), in einer Frontwand (19; 19b) und/oder einer Heckwand (20), integriert ist.

5. Dachhalterung gemäß Anspruch 4, **dadurch gekennzeichnet, dass** die Befestigungseinheit Formelemente (36; 41) aufweist, die an der Bodenwanne (3; 3a; 3b), insbesondere an Längswänden (21; 21b) angeordnet sind, wobei insbesondere die Formelemente (36; 41) in die Längswände (21; 21b) integriert sind, insbesondere jeweils als mit einem Neigungswinkel (n) gegenüber der Bodenwand (13; 13b) geneigt angeordnete Klemmlippe (36) ausgeführt sind und/oder eine eine Dachreling (34) zumindest anteilig oder vollständig umgreifende Profilgeometrie (41) aufweisen, und/oder wobei insbesondere mindestens ein Formelement (28) an der Bodenwand (13; 13b) integriert ausgeführt ist zum zumindest anteiligen Umgreifen eines am Dach (8) angeordneten Antennenkörpers (30).

6. Dachhalterung gemäß einem der vorstehenden Ansprüche, **dadurch gekennzeichnet, dass** die Bodenwand (13e; 13f) eine Bodenwandvertiefung (116) aufweist, die in einer korrespondierenden Ausnehmung (117) im Automobildach anordenbar ist.

7. Dachhalterung gemäß Anspruch 6, **dadurch gekennzeichnet, dass** zur Aufnahme von Kommunikations- und Multimedia-Funktionselementen, Funktionselementen zur Bereitstellung einer künstliche Intelligenz des Automobils und/oder Komfort-Funktionselementen dient.

8. Dachhalterung gemäß einem der vorstehenden Ansprüche, **dadurch gekennzeichnet, dass** die Befestigungseinheit ein Hakenelement (31) zum Einhaken in einem Spalt (32) der Karosserie des Automobils (2) aufweist und/oder die Befestigungseinheit ein Klemmelement (42), insbesondere ein Klemmband, zum Einklemmen in einen Spalt (43) der Karosserie des Automobils (2) aufweist.

9. Dachhalterung gemäß einem der vorstehenden Ansprüche, **dadurch gekennzeichnet, dass** die Befestigungseinheit mindestens einen Rasthebel (45) zum verrasteten Anliegen an der Dachreling (34) aufweist.

10. Dachhalterung gemäß einem der vorstehenden Ansprüche, **dadurch gekennzeichnet, dass** die Befestigungseinheit mindestens ein Saugnapfelement (82) zum Befestigen an dem Dach (8) des Automobils (2) mit Unterdruck aufweist.

11. Dachhalterung gemäß einem der vorstehenden Ansprüche, **gekennzeichnet durch** eine Schutzbefestigung (48; 48b) zum Schutz gegen unbeabsichtigtes Lösen der Dachhalterung (1; 1a; 1b), wobei die Schutzbefestigung (48; 48b) insbesondere nur im geöffneten Zustand des Dachbehälters (1; 1a; 1b) betätigbar ist, wobei die Schutzbefestigung (48; 48b) insbesondere innenliegend in der Dachhalterung (1; 1a; 1b) angeordnet ist.

12. Dachhalterung gemäß Anspruch 11, **dadurch gekennzeichnet, dass** die Schutzbefestigung (48b) mindestens ein seitlich verlagerbares Verriegelungselement (51, 52) aufweist.

13. Dachhalterung gemäß Anspruch 11 oder 12, **dadurch gekennzeichnet, dass** die Schutzbefestigung (48) mindestens ein Koppelelement (49) zum Koppeln an einer im Dach (8) integrierten Koppelstelle (50; 50a) aufweist.

14. Dachhalterung gemäß einem der vorstehenden Ansprüche, **gekennzeichnet durch** eine Schutzschicht an einer außenliegenden Unterseite der Bodenwanne (3; 3a; 3b).

15. Vorrichtung für ein Automobil umfassend eine Dachhalterung gemäß einem der vorstehenden Ansprüche und ein an der Dachhalterung befestigtes Funktionselement, insbesondere ein Feinpartikelfilter (111) zum Filtern von Feinpartikel aus der Luft.

## Claims

1. Roof support for an automobile (2) comprising
a. a base tray (3) having a base wall (13; 13b; 13e; 13f),
b. an integrated fastening unit for directly detachably fastening the base wall (13; 13b; 13e; 13f) to the automobile (2) in such a way that the base tray (3) can be latched to a roof rail (34) of the automobile (2),
**characterized in that**
c. a cross member (156) is attached to the base tray (3),
d. a latching lever (154a) is arranged on the cross member (156), which latching lever (154a) is mechanically coupled to a clamping element (152), which is displaceable along the cross member (156), in such a way that, by actuating the latching lever (154a), the clamping element (152) is relatively displaceable in the direction of the cross member (156).

2. Roof support according to claim 1, **characterized by** at least one holding element fixed to the base wall (13) for holding an object (79).

3. Roof support according to any one of the preceding claims, **characterized by** a lid element (7) which can be connected to the base wall (13) and which forms a roof container (1), in particular a folding roof container, with the base wall (13).

4. Roof support according to any one of the preceding claims, **characterized in that** the fastening unit has at least one magnetic element (29) which is integrated in particular in the base wall (13; 13b; 13e; 13f) and/or in the at least one side wall, in particular in a longitudinal wall (21; 21b), in a front wall (19; 19b) and/or a rear wall (20).

5. Roof support according to claim 4, **characterized in that** the fastening unit has shaped elements (36; 41) which are arranged on the base tray (3; 3a; 3b), in particular on longitudinal walls (21; 21b), wherein in particular the shaped elements (36; 41) are integrated into the longitudinal walls (21; 21b), in particular in each case as a clamping lip (36) arranged in an inclined manner at an angle of inclination (n) relative to the base wall (13; 13b) and/or have a profile geometry (41) which at least partially or completely engages around a roof rail (34), and/or wherein in particular at least one shaped element (28) is integrally formed on the base wall (13; 13b) for at least partially engaging around an antenna body (30) arranged on the roof (8).

6. Roof support according to any one of the preceding claims, **characterized in that** the base wall (13e; 13f) has a base wall deepening (116) which can be arranged in a corresponding recess (117) in the automobile roof.

7. Roof support according to claim 6, **characterized in that** it serves to accommodate communication and multimedia functional elements, functional elements for providing artificial intelligence of the automobile and/or comfort functional elements.

8. Roof support according to any one of the preceding claims, **characterized in that** the fastening unit comprises a hook element (31) for hooking into a gap (32) of the body of the automobile (2) and/or the fastening unit comprises a clamping element (42), in particular a clamping band, for clamping into a gap (43) of the body of the automobile (2).

9. Roof support according to any one of the preceding claims, **characterized in that** the fastening unit has at least one latching lever (45) for latched abutment against the roof rail (34).

10. Roof support according to any one of the preceding claims, **characterized in that** the fastening unit comprises at least one suction cup element (82) for attachment to the roof (8) of the automobile (2) with negative pressure.

11. Roof support according to any one of the preceding claims, **characterized by** a protective mount (48; 48b) for protection against unintentional loosening of the roof support (1; 1a; 1b), wherein the protective mount (48; 48b) can in particular only be actuated in the opened state of the roof container (1; 1a; 1b), wherein the protective mount (48; 48b) is in particular arranged on the inside of the roof support (1; 1a; 1b).

12. Roof support according to claim 11, **characterized in that** the protective mount (48b) comprises at least one laterally displaceable locking element (51, 52).

13. Roof support according to claim 11 or 12, **characterized in that** the protective mount (48) comprises at least one coupling element (49) for coupling to a coupling point (50; 50a) integrated in the roof (8).

14. Roof support according to any one of the preceding claims, **characterized by** a protective layer on an outer underside of the base tray (3; 3a; 3b).

15. Device for an automobile comprising a roof support according to any one of the preceding claims and a functional element attached to the roof support, in particular a fine particle filter (111) for filtering fine particles from the air.

## Revendications

1. Support de toit pour une automobile (2) comprenant
a. une cuve de fond (3) qui présente une paroi de fond (13 ; 13b ; 13e ; 13f),
b. une unité de fixation intégrée pour fixer directement de manière amovible la paroi de fond (13 ; 13b ; 13e ; 13f) sur l'automobile (2) de telle sorte que la cuve de fond (3) puisse être enclenchée sur un rail de toit (34) de l'automobile (2),
**caractérisé en ce qu'**
c. une entretoise (156) est fixée sur la cuve de fond (3),
d. sur l'entretoise (156) un levier d'encliquetage (154a) est disposé qui est couplé mécaniquement à un élément de serrage (152) déplaçable le long de l'entretoise (156) de telle sorte que, par actionnement du levier d'encliquetage (154a), l'élément de serrage (152) peut être déplacé relativement en direction de l'entretoise (156).

2. Support de toit selon la revendication 1, **caractérisé par** au moins un élément de retenue fixé sur la paroi de fond (13) pour retenir un objet (79).

3. Support de toit selon l'une quelconque des revendications précédentes, **caractérisé par** un élément de couvercle (7) pouvant être relié à la paroi de fond (13), qui forme avec la paroi de fond (13) un récipient de toit (1), en particulier pliable.

4. Support de toit selon l'une quelconque des revendications précédentes, **caractérisé en ce que** l'unité de fixation comprend au moins un élément magnétique (29) qui est intégré en particulier dans la paroi de fond (13 ; 13b ; 13e ; 13f) et/ou dans l'au moins une paroi latérale, en particulier dans une paroi longitudinale (21 ; 21b), dans une paroi avant (19 ; 19b) et/ou dans une paroi arrière (20).

5. Support de toit selon la revendication 4, **caractérisé en ce que** l'unité de fixation présente des éléments de forme (36 ; 41) qui sont disposés sur la cuve de fond (3 ; 3a ; 3b), en particulier sur des parois longitudinales (21 ; 21b), les éléments de forme (36 ; 41) étant en particulier intégrés dans les parois longitudinales (21 ; 21b), en particulier respectivement étant réalisés sous la forme d'une lèvre de serrage (36) disposée de manière inclinée avec un angle d'inclinaison (n) par rapport à la paroi de fond (13 ; 13b) et/ou présentant une géométrie de profil (41) entourant au moins partiellement ou complètement un rail de toit (34), et/ou au moins un élément de forme (28) étant notamment réalisé de manière intégrée sur la paroi de fond (13 ; 13b) pour entourer au moins partiellement un corps d'antenne (30) disposé sur le toit (8).

6. Support de toit selon l'une quelconque des revendications précédentes, **caractérisé en ce que** la paroi de fond (13e ; 13f) présente un renfoncement de paroi de fond (116) qui peut être disposé dans un évidement correspondant (117) dans le toit de l'automobile.

7. Support de toit selon la revendication 6, **caractérisé en ce qu'il** sert à recevoir des éléments fonctionnels de communication et multimédia, des éléments fonctionnels pour fournir une intelligence artificielle de l'automobile et/ou des éléments fonctionnels de confort.

8. Support de toit selon l'une quelconque des revendications précédentes, **caractérisé en ce que** l'unité de fixation comporte un élément de crochet (31) destiné à s'accrocher dans une fente (32) de la carrosserie de l'automobile (2) et/ou l'unité de fixation comporte un élément de serrage (42), en particulier une bande de serrage, destiné à être serré dans une fente (43) de la carrosserie de l'automobile (2).

9. Support de toit selon l'une quelconque des revendications précédentes, **caractérisé en ce que** l'unité de fixation présente au moins un levier d'encliquetage (45) pour l'application enclenchée sur le rail de toit (34).

10. Support de toit selon l'une quelconque des revendications précédentes, **caractérisé en ce que** l'unité de fixation comprend au moins un élément à ventouse (82) destiné à être fixé sur le toit (8) de l'automobile (2) par dépression.

11. Support de toit selon l'une quelconque des revendications précédentes, **caractérisé par** une fixation de protection (48 ; 48b) pour la protection contre un détachement involontaire du support de toit (1 ; 1a ; 1b), la fixation de protection (48 ; 48b) ne pouvant en particulier être actionnée qu'à l'état ouvert du récipient de toit (1 ; 1a ; 1b), la fixation de protection (48 ; 48b) étant en particulier disposée à l'intérieur du support de toit (1 ; 1a ; 1b).

12. Support de toit selon la revendication 11, **caractérisé en ce que** la fixation de protection (48b) présente au moins un élément de verrouillage (51, 52) pouvant être déplacé latéralement.

13. Support de toit selon la revendication 11 ou 12, **caractérisé en ce que** la fixation de protection (48) comprend au moins un élément d'accouplement (49) pour l'accouplement à un point d'accouplement (50 ; 50a) intégré dans le toit (8).

14. Support de toit selon l'une quelconque des revendications précédentes, **caractérisé par** une couche de protection sur une face inférieure extérieure de la cuve de fond (3 ; 3a ; 3b).

15. Dispositif pour une automobile comprenant un support de toit selon l'une quelconque des revendications précédentes et un élément fonctionnel fixé sur le support de toit, en particulier un filtre à particules fines (111) pour filtrer les particules fines de l'air.
